# EUROPEAN PATENT SPECIFICATION

(11) **EP 4 193 648 B1**
(45) Date of publication and mention of the grant of the patent: **29.11.2023**
(21) Application number: 21739182.0
(22) Date of filing: 28.06.2021
(51) Int. Cl.: H04W 24/10, H04W 36/22, H04W 28/12

(54) **INTER-SYSTEM RESOURCE REPORTING**
INTER-SYSTEM RESSOURCENMELDUNG
COMPTE-RENDU DE RESOURCES INTER-SYSTÈME

(30) Priority: 05.08.2020 US 202063061573 P
(43) Date of publication of application: 14.06.2023
(73) Proprietor: Telefonaktiebolaget LM Ericsson (publ), 164 83 Stockholm (SE)
(72) Inventor: CENTONZA, Angelo, 18720 Torrenueva Costa (ES); SOLDATI, Pablo, 170 73 Solna (SE)
(74) Representative: Ericsson
(86) International application number: PCT/SE2021/050637
(87) International publication number: WO 2022/031198

(56) References cited:
- "3 Generation Partnership Project; Technical Specification Group Radio Access Network; NG-RAN; Xn application protocol (XnAP) (Release 16)", 3GPP STANDARD; TECHNICAL SPECIFICATION; 3GPP TS 38.423, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. V16.2.0 17 July 2020 (2020-07-17), pages 1-447, XP051925473, Retrieved from the Internet: URL:ftp://ftp.3gpp.org/Specs/archive/38_se ries/38.423/38423-g20.zip 38423-g20.doc [retrieved on 2020-07-17]
- CMCC: "Text proposal for load balancing", 3GPP DRAFT; R3-192540_TEXT PROPOSALS FOR LOAD BALANCING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Reno, NV, USA; 20190513 - 20190517 13 May 2019 (2019-05-13), XP051731820, Retrieved from the Internet: URL:http://www.3gpp.org/ftp/Meetings%5F3GP P%5FSYNC/RAN3/Docs/R3%2D192540%2Ezip [retrieved on 2019-05-13]
- HUAWEI: "Load exchange in EN-DC", 3GPP DRAFT; R3-192967, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Reno, Nevada, US; 20190513 - 20190517 13 May 2019 (2019-05-13), XP051732232, Retrieved from the Internet: URL:http://www.3gpp.org/ftp/Meetings%5F3GP P%5FSYNC/RAN3/Docs/R3%2D192967%2Ezip [retrieved on 2019-05-13]
- SAMSUNG: "Discussion for MLB impacts", 3GPP DRAFT; R3-194021, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Ljubljana, SL; 20190826 - 20190830 16 August 2019 (2019-08-16), XP051770219, Retrieved from the Internet: URL:http://www.3gpp.org/ftp/tsg_ran/WG3_Iu /TSGR3_105/Docs/R3-194021.zip [retrieved on 2019-08-16]
- HUAWEI ET AL: "(TP for SON BL CR for TS 38.300): MLB", 3GPP DRAFT; R3-195427 MLB TP38.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Chongqing, China; 20191014 - 20191018 4 October 2019 (2019-10-04), XP051809808, Retrieved from the Internet: URL:https://ftp.3gpp.org/tsg_ran/WG3_Iu/TS GR3_105bis/Docs/R3-195427.zip R3-195427 MLB TP38.300.docx [retrieved on 2019-10-04]

## Description

### TECHNICAL FIELD

The present application relates generally to the field of wireless communications, and more specifically to devices, methods, and computer-readable media that facilitate, enable, and/or improve mobility load balancing (MLB) between RAN nodes that are in different systems (e.g., associated with different core networks) of a wireless network.

### BACKGROUND

Long-Term Evolution (LTE) is an umbrella term for so-called fourth-generation (4G) radio access technologies developed within the Third-Generation Partnership Project (3GPP) and initially standardized in Release 8 (Rel-8) and Release 9 (Rel-9), also known as Evolved UTRAN (E-UTRAN). LTE is targeted at various licensed frequency bands and is accompanied by improvements to non-radio aspects commonly referred to as System Architecture Evolution (SAE), which includes Evolved Packet Core (EPC) network. LTE continues to evolve through subsequent releases.

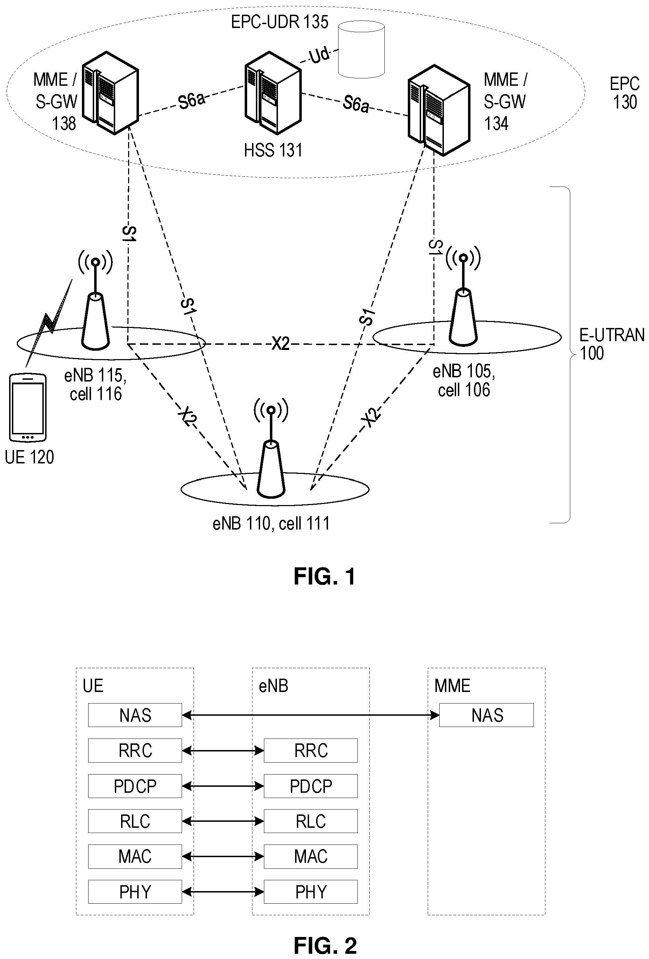

An overall exemplary architecture of a network comprising LTE and SAE is shown in Figure 1. E-UTRAN 100 includes one or more evolved Node B's (eNB), such as eNBs 105, 110, and 115, and one or more user equipment (UE), such as UE 120. As used within the 3GPP standards, "user equipment" or "UE" means any wireless communication device (e.g., smartphone or computing device) that is capable of communicating with 3GPP-standard-compliant network equipment, including E-UTRAN as well as UTRAN and/or GERAN, as the third-generation ("3G") and second-generation ("2G") 3GPP RANs are commonly known.

As specified by 3GPP, E-UTRAN 100 is responsible for all radio-related functions in the network, including radio bearer control, radio admission control, radio mobility control, scheduling, and dynamic allocation of resources to UEs in uplink and downlink, as well as security of the communications with the UE. These functions reside in the eNBs, such as eNBs 105, 110, and 115. Each of the eNBs can serve a geographic coverage area including one more cells, including cells 106, 111, and 115 served by eNBs 105, 110, and 115, respectively.

The eNBs in the E-UTRAN communicate with each other via the X2 interface, as shown in Figure 1. The eNBs also are responsible for the E-UTRAN interface to the EPC 130, specifically the S1 interface to the Mobility Management Entity (MME) and the Serving Gateway (SGW), shown collectively as MME/S-GWs 134 and 138 in Figure 1. In general, the MME/S-GW handles both the overall control of the UE and data flow between the UE and the rest of the EPC. More specifically, the MME processes the signaling (e.g., control plane) protocols between the UE and the EPC, which are known as the Non-Access Stratum (NAS) protocols. The S-GW handles all Internet Protocol (IP) data packets (e.g., data or user plane) between the UE and the EPC and serves as the local mobility anchor for the data bearers when the UE moves between eNBs, such as eNBs 105, 110, and 115.

EPC 130 can also include a Home Subscriber Server (HSS) 131, which manages user- and subscriber-related information. HSS 131 can also provide support functions in mobility management, call and session setup, user authentication and access authorization. The functions of HSS 131 can be related to the functions of legacy Home Location Register (HLR) and Authentication Centre (AuC) functions or operations. HSS 131 can also communicate with MMEs 134 and 138 via respective S6a interfaces.

In some embodiments, HSS 131 can communicate with a user data repository (UDR) - labelled EPC-UDR 135 in Figure 1 - via a Ud interface. EPC-UDR 135 can store user credentials after they have been encrypted by AuC algorithms. These algorithms are not standardized (i.e., vendor-specific), such that encrypted credentials stored in EPC-UDR 135 are inaccessible by any other vendor than the vendor of HSS 131.

Figure 2 is a block diagram of an exemplary control plane (CP) protocol stack between a user equipment (UE), an eNB, and an MME. The exemplary protocol stack includes Physical (PHY), Medium Access Control (MAC), Radio Link Control (RLC), Packet Data Convergence Protocol (PDCP), and Radio Resource Control (RRC) layers between the UE and eNB. The PHY layer is concerned with how and what characteristics are used to transfer data over transport channels on the LTE radio interface. The MAC layer provides data transfer services on logical channels, maps logical channels to PHY transport channels, and reallocates PHY resources to support these services. The RLC layer provides error detection and/or correction, concatenation, segmentation, and reassembly, reordering of data transferred to or from the upper layers. The PDCP layer provides ciphering/deciphering and integrity protection for both CP and user plane (UP), as well as other UP functions such as header compression. The exemplary protocol stack also includes non-access stratum (NAS) signaling between the UE and the MME.

The RRC layer controls communications between a UE and an eNB at the radio interface, as well as the mobility of a UE between cells in the E-UTRAN. After a UE is powered ON it will be in the RRC _IDLE state until an RRC connection is established with the network, at which time the UE will transition to RRC_CONNECTED state (e.g., where data transfer can occur). The UE returns to RRC_IDLE after the connection with the network is released. In RRC_IDLE state, the UE does not belong to any cell, no RRC context has been established for the UE (e.g., in E-UTRAN), and the UE is out of UL synchronization with the network. Even so, a UE in RRC_IDLE state is known in the EPC and has an assigned IP address.

Furthermore, in RRC_IDLE state, the UE's radio is active on a discontinuous reception (DRX) schedule configured by upper layers. During DRX active periods (also referred to as "DRX On durations"), an RRC_IDLE UE receives system information (SI) broadcast by a serving cell, performs measurements of neighbor cells to support cell reselection, and monitors a paging channel for pages from the EPC via an eNB serving the cell in which the UE is camping.

A UE must perform a random-access (RA) procedure to move from RRC_IDLE to RRC _CONNECTED state. In RRC_CONNECTED state, the cell serving the UE is known and an RRC context is established for the UE in the serving eNB, such that the UE and eNB can communicate. For example, a Cell Radio Network Temporary Identifier (C-RNTI) - a UE identity used for signaling between UE and network - is configured for a UE in RRC_CONNECTED state.

Logical channel communications between a UE and an eNB are via radio bearers. Signaling radio bearers (SRBs) SRB0, SRB 1, and SRB2 are used for transport of RRC and NAS messages. For example, SRB0 is used for RRC connection setup, RRC connection resume, and RRC connection re-establishment. Once any of these operations has succeeded, SRB 1 is used for handling RRC messages (including piggybacked NAS messages) and for NAS messages prior to SRB2 establishment. SRB2 is used for NAS messages and lower-priority RRC messages (e.g., logged measurement information). SRB0 and SRB 1 are also used to establish and modify data radio bearers (DRBs) that carry user data between UE and eNB.

3GPP Rel-10 supports bandwidths larger than 20 MHz. One important Rel-10 requirement is backward compatibility with Rel-8. As such, a wideband LTE Rel-10 carrier *(e.g.,* >20 MHz) should appear as a plurality of carriers ("component carriers" or CCs) to a Rel-8 ("legacy") terminal. Legacy terminals can be scheduled in all parts of the wideband Rel-10 carrier. One way to achieve this is by Carrier Aggregation (CA), whereby a Rel-10 terminal can receive multiple CCs, each preferably having the same structure as a Rel-8 carrier.

Dual connectivity (DC) was introduced in LTE Rel-12. In DC operation, a UE in RRC _CONNECTED state consumes radio resources provided by at least two different network points connected to one another with a non-ideal backhaul. In LTE, these two network points may be referred to as a "Master eNB" (MeNB) and a "Secondary eNB" (SeNB). More generally, the terms master node (MN), anchor node, and MeNB can be used interchangeably, while the terms secondary node (SN), booster node, and SeNB can also be used interchangeably. DC can be viewed as a special case of CA, in which the aggregated carriers (or cells) are provided by network nodes that are physically separated and not connected via a robust, high-capacity connection.

Currently the fifth generation ("5G") of cellular systems, also referred to as New Radio (NR), is being standardized within the Third-Generation Partnership Project (3GPP). NR is developed for maximum flexibility to support a variety of different use cases. These include enhanced mobile broadband (eMBB), machine type communications (MTC), ultra-reliable low latency communications (URLLC), side-link device-to-device (D2D), and several other use cases. 5G/NR technology shares many similarities with fourth-generation LTE. For example, both PHYs utilize similar arrangements of time-domain physical resources into 1-ms subframes that include multiple slots of equal duration, with each slot including multiple OFDM-based symbols. As another example, NR RRC layer includes RRC_IDLE and RRC_CONNECTED states, but adds another state known as RRC_INACTIVE. In addition to providing coverage via "cells," as in LTE, NR networks also provide coverage via "beams." In general, a DL "beam" is a coverage area of a network-transmitted RS that may be measured or monitored by a UE.

DC is also envisioned as an important feature for 5G/NR networks. Several DC (or more generally, multi-connectivity) scenarios have been considered for NR. These include NR-DC that is similar to LTE-DC discussed above, except that both the MN and SN (referred to as "gNBs") employ the NR interface to communicate with the UE. In addition, various multi-RAT DC (MR-DC) scenarios have been considered, whereby a UE can be configured to uses resources provided by two different nodes, one providing E-UTRA/LTE access and the other one providing NR access. One node acts as the MN providing the UE's master cell group (MCG) including the primary cell (PCell) and the other as the SN providing the UE's secondary cell group (SCG) including the primary SCG cell (PSCell). The MN and SN are connected via a network interface and at least the MN is connected to a core network (e.g., EPC or 5GC).

A common mobility procedure for UEs in RRC_CONNECTED state (i.e., with an active connection) is handover (HO) between cells. A UE is handed over from a source or serving cell provided by a source node to a target cell provided by a target node. In general, for LTE (or NR), HO source and target nodes are different eNBs (or gNBs), although intra-node HO between different cells provided by a single eNB (or gNB) is also possible. Seamless handovers are a key feature of 3GPP technologies. Successful handovers ensure that the UE moves around in the coverage area of different cells without causing too many interruptions in the data transmission.

There are other DC-related mobility procedures. The MN can initiate an SN Addition procedure to establish a UE context at the SN such that the SN can provide resources to the UE. Also, the MN or SN can initiate an SN modification procedure to perform configuration changes of the SCG provided the SN ("intra-SN"), e.g., modification/ release of UP resource configuration and PSCell changes. For PSCell changes, once a better cell in the same frequency as the UE's current PSCell triggers an event, a UE measurement report and preparation of the target SN is needed before sending the UE an *RRCReconfiguration* message to execute addition/modification.

To support mobility (e.g., handover or reselection) between cells and/or beams, a UE can perform periodic cell search and measurements of signal power (e.g., reference signal received power, RSRP), signal quality (e.g., reference signal received quality, RSRQ), and/or signal-to-interference-plus-noise ratio (SINR). Different measurements can be performed in different RRC states. In general, a UE is responsible for detecting new neighbor cells, and for tracking and monitoring already detected cells. A UE can perform such measurements on various downlink reference signals (RS) available in LTE or NR networks. These include cell-specific Reference Signal (CRS); demodulation RS (DM-RS) associated with PDSCH or PDCCH; Positioning RS (PRS), channel state information RS (CSI-RS); and synchronization signal/PBCH block (SSB).

Detected cells and measurement values associated with monitored and/or detected cells are reported to the network. Reports to the network can be configured to be periodic or aperiodic based a particular event. Such reports are commonly referred to as mobility measurement reports and contain CSI. These reports can be used to make decisions on UE mobility (e.g., handover) and/or dynamic activation or deactivation of SCells in a UE's CA configuration. In mobile networks, the load of each RAN node (e.g., eNB or gNB) is frequently measured. Load reporting involves exchanging cell-specific load information between neighbor RAN nodes over the X2 (or Xn) interface for intra-RAT or over the S1 (or NG) interface for inter-RAT. When the measured load in a particular cell exceeds a pre-configured threshold, this can trigger procedures to transfer part of that cell's load to a neighbor cell using the same or different radio access technology (RAT) and/or frequency as the overloaded cell. A mobility load balancing (MLB) algorithm running at a RAN node must decide which UEs will be handed over and to which neighbor cells. These decisions are typically made based on load reports received from neighbor RAN nodes and measurement reports received from UE handover candidates. In some cases, MLB may be needed between RAN nodes that use different RATs (e.g., LTE and NR) and are connected to difference core networks (CNs). This is often called inter-system load balancing, and requires signaling between two different RANs (e.g., E-UTRAN and NG-RAN) and two different CNs (e.g., EPC and 5GC) to convey cell- or beam-specific information. This information can include load and/or capacity status for particulars cells and/or coverage areas of particular DL RS beams. However, such signaling for inter-system load balancing can be burdensome on the various CN and RAN resources involved.

Prior art are disclosed in: 3 Generation Partnership Project; Technical Specification Group Radio Access Network; NG-RAN; Xn application protocol (XnAP) (Release 16) XP051925473 • 2020-07-17, and Discussion for MLB impacts XP051770219 • 2019-08-16 R3-194021. The document Load exchange in EN-DC XP051732232 • 2019-05-13 • R3-192967, further discloses prior art and also Text proposal for load balancing XP051731820 • 2019-05-13 R3-192540 discloses prior art. Furthermore, prio art is disclosed in TP for SON BL CR for TS38.300: MLB 3GPP draft R3-195427 4 October 2019 XP051809808.

### SUMMARY

Accordingly, embodiments of the present disclosure can provide specific improvements to inter-system load balancing operations in wireless networks, such by addressing various exemplary problems summarized above and described in more detail below.

Some embodiments include methods (e.g., procedures) for inter-system mobility load balancing (MLB) with a second RAN node in a second RAN. These exemplary methods can be

performed by a first RAN node (e.g., base station, eNB, gNB, ng-eNB, en-gNB, etc. or component thereof, such as a gNB-CU or gNB-DU) in a first RAN (i.e., a different RAN than the second RAN).

These exemplary methods can include sending, to the second RAN node, a resource status request message that includes a reporting configuration comprising a reporting format that defines how one or more respective metrics to be measured should be reported to the first RAN node upon corresponding triggering events. The reporting configuration can include one or more of the following:
- one or more metrics, related to load and/or capacity of the second RAN node, to be measured by the second RAN node,
- one or more triggering events for initiating reporting, to the first RAN node, of the metrics measured by the second RAN node.

These exemplary methods can also include receiving one of the following from the second RAN node in response to the resource status request message: a resource status response message indicating successful configuration of at least a portion of the reporting configuration, or a resource status failure message indicating unsuccessful configuration for all of the reporting configuration.

In some embodiments, these exemplary methods can also include, after receiving the resource status response message, receiving, from the second RAN node, one or more resource status update messages comprising one or more metrics for which triggering events were fulfilled, in accordance with the corresponding reporting formats. In some of these embodiments, the reporting configuration can include a plurality of metrics. In some cases, each resource status update message indicates that one of the metrics fulfilled the corresponding triggering event. In some cases, each resource status update message can also include values for metrics that did not fulfil their corresponding triggering events. Combination of these cases is also possible.

In some embodiments, these exemplary methods can also include sending, to the second RAN node, a resource status acknowledge message in response to one or more of the following: the resource status response message; the resource status failure message; and the resource status update message.

In some embodiments, each of the one or more metrics is related to one of the following:
- radio resource status;
- composite available capacity;
- available capacity for a network slice;
- available capacity for a transport network layer (TNL);
- TNL load;
- hardware capacity;
- number of active user equipment (UEs); and
- number of UEs in RRC _CONNECTED state.

In some of these embodiments, each of the one or more metrics is also related to one or more of the following:
- a particular cell served by the second RAN node;
- a particular beam coverage area or other type of cell partition;
- uplink or downlink direction;
- a particular frequency bandwidth;
- a particular type of traffic;
- a particular network interface;
- a particular network slice; and
- a particular hardware unit of the second RAN node.

In some embodiments, each triggering event can be specified in relation to its corresponding metric based on one or more of the following:
- an explicit event upon which reporting of the corresponding metric is initiated;
- a threshold amount associated with the metric, above or below which reporting is initiated;
- a first threshold period that the metric must be above or below the associated threshold amount before reporting is initiated;
- a threshold rate of change of the metric, above which reporting is initiated; and
- a second threshold period that the rate of change of the metric must be above the threshold rate of change, before reporting is initiated.

In some embodiments, for each metric, the reporting format can indicate that the second RAN node should transmit one of the following:
- a single report upon occurrence of the corresponding triggering event;
- a single report upon continued occurrence of the corresponding triggering event for at least a threshold period;
- periodic reports upon occurrence of the corresponding triggering event; and
- periodic reports upon continued occurrence of the corresponding triggering event for at least a threshold period.

In some of these embodiments, a first metric can be associated with first and second triggering events. In such embodiments, occurrence of the first triggering event initiates a single report of the first metric and occurrence of the second triggering event initiates periodic reports of the first metric. In some of these embodiments, the reporting format can also include respective reporting periods for all configured periodic reports. For example, resource status update messages can be received periodically according to the reporting period associated with the metric(s) being reported.

In some embodiments, the first RAN (including the first RAN node) is one of an E-UTRAN and an NG-RAN and the second RAN (including the second RAN node) is the other of the E-UTRAN and the NG-RAN.

In some embodiments, the resource status response message includes at least one of the following:
- a first indication of the portion of the reporting configuration that the second RAN node can support;
- a second indication of a further reporting configuration to be used by the second RAN node, including at least the portion of the reporting configuration; and
- one or more of the following supported by the second RAN node:
   ∘ one or more further metrics or measurements related to load and/or capacity of the second RAN node,
   ∘ one or more further triggering events for initiating reporting of the one or more metrics and/or the one or more further metrics, and
   ∘ one or more further reporting formats for the one or more metrics and/or the one or more further metrics.

In some embodiments, the resource status failure message includes at least one of the following:
- an indication of a cause for the unsuccessful configuration; and
- one or more of the following supported by the second RAN node:
   ∘ one or more further metrics or measurements related to load and/or capacity of the second RAN node,
   ∘ one or more further triggering events for initiating reporting of the one or more metrics and/or the one or more further metrics, and
   ∘ one or more further reporting formats for the one or more metrics and/or the one or more further metrics.

In some embodiments, the resource status request message is sent in a first message container to a first core network (CN) node coupled to the first RAN. The first message container includes an explicit indication that the first message container includes the resource status request message. Additionally, the resource status response message or the resource status failure message is received in a second message container from the first CN node.

Other embodiments include methods (e.g., procedures) for inter-system mobility load balancing (MLB) with a first RAN node in a first RAN. These exemplary methods can be performed by a second RAN node (e.g., base station, eNB, gNB, ng-eNB, en-gNB, etc. or component thereof, such as a gNB-CU or gNB-DU) in a second RAN.

These exemplary methods can include receiving, from the first RAN node, a resource status request message that includes a reporting configuration comprising a reporting format that defines how one or more respective metrics to be measured should be reported to the first RAN node upon corresponding triggering events. The reporting configuration can include one or more of the following:
- one or more metrics, related to load and/or capacity of the second RAN node, to be measured by the second RAN node,
- one or more triggering events for initiating reporting, to the first RAN node, of the metrics measured by the second RAN node.

These exemplary methods can also include determining whether the second RAN node can support the reporting configuration. These exemplary methods can also include sending, to the first RAN node, one the following: a resource status response message based on determining that the second RAN node can support least a portion of the reporting configuration, a resource status failure message based on determining that the second RAN node cannot support any of the reporting configuration.

In some embodiments, these exemplary methods can also include determining that triggering events were fulfilled for one or more of the metrics and sending, to the first RAN node, one or more resource status update messages comprising the one or more metrics for which triggering events were fulfilled, in accordance with the corresponding reporting formats. In some of these embodiments, the reporting configuration can include a plurality of metrics. In some cases, each resource status update message indicates that one of the metrics fulfilled the corresponding triggering event. In some cases, each resource status update message can also include values for metrics that did not fulfil their corresponding triggering events.

In some embodiments, these exemplary methods can also include receiving, from the first RAN node, a resource status acknowledge message in response to one or more of the following: the resource status response message; the resource status failure message; and the resource status update message.

In various embodiments, the one or more metrics can have any of the characteristics summarized above in relation to first RAN node embodiments. Likewise, in various embodiments, each triggering event can have any of the characteristics summarized above in relation to first RAN node embodiments. In addition, in various embodiments, the reporting format can have any of the characteristics summarized above in relation to first RAN node embodiments.

In some of these embodiments, a first metric can be associated with first and second triggering events. In such embodiments, occurrence of the first triggering event initiates a single report of the first metric and occurrence of the second triggering event initiates periodic reports of the first metric. In some of these embodiments, the reporting format an also include respective reporting periods for all configured periodic reports. For example, resource status update messages can be sent periodically according to the reporting period associated with the metric(s) being reported.

In some embodiments, the first RAN (including the first RAN node) is one of an E-UTRAN and an NG-RAN and the second RAN (including the second RAN node) is the other of the E-UTRAN and the NG-RAN.

In various embodiments, the resource status response message can have any of the characteristics summarized above in relation to the first RAN node embodiments. In various embodiments, the resource status failure message can have any of the characteristics summarized above in relation to the first RAN node embodiments.

In some embodiments, the resource status request message is received in a first message container from a second CN node coupled to the second RAN. The first message container includes an explicit indication that the first message container includes the resource status request message. Additionally, the resource status response message or the resource status failure message is sent in a second message container to the second CN node.

More generally, operations performed by second RAN node can be complementary to operations performed by the first RAN node, and vice versa.

Other embodiments include first and second RAN nodes (e.g., base stations, eNBs, gNBs, ng-eNBs, en-gNBs, etc. or components thereof, such as gNB-CUs and/or gNB-DUs) configured to perform operations corresponding to any of the exemplary methods described herein. Other embodiments include non-transitory, computer-readable media storing computer-executable instructions that, when executed by processing circuitry, configure a first RAN node or a second RAN node to perform operations corresponding to any of the exemplary methods described herein.

These and other embodiments provide effective and processing-efficient techniques for signaling load and capacity metrics across different systems. For example, embodiments can reduce signaling load in core networks, thereby freeing up signaling, processing, and energy capacity for other important tasks. Additionally, embodiments can reduce long signaling delays experience by conventional techniques, thereby increasing the effectiveness and/or usefulness of periodic measurements of load/capacity metrics used in and/or related to inter-system MLB.

These and other objects, features, benefits, and/or advantages of embodiments of the present disclosure will become apparent upon reading the following Detailed Description in view of the Drawings briefly described below.

### BRIEF DESCRIPTION OF THE DRAWINGS

Figure 1 is a high-level block diagram of an exemplary architecture of the Long-Term Evolution (LTE) Evolved UTRAN (E-UTRAN) and Evolved Packet Core (EPC) network.
Figure 2 is a block diagram of an exemplary control plane (CP) protocol stack between a user equipment (UE), an eNB in the E-UTRAN, and an MME in the EPC.
Figures 3-4 show two high-level view of an exemplary 5G/NR network architecture.
Figure 5 shows an exemplary variation of cell load vs. time, with an exemplary predefined load threshold.
Figure 6 illustrates an exemplary LTE mobility load balancing (MLB) scenario involving three (3) eNBs.
Figure 7 shows an exemplary LTE Mobility Setting Change procedure.
Figure 8 shows an exemplary configuration of a UE measurement model for NR. This figure is used for illustration purposes.
Figure 9 illustrates an exemplary arrangement where an NR cell includes 65 different downlink beams associated with SSB indices 0-64 respectively. This figure is used for illustration purposes.
Figure 10 shows an exemplary handover scenario of an NR UE from a beam of a source cell to a beam of a target cell. This figure is used for illustration purposes.
Figure 11, which includes Figures 11A-C, illustrates various exemplary procedures for resource reporting between NG-RAN nodes.
Figures 12A-C illustrate various exemplary procedures for inter-system resource reporting, according to various exemplary embodiments of the present disclosure.
Figure 13 shows a signal flow diagram for inter-system resource reporting for MLB, according to various exemplary embodiments of the present disclosure.
Figure 14 illustrates an exemplary method (e.g., procedure) for a first RAN node in a first system, according to various exemplary embodiments of the present disclosure.
Figure 15 illustrates an exemplary method (e.g., procedure) for a second RAN node in a second system, according to various exemplary embodiments of the present disclosure.
Figure 16 illustrates an exemplary embodiment of a wireless network, in accordance with various aspects described herein.
Figure 17 illustrates an exemplary embodiment of a UE, in accordance with various aspects described herein.
Figure 18 is a block diagram illustrating an exemplary virtualization environment usable for implementation of various embodiments of network nodes described herein.
Figures 19-20 are block diagrams of various exemplary communication systems and/or networks, according to various exemplary embodiments of the present disclosure.
Figures 21-24 are flow diagrams of exemplary methods for transmission and/or reception of user data, according to various exemplary embodiments of the present disclosure.

### DETAILED DESCRIPTION

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

Generally, all terms used herein are to be interpreted according to their ordinary meaning in the relevant technical field, unless a different meaning is clearly given and/or is implied from the context in which it is used. All references to a/an/the element, apparatus, component, means, step, *etc.* are to be interpreted openly as referring to at least one instance of the element, apparatus, component, means, step, *etc.*, unless explicitly stated otherwise. The steps of any methods and/or procedures disclosed herein do not have to be performed in the exact order disclosed, unless a step is explicitly described as following or preceding another step and/or where it is implicit that a step must follow or precede another step. Any feature of any of the embodiments disclosed herein can be applied to any other embodiment, wherever appropriate. Likewise, any advantage of any of the embodiments can apply to any other embodiments, and vice versa. Other objectives, features and advantages of the enclosed embodiments will be apparent from the following description. Furthermore, the following terms are used throughout the description given below:
- Radio Node: As used herein, a "radio node" can be either a "radio access node" or a "wireless device."
- Radio Access Node: As used herein, a "radio access node" (or equivalently "radio network node," "radio access network node," or "RAN node") can be any node in a radio access network (RAN) of a cellular communications network that operates to wirelessly transmit and/or receive signals. Some examples of a radio access node include, but are not limited to, a base station *(e.g.,* a New Radio (NR) base station (gNB) in a 3GPP Fifth Generation (5G) NR network or an enhanced or evolved Node B (eNB) in a 3GPP LTE network), base station distributed components (*e.g.*, CU and DU), a high-power or macro base station, a low-power base station (*e.g.*, micro, pico, femto, or home base station, or the like), an integrated access backhaul (IAB) node, a transmission point, a remote radio unit (RRU or RRH), and a relay node.

- Core Network Node: As used herein, a "core network node" is any type of node in a core network. Some examples of a core network node include, *e.g.,* a Mobility Management Entity (MME), a serving gateway (SGW), a Packet Data Network Gateway (P-GW), an access and mobility management function (AMF), a session management function (AMF), a user plane function (UPF), a Service Capability Exposure Function (SCEF), or the like.
- Wireless Device: As used herein, a "wireless device" (or "WD" for short) is any type of device that has access to (*i.e.*, is served by) a cellular communications network by communicate wirelessly with network nodes and/or other wireless devices. Communicating wirelessly can involve transmitting and/or receiving wireless signals using electromagnetic waves, radio waves, infrared waves, and/or other types of signals suitable for conveying information through air. Some examples of a wireless device include, but are not limited to, smart phones, mobile phones, cell phones, voice over IP (VoIP) phones, wireless local loop phones, desktop computers, personal digital assistants (PDAs), wireless cameras, gaming consoles or devices, music storage devices, playback appliances, wearable devices, wireless endpoints, mobile stations, tablets, laptops, laptop-embedded equipment (LEE), laptop-mounted equipment (LME), smart devices, wireless customer-premise equipment (CPE), mobile-type communication (MTC) devices, Internet-of-Things (IoT) devices, vehicle-mounted wireless terminal devices, *etc.* Unless otherwise noted, the term "wireless device" is used interchangeably herein with the term "user equipment" (or "UE" for short).
- Network Node: As used herein, a "network node" is any node that is either part of the radio access network (*e.g.*, a radio access node or equivalent name discussed above) or of the core network (*e.g.*, a core network node discussed above) of a cellular communications network. Functionally, a network node is equipment capable, configured, arranged, and/or operable to communicate directly or indirectly with a wireless device and/or with other network nodes or equipment in the cellular communications network, to enable and/or provide wireless access to the wireless device, and/or to perform other functions (e.g., administration) in the cellular communications network.

Note that the description herein focuses on a 3GPP cellular communications system and, as such, 3GPP terminology or terminology similar to 3GPP terminology is oftentimes used. However, the concepts disclosed herein are not limited to a 3GPP system. Furthermore, although the term "cell" is used herein, it should be understood that (particularly with respect to 5G NR) beams may be used instead of cells and, as such, concepts described herein apply equally to both cells and beams.

As discussed above, inter-system load balancing requires signaling between two different RANs (e.g., E-UTRAN and NG-RAN) and two different CNs to convey cell- or beam-specific information. This can include load and/or capacity status for particular cells and/or coverage areas of particular DL RS beams. However, such signaling for inter-system load balancing can be burdensome on the various CN and RAN resources involved. These aspects are discussed in more detail after the following discussion of 5G/NR network architecture.

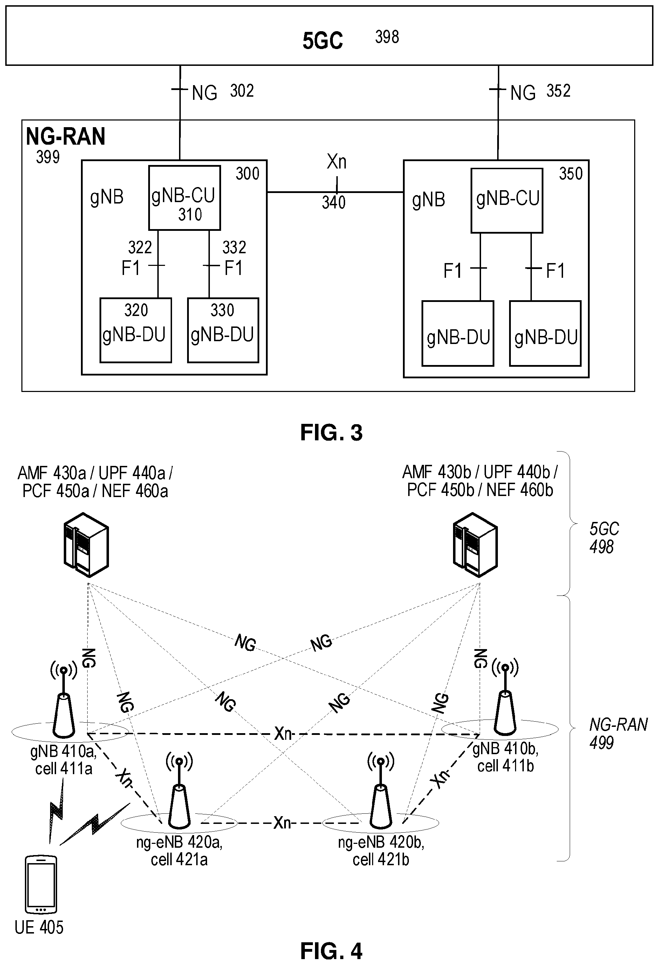

Figure 3 illustrates a high-level view of the 5G network architecture, consisting of a Next Generation RAN (NG-RAN) 399 and a 5G Core (5GC) 398. NG-RAN 399 can include a set of gNodeB's (gNBs) connected to the 5GC via one or more NG interfaces, such as gNBs 300, 350 connected via interfaces 302, 352, respectively. In addition, the gNBs can be connected to each other via one or more Xn interfaces, such as Xn interface 340 between gNBs 300 and 350. With respect the NR interface to UEs, each of the gNBs can support frequency division duplexing (FDD), time division duplexing (TDD), or a combination thereof.

NG-RAN 399 is layered into a Radio Network Layer (RNL) and a Transport Network Layer (TNL). The NG-RAN architecture, i.e., the NG-RAN logical nodes and interfaces between them, is defined as part of the RNL. For each NG-RAN interface (NG, Xn, F1) the related TNL protocol and the functionality are specified. The TNL provides services for user plane transport and signaling transport. In some exemplary configurations, each gNB is connected to all 5GC nodes within an "AMF Region," which is defined in 3GPP TS 23.501 (v16.4.0).

The NG RAN logical nodes shown in Figure 3 include a central (or centralized) unit (CU or gNB-CU) and one or more distributed (or decentralized) units (DU or gNB-DU). For example, gNB 300 includes gNB-CU 310 and gNB-DUs 320 and 330. CUs *(e.g.,* gNB-CU 310) are logical nodes that host higher-layer protocols and perform various gNB functions such controlling the operation of DUs. Each DU is a logical node that hosts lower-layer protocols and can include, depending on the functional split, various subsets of the gNB functions. As such, each of the CUs and DUs can include various circuitry needed to perform their respective functions, including processing circuitry, transceiver circuitry (*e.g*., for communication), and power supply circuitry. Moreover, the terms "central unit" and "centralized unit" are used interchangeably herein, as are the terms "distributed unit" and "decentralized unit."

A gNB-CU connects to gNB-DUs over respective F1 logical interfaces, such as interfaces 322 and 332 shown in Figure 3. The gNB-CU and connected gNB-DUs are only visible to other gNBs and the 5GC as a gNB. In other words, the F1 interface is not visible beyond gNB-CU. In the gNB split CU-DU architecture illustrated by Figure 3, DC can be achieved by allowing a UE to connect to multiple DUs served by the same CU or by allowing a UE to connect to multiple DUs served by different CUs.

Figure 4 shows a high-level view of an exemplary 5G network architecture, including an NG-RAN 499 and a 5GC 498. As shown in the figure, NG-RAN 499 can include gNBs 410 (*e.g.*, 410a,b) and ng-eNBs 420 (e.g., 420a,b) that are interconnected with each other via respective Xn interfaces. The gNBs and ng-eNBs are also connected via the NG interfaces to 5GC 498, more specifically to an Access and Mobility Management Function (e.g., AMFs 430a,b) via respective NG-C interfaces and to a User Plane Function (*e.g.*, UPFs 440a,b) via respective NG-U interfaces. Moreover, AMFs 430a,b can communicate with one or more policy control functions (e.g., PCFs 450a,b) and network exposure functions (e.g., NEFs 460a,b).

Each of the gNBs 410 can support the NR radio interface including frequency division duplexing (FDD), time division duplexing (TDD), or a combination thereof. In contrast, each of ng-eNBs 420 can support the LTE radio interface but, unlike conventional LTE eNBs (such as shown in Figure 1), connect to the 5GC via the NG interface. Each of the gNBs and ng-eNBs can serve a geographic coverage area including one more cells, including cells 411a-b and 421a-b shown as exemplary in Figure 4. As mentioned above, the gNBs and ng-eNBs can also use various directional beams to provide coverage in the respective cells. Depending on the particular cell in which it is located, UE 405 can communicate with the gNB or ng-eNB serving that particular cell via the NR or LTE radio interface, respectively.

As mentioned above, a UE in RRC _CONNECTED mode can be configured by the network to perform measurements and send measurement reports to the network node hosting its current serving cell. For example, the network can configure a UE to perform measurements on various carrier frequencies and various radio access technologies (RATs) corresponding to neighbor cells, as well as for various purposes including, *e.g.*, mobility and positioning. The configuration for each of these measurements is referred to as a "measurement object." Furthermore, the UE can be configured to perform the measurements according to a "measurement gap pattern" (or "gap pattern" for short), which can comprise a measurement gap repetition period (MGRP) (*i.e.*, how often a regular gap available for measurements occurs) and a measurement gap length (MGL) (*i.e.*, the length of each gap).

Upon receiving measurement reports that meet predetermined triggering criteria, the network may send a handover command to the UE. In LTE, this command is an *RRConnectionReconfiguration* message with a *mobilityControlInfo* field. In NR, this command is an *RRCReconfiguration* message with a *reconfigurationWithSync* field.

There are two approaches to handover UEs to the target eNBs. First, by applying a HO offset between the cells, the "border" of a congested and/or heavily loaded cell can be effectively "moved" to reduce its coverage area. With this approach, the source eNB negotiates with target eNBs for the HO offset settings to avoid handover bouncing (also referred to as "ping-pong") between source and target cells. The agreed offset will be signalled to the UEs served by the source eNB and no specific set of UEs will be selected in this case.

In a second approach, a source eNB may command HOs to a specific set of UEs towards a selected target eNB. In general, a mobility load balancing (MLB) algorithm running at a radio access node (e.g., eNB or gNB) has to decide which UEs will be handed over ("UE selection") and to which neighbor cells ("cell selection"). These decisions are typically made based on the load reports and any available radio measurements of source cell and neighbor cells, such as measurements reported by UEs operating in RRC _CONNECTED and RRC _IDLE states.

The algorithms for UE selection and cell selection are non-standardized and/or vendor proprietary. Besides cell-specific information (e.g., source and target cell load and capacity), these algorithms can also consider at least some of the following UE-specific information as input (e.g., depending on availability): radio measurement reports; traffic characteristics (e.g., heavy or light data usage); bearers (e.g., guaranteed bit-rate (GBR) or default); historical and/or current resource utilization; and UE profile (e.g., "gold", "silver", "bronze"). Of these parameters, the UE radio measurement reports are important to select UEs that have acceptable radio quality in the target eNB. On the other hand, it is also possible to command the HO blindly without the report, assuming that coverage is available. Given other inputs, algorithms with different targets may be developed, e.g., to prioritize heavy users, bronze users, default bear users, etc.

In general, however, the network considers both UE-reported measurements and the load of the respective cells when making handover (and, more generally, mobility) decisions for individual UEs. In the present disclosure, the term "load" (or equivalently "load information" or "load-related information") can refer to a measure of resources being consumed (e.g., by the respective cells) or a measure of an available capacity (e.g., remaining in the respective cells). The loads of cells served by a radio access node are typically measured frequently. When the load of a cell exceeds a pre-configured threshold, procedures can be triggered to transfer some UE traffic from the overloaded cell to either a neighbor cell of the same radio access technology (RAT), a different RAT, a different frequency, etc.

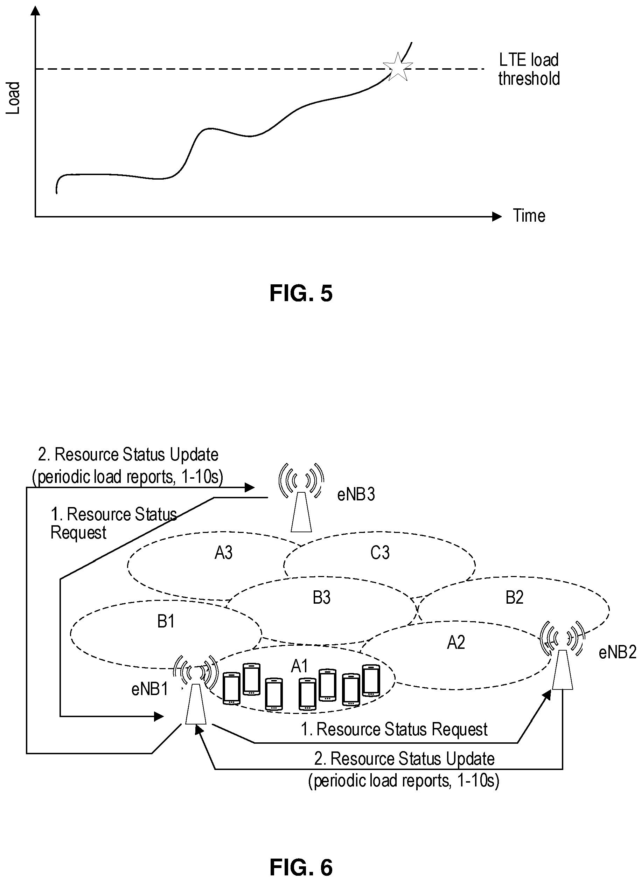

Currently, 3GPP specifies the following components and/or functions for MLB in LTE networks: 1) load reporting; 2) load balancing action based on handovers; and 3) adapting handover (HO) and/or cell reselection (CR) configuration so that load remains balanced. The load reporting function is executed by exchanging cell specific load information between neighbor enhanced NodeBs (eNBs) over the X2 (intra-LTE scenario) or S1 (inter-RAT scenario) interfaces. In the case of intra-LTE load balance, the source eNB may trigger a RESOURCE_STATUS_ REQUEST message to potential target eNBs at any point in time, for example when the load is above a pre-defined value and/or threshold. Figure 5 is a graph showing an exemplary variation of cell load vs. time, with an exemplary predefined load threshold (i.e., Lte_load_threshold).

Figure 6 illustrates an exemplary LTE MLB scenario involving three (3) eNBs. In this scenario, eNB1 serves cells A1 and B1, eNB2 serves cells A2 and B2, and eNB3 serves cells A3, B3, and C3. Furthermore, eNB2 and eNB3 periodically report load values for their served cells to eNB1. In particular, eNB1 sends a RESOURCE STATUS REQUEST message and eNB2 responds with a RESOURCE STATUS UPDATE message include the load reports. Figure 6 shows a similar arrangement between eNB3 and eNB1.

In addition, UEs operating in a cell served by eNB1 (e.g., A1) may send measurement reports (RSRP, RSRQ, SINR, etc.) to eNB1 for one or more neighbor cells (e.g., A2, B3). Based on these reports and the received load information for neighbor cells, eNB1 may decide to handover one or more UE from A1 to a neighbor cell such as B3 or A2. When eNB1 decides to offload a UE (e.g., to A2), it triggers an ordinary handover, including a handover preparation with a selected target node (e.g., eNB2). This can also include a Mobility Setting Change for the offloaded UE, as described above with reference to Figure 5.

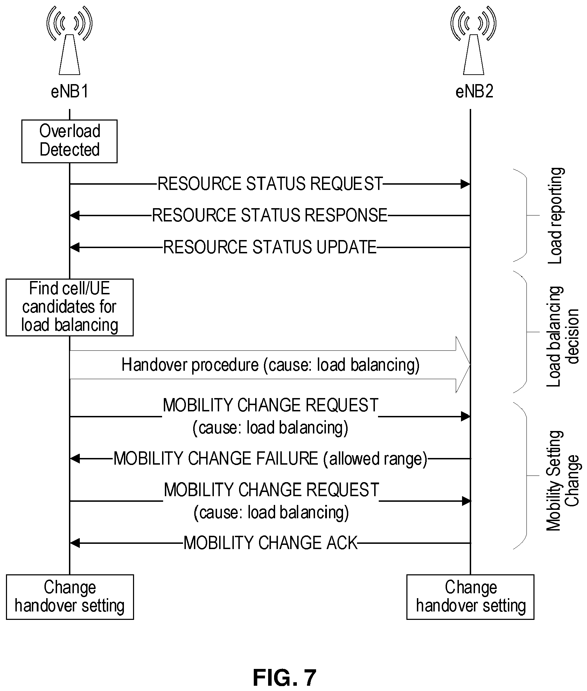

Figure 7 shows an exemplary Mobility Setting Change procedure (e.g., as specified by 3GPP TS 36.423) between eNBs in an E-UTRAN, which can be run before or after a MLB handover is performed. This procedure is aimed at negotiating, between a source cell and potential target cell, a change on the *Handover Trigger event, which is used to trigger the UE mobility from one cell to another.

Figure 7 shows the scenario in which the Mobility Setting Change is performed after the HO. Note that load reporting is performed before the HO, as discussed above in relation to Figure 6. Once the source eNB has selected the target eNB and which UE's will be offloaded, it performs a Mobility Setting Change. During this procedure, new mobility settings are negotiated between the source and target eNBs so that the UE's handed over due to MLB will not be immediately handed over back to the source cell. The procedure can either be followed or preceded by ordinary handovers, depending on the vendor implementation.

The basic mobility solution in NR shares some similarities to LTE. The UE may be configured by the network to perform cell measurements and report them, to assist the network to take mobility decisions. However, an NR UE may be configured to perform L3 beam measurements based on different RS and report them for each cell (serving and non-serving/candidate) fulfilling triggering conditions for measurement report (e.g., an "A3 event"). In particular, NR UEs can be configured to perform/report measurements on SS/PBCH blocks (SSBs) in addition to the reference signals measured/reported by LTE UEs (e.g., CSI-RS). Each SSB is carried in four (4) adjacent OFDM symbols and includes a combination of primary synchronization signal (PSS), secondary synchronization signal (SSS), DM-RS, and physical broadcast channel (PBCH).

As described in 3GPP TS 38.300 (v15.4.0), an NR UE in RRC_CONNECTED mode measures one or more detected beams of a cell and then averages the measurements results (e.g., power values) to derive the cell quality. In doing so, the UE is configured to consider a subset of the detected beams. Filtering takes place at two different levels: at the physical layer to derive beam quality and then at RRC level to derive cell quality from multiple beams. Cell quality from beam measurements is derived in the same way for the serving cell(s) and for the non-serving/candidate cell(s). Measurement reports may contain the measurement results of the *X* best beams if the UE is configured to do so by the gNB.

As briefly mentioned above, the term "beam" is used herein to refer to the coverage area of a reference signal that may be measured by a UE. In NR, for example, such reference signals can include any of the following, alone or in combination: SSB; CSI-RS; tertiary reference signal (or any other sync signal); PRS; DM-RS; and any other reference signal that may be beamformed for transmission. Such beams can be correlated and/or coextensive with other beams used by eNBs or gNBs to transmit and/or receive physical data channels (e.g., PDSCH, PUSCH) and/or physical control channels (e.g., PDCCH, PUCCH).

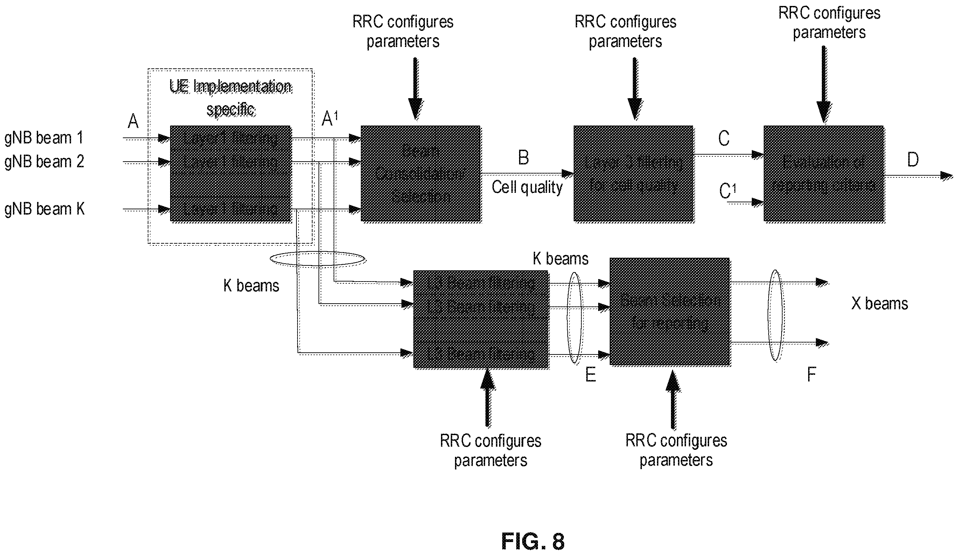

Figure 8 shows an exemplary configuration of a UE measurement model for NR, which was briefly mentioned above. In this model, the UE measures k beams transmitted by a gNB for a particular cell. These k beams correspond to measurements on SSB or CSI-RS resources configured for layer 3 (L3, e.g., RRC) mobility by the network (e.g., gNB) and detected by UE at L1. These beam-specific measurements are labelled "A" and are typically internal to the PHY. The UE then filters each of these k measurements over time (referred to as "layer-1 filtering"), resulting in k time-filtered beam measurements labelled "A1". Neither the measurements themselves ("A") nor the layer-1 filtering is standardized and is typically implementation-dependent. The "A1" measurements are reported to L3.

The UE then consolidates these k beam measurements into a cell quality estimate ("B") based on parameters configured by the network via RRC signalling. The behaviour of the Beam consolidation/selection is standardized. The cell-quality estimate "B" are reported to L3 at the same rate as the beam measurements "A1."

The UE further time-filters the cell quality estimate (referred to as "layer 3 filtering") resulting in filtered measurement "C" shown in the figure. The behaviour of these layer-3 filters is standardized and the configuration of the layer-3 filters is provided by RRC signalling. Filtering reporting period at "C" equals one measurement period at "B".

The UE then checks whether actual measurement reporting is necessary at point D. The evaluation can be based on more than one flow of measurements at reference point C, e.g., to compare between different measurements. This is illustrated by inputs C and C¹. The UE evaluates the reporting criteria at least every time a new measurement result is reported at point C, C¹. The reporting criteria are standardized and the configuration is provided from the network by RRC signalling. The value "D" (which can be based on "C") is reported to the network in an RRC measurement report.

In addition, the time-filtered beam measurements "A1" are further filtered at the RRC layer ("layer 3") based on a network provided configuration, resulting in filtered beam measurements "E". Filtering reporting period at "E" equals one measurement period at "A1". The UE selects X beam measurements from these k filtered beam measurements for beam-quality reporting to the network (labelled "F" in the figure). The behaviour of the beam selection is standardized and the configuration is provided by the network by RRC signalling.

Measurement reports typically include the measurement identity of the associated measurement configuration that triggered the reporting. As mentioned above, cell and beam measurement quantities to be included in measurement reports are configured by the network. For example, the network can configure beam measurements as beam identifier only, measurement result and beam identifier, or no beam reporting. Furthermore, the number of non-serving cells to be reported can be limited through configuration by the network. In addition, cells belonging to a blacklist configured by the network are not used in event evaluation and reporting; conversely, when a whitelist is configured by the network, only the cells belonging to the whitelist are used in event evaluation and reporting.

Neighbor cell measurements can be intra- or inter-frequency with respect to the serving cell. A measurement is defined as an "SSB based intra-frequency measurement" provided that the centre frequency of the SSB of the serving cell and the center frequency of the SSB of the neighbor cell are the same, and the subcarrier spacing of the two SSBs is also the same. A measurement is defined as an "SSB based inter-frequency measurement" provided that the centre frequency of the SSB of the serving cell and the centre frequency of the SSB of the neighbor cell are different, or the subcarrier spacing of the two SSBs is different.

Similarly, a measurement is defined as a "CSI-RS based intra-frequency measurement" provided that the bandwidth of the CSI-RS resource on the neighbor cell configured for measurement is within the bandwidth of the CSI-RS resource on the serving cell configured for measurement, and the subcarrier spacing of the two CSI-RS resources is the same. A measurement is defined as a "CSI-RS based inter-frequency measurement" provided that the bandwidth of the CSI-RS resource on the neighbor cell configured for measurement is not within the bandwidth of the CSI-RS resource on the serving cell configured for measurement, or the subcarrier spacing of the two CSI-RS resources is different.

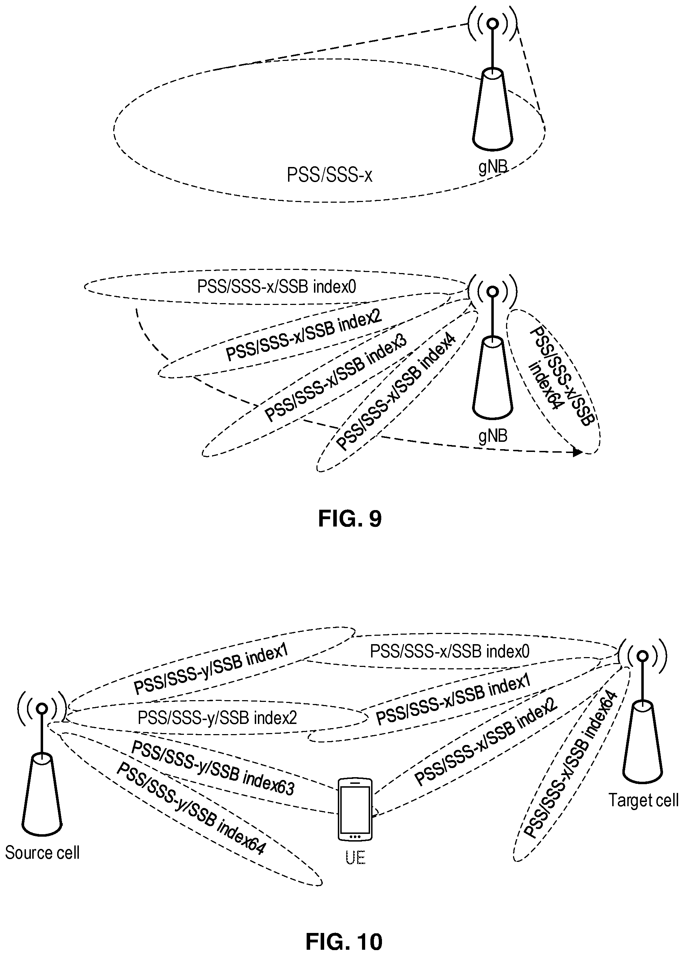

In LTE and NR, handovers or PSCell change decisions (e.g., when a UE is operating in DC, CA, etc.) are typically made based on the coverage and quality of a serving cell compared to the quality of a neighbor cell handover candidate. Quality is typically measured in terms of RSRQ or SINR, while coverage is typically measured based on RSRP. In NR, a cell may be comprised by a set of beams where PSS/SSS are transmitted in different downlink beams, each beam associated with a different SSB index. Figure 9 illustrates an exemplary arrangement where a cell includes 65 different downlink beams associated with SSB indices 0-64 respectively.

As discussed above with reference to Figure 8, beam measurement information (SSB/CSI-RS indexes with or without associated measurements) may be included in measurement reports. One of the purposes of these beam reports is to enable a source node to take educated mobility decisions to avoid UE ping-pong between serving cells. For example, if multiple neighbor cells are reported (e.g., based on a mobility event where the trigger condition is that the neighbor cell signal becomes better than the source by a certain offset), and these cells have somewhat similar quality/coverage (e.g., similar RSRP and/or RSRQ), beam-quality reports can be used to decide where to handover the UE. For example, network could prioritize the cells with more beams than another cell. Figure 10 shows an exemplary scenario of handover of a UE from a beam of a source cell to one beam of a target cell having 65 total DL beams.

Similar MLB-related signaling mechanisms are used in both E-UTRAN and NG-RAN. One difference is that MLB metrics are reported over a wider variety of interfaces. In particular, signaling for Resource Status Reporting has been introduced over Xn, F1, and E1 interfaces, and has been enhanced over the X2 for EN-DC. In addition, NG-RAN MLB functionality has been enhanced by new types of load metrics and with finer load granularity compared to LTE, where load information is reported on a per-cell basis only. In particular, NG-RAN MLB enhancements include:
- Load information on a per SSB coverage area granularity, such as Radio Resource Status reporting per SSB area, composite Available Capacity reporting per SSB Area, etc.;
- Load information on a per network slice granularity, such as Slice Available Capacity reporting per slice;
- Hardware load indicator over E1;
- TNL capacity indication
- Number of active UEs; and
- Number of RRC connections.

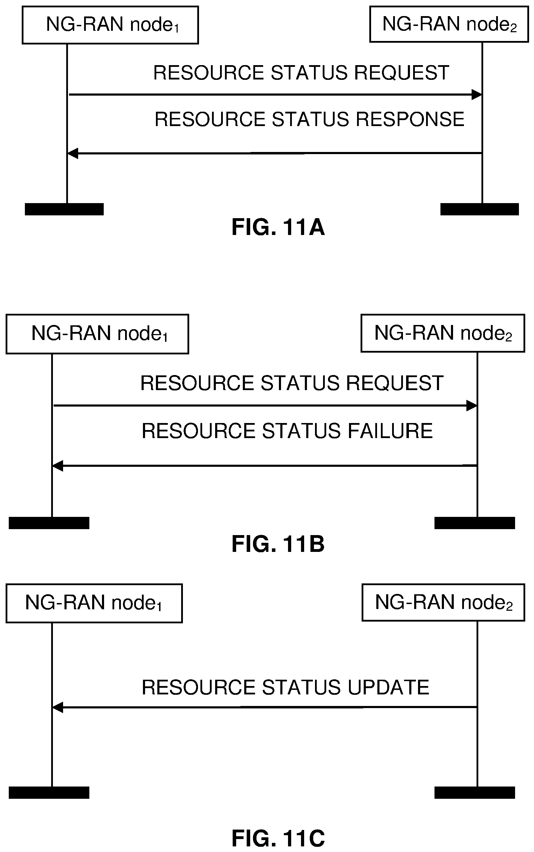

The following text from 3GPP TS 38.423 (specifically sections 8.4.10-11, 9.1.3 and 9.2.2) specifies Resource Status Reporting over the Xn interface. This text should also be read in the context of Figures 11A-C, which show signal flow diagrams for procedures described.

### *** Begin text from 3GPP TS 38.423 ***

### 8.4.10 Resource Status Reporting Initiation

### General

This procedure is used by an NG-RAN node to request the reporting of load measurements to another NG-RAN node. The procedure uses non UE-associated signalling.

### Successful Operation

NG-RAN node₁ initiates the procedure by sending the RESOURCE STATUS REQUEST message to NG-RAN nodez to start a measurement, stop a measurement or add cells to report for a measurement. Upon receipt, NG-RAN node₂:
- shall initiate the requested measurement according to the parameters given in the request in case the *Registration Request* IE set to "start"; or
- shall stop all cells measurements and terminate the reporting in case the *Registration Request* IE is set to "stop"; or
- shall add cells indicated in the *Cell To Report List* IE to the measurements initiated before for the given measurement IDs, in case the *Registration Request* IE is set to "add". If measurements are already initiated for a cell indicated in the *Cell To Report List* IE, this information shall be ignored.

If the *Registration Request* IE is set to "start" in the RESOURCE STATUS REQUEST message and the *Report Characteristics* IE indicates cell specific measurements, the *Cell To Report List* IE shall be included.

If *Registration Request* IE is set to "add" in the RESOURCE STATUS REQUEST message, the *Cell To Report List* IE shall be included.

If NG-RAN node₂ is capable to provide all requested resource status information, it shall initiate the measurement as requested by NG-RAN node₁ and respond with the RESOURCE STATUS RESPONSE message.

### Interaction with other procedures

When starting a measurement, the *Report Characteristics* IE in the RESOURCE STATUS REQUEST indicates the type of objects NG-RAN node₂ shall perform measurements on. For each cell, NG-RAN node₂ shall include in the RESOURCE STATUS UPDATE message:
- the *Radio Resource Status* IE, if the first bit, "PRB Periodic" of the *Report Characteristics* IE included in the RESOURCE STATUS REQUEST message is set to 1. If NG-RAN node₂ is a gNB and if the cell for which *Radio Resource Status* IE is requested to be reported supports more than one SSB, the *Radio Resource Status* IE for such cell shall include the *SSB Area Radio Resource Status Item* IE for all SSB areas supported by the cell. If the *SSB To Report List* IE is included for a cell, the *Radio Resource Status* IE for such cell shall include the requested *SSB Area Radio Resource Status List* IE;
- the *TNL Capacity Indicator* IE, if the second bit, "TNL Capacity Ind Periodic" of the *Report Characteristics* IE included in the RESOURCE STATUS REQUEST message is set to 1;
- the *Composite Available Capacity Group* IE, if the third bit, "Composite Available Capacity Periodic" of the *Report Characteristics* IE included in the RESOURCE STATUS REQUEST message is set to 1. If the *Cell Capacity Class Value* IE is included within the *Composite Available Capacity Group* IE, this IE is used to assign weights to the available capacity indicated in the *Capacity Value* IE. If NG-RAN node₂ is a gNB and if the cell for which *Composite Available Capacity Group* IE is requested to be reported supports more than one SSB, the *Composite Available Capacity Group* IE for such cell shall include the *SSB Area Capacity Value List* for all SSB areas supported by the cell, providing the SSB area capacity with respect to the *Cell Capacity Class Value.* If the *SSB To Report List* IE is included for a cell, the *Composite Available Capacity Group* IE for such cell shall include the requested *SSB Area Capacity Value List* IE.

If the cell for which *Composite Available Capacity Group* IE is requested to be reported supports more than one slice, and if the *Slice To Report List* IE is included for a cell, the *Slice Available Capacity* IE for such cell shall include the requested *Slice Available Capacity Value Downlink* IE and *Slice Available Capacity Value Uplink* IE, providing the slice capacity with respect to the Cell Capacity Class Value.
- the *Number of Active UEs* IE, if the fourth bit, "Number of Active UEs" of the *Report Characteristics* IE included in the RESOURCE STATUS REQUEST message is set to 1;
- the *RRC Connections* IE, if the fifth bit, "RRC Connections" of the *Report Characteristics* IE included in the RESOURCE STATUS REQUEST message is set to 1.

If the *Reporting Periodicity* IE in the RESOURCE STATUS REQUEST is present, this indicates the periodicity for the reporting of periodic measurements. If the *Reporting Periodicity* IE is absent, the NG-RAN nodez shall report only once.

### Unsuccessful Operation

If any of the requested measurements cannot be initiated, NG-RAN node₂ shall send the RESOURCE STATUS FAILURE message.

### Abnormal Conditions

### Void

### 8.4.11 Resource Status Reporting

### General

This procedure is initiated by an NG-RAN node to report the result of measurements admitted by the NG-RAN node following a successful Resource Status Reporting Initiation procedure.

The procedure uses non UE-associated signalling.

### Successful Operation

NG-RAN node₂ shall report the results of the admitted measurements in RESOURCE STATUS UPDATE message. The admitted measurements are the measurements that were successfully initiated during the preceding Resource Status Reporting Initiation procedure.

### Unsuccessful Operation

Not applicable.

### Abnormal Conditions

### Void

### 9.1.3.21 Resource Status Update

This message is sent by NG-RAN node₂ to NG-RAN node₁ to report the results of the requested measurements.

| **IE/Group Name** | | | **Presence** | **Range** | **IE type/ref.** | **Semantics description** |
|---|---|---|---|---|---|---|
| Message Type | | | M | | 9.2.3.1 | |
| NG-RAN node1 Measurement ID | | | M | | INTEGER (1..4095,...) | Allocated by NG-RAN node₁ |
| NG-RAN node2 Measurement ID | | | M | | INTEGER (1..4095,...) | Allocated by NG-RAN node₂ |
| **Cell Measurement Result** | | | | *1* | | |
| | **>Cell Measurement Result Item** | | | *1*.. < *maxnoofC ellsinNG-RANnode* > | | |
| | | >>Cell ID | M | | Global NG-RAN Cell Identity 9.2.2.27 | |
| | | >>Radio Resource Status | O | | 9.2.2.50 | |
| | | >>TNL Capacity Indicator | O | | 9.2.2.49 | |
| | | >>Composite Available Capacity Group | O | | 9.2.2.51 | |
| | | >>Slice Available Capacity | O | | 9.2.2.55 | |
| | | >>Number of Active UEs | O | | 9.2.2.62 | |
| | | >>RRC Connections | O | | 9.2.2.56 | |

| **Range bound** | **Explanation** |
|---|---|
| maxnoofCellsinNG-RANnode | Maximum no. cells that can be served by a NG-RAN node. Value is 16384. |

### 9.2.2.49 TNL Capacity Indicator

The *TNL Capacity Indicator* IE indicates the offered and available capacity of the Transport Network experienced by the NG RAN cell.

| **IE/Group Name** | **Presence** | **Range** | **IE type/ref.** | **Semantics description** |
|---|---|---|---|---|
| DL TNL Offered Capacity | M | | INTEGER (1.. 16777216,...) | Maximum capacity offered by the transport portion of the cell in kbps |
| DL TNL Available Capacity | M | | INTEGER (0.. 100, ...) | Available capacity over the transport portion serving the cell in percentage. Value 100 corresponds to the offered capacity. |
| UL TNL Offered Capacity | M | | INTEGER (1.. 16777216, ...) | Maximum capacity offered by the transport portion of the cell in kbps |
| UL TNL Available Capacity | M | | INTEGER (0.. 100, ...) | Available capacity over the transport portion serving the cell in percentage. Value 100 corresponds to the offered capacity. |

### 9.2.2.50 Radio Resource Status

The *Radio Resource Status* IE indicates the usage of the PRBs per cell and per SSB area for all traffic in Downlink and Uplink and the usage of PDCCH CCEs for Downlink and Uplink scheduling.

| **IE/Group Name** | | | | **Presence** | **Range** | **IE type/ref.** | **Semantics description** |
|---|---|---|---|---|---|---|---|
| CHOICE *Radio Resource Status Type* | | | | M | | | |
| *>ng-eNB* | | | | | | | |
| | >>DL GBR PRB usage | | | M | | INTEGER (0..100) | Per cell DL GBR PRB usage |
| | >>UL GBR PRB usage | | | M | | INTEGER (0..100) | Per cell UL GBR PRB usage |
| | >>DL non-GBR PRB usage | | | M | | INTEGER (0..100) | Per cell DL non-GBR PRB usage |
| | >>UL non-GBR PRB usage | | | M | | INTEGER (0..100) | Per cell UL non-GBR PRB usage |
| | >>DL Total PRB usage | | | M | | INTEGER (0..100) | Per cell DL Total PRB usage |
| | >>UL Total PRB usage | | | M | | INTEGER (0..100) | Per cell UL Total PRB usage |
| *>gNB* | | | | | | | |
| | >>**SSB Area Radio Resource Status List** | | | | *1* | | |
| | | >>>**SSB Area Radio Resource Status Item** | | | *1.. <max noofSSB Areas>* | | |
| | | | >>>>SSB Index | M | | INTEGER (0..63) | |
| | | | >>>>SSB Area DL GBR PRB usage | M | | INTEGER (0..100) | Per SSB area DL GBR PRB usage |
| | | | >>>>SSB Area UL GBR PRB usage | M | | INTEGER (0..100) | Per SSB area UL GBR PRB usage |
| | | | >>>>SSB Area DL non-GBR PRB usage | M | | INTEGER (0..100) | Per SSB area DL non-GBR PRB usage |
| | | | >>>>SSB Area UL non-GBR PRB usage | M | | INTEGER (0..100) | Per SSB area UL non-GBR PRB usage |
| | | | >>>>SSB Area DL Total PRB usage | M | | INTEGER (0..100) | Per SSB area DL Total PRB usage |
| | | | >>>>SSB Area UL Total PRB usage | M | | INTEGER (0..100) | Per SSB area UL Total PRB usage |
| | >>DL scheduling PDCCH CCE usage | | | O | | INTEGER (0..100) | |
| | >>UL scheduling PDCCH CCE usage | | | O | | INTEGER (0..100) | |

| **Range bound** | **Explanation** |
|---|---|
| maxnoofSSBAreas | Maximum no. SSB Areas that can be served by a NG-RAN node cell. Value is 64. |

### 9.2.2.51 Composite Available Capacity Group

The *Composite Available Capacity Group* IE indicates the overall available resource level per cell and per SSB area in the cell in Downlink and Uplink.

| **IE/Group Name** | **Presence** | **Range** | **IE type/ref.** | **Semantics description** |
|---|---|---|---|---|
| Composite Available Capacity Downlink | M | | Composite Available Capacity 9.2.2.52 | For the Downlink |
| Composite Available Capacity Uplink | M | | Composite Available Capacity 9.2.2.52 | For the Uplink |

### 9.2.2.52 Composite Available Capacity

The *Composite Available Capacity* IE indicates the overall available resource level in the cell in either Downlink or Uplink.

| **IE/Group Name** | **Presence** | **Range** | **IE type/ref.** | **Semantics description** |
|---|---|---|---|---|
| Cell Capacity Class Value | O | | 9.2.2.53 | |
| Capacity Value | M | | 9.2.2.54 | '0' indicates no resource is available, Measured on a linear scale. |

### 9.2.2.53 Cell Capacity Class Value

The *Cell Capacity Class Value* IE indicates the value that classifies the cell capacity with regards to the other cells. The *Cell Capacity Class Value* IE only indicates resources that are configured for traffic purposes.

| **IE/Group Name** | **Presence** | **Range** | **IE type/ref.** | **Semantics description** |
|---|---|---|---|---|
| Capacity Class Value | M | | INTEGER (1..100,...) | Value 1 shall indicate the minimum cell capacity, and 100 shall indicate the maximum cell capacity. There should be a linear relation between cell capacity and Cell Capacity Class Value. |

### 9.2.2.54 Capacity Value

The *Capacity Value* IE indicates the amount of resources per cell and per SSB area that are available relative to the total NG-RAN resources. The capacity value should be measured and reported so that the minimum NG-RAN resource usage of existing services is reserved according to implementation. The *Capacity Value* IE can be weighted according to the ratio of cell capacity class values, if available.

| | | **IE/Group Name** | **Presence** | **Range** | **IE type/ref.** | **Semantics description** |
|---|---|---|---|---|---|---|
| | | Capacity Value | M | | INTEGER (0..100) | Value 0 shall indicate no available capacity, and 100 shall indicate maximum available capacity with respect to the whole cell. Capacity Value should be measured on a linear scale. |
| **SSB Area Capacity Value List** | | | | *0*..*1* | | |
| | >**SSB Area Capacity Value Item** | | | *0..* <*max noofSSB Areas>* | | |
| | | >>SSB Index | M | | INTEGER (0..63) | |
| | | >>SSB Area Capacity Value | M | | INTEGER (0..100) | Value 0 shall indicate no available capacity, and 100 shall indicate maximum available capacity . SSB Area Capacity Value should be measured on a linear scale. |

| **Range bound** | **Explanation** |
|---|---|
| maxnoofS SBAreas | Maximum no. SSB Areas that can be served by a NG-RAN node cell. Value is 64. |

### 9.2.2.55 Slice Available Capacity

The *Slice Available Capacity* IE indicates the amount of resources per network slice that are available per cell relative to the total NG-RAN resources per cell. The *Slice Capacity Value Downlink* IE and the *Slice Capacity Value Uplink* IE can be weighted according to the ratio of the corresponding cell capacity class values contained in the *Composite Available Capacity Group* IE, if available.

| **IE/Group Name** | | | | **Presence** | **Range** | **IE type/ref.** | **Semantics description** |
|---|---|---|---|---|---|---|---|
| **Slice Available Capacity** | | | | | *1*.. < maxnoo fBPLM Ns > | | |
| | >PLMN Identity | | | M | | 9.3.1.14 | Broadcast PLMN |
| | >**S-NSSAI Available Capacity List** | | | | *1* | | |
| | | >>**S-NSSAI Available Capacity Item** | | M | *1*.. < *maxnoo fSliceIte ms*> | | |
| | | | >>>S-NSSAI | | | 9.3.1.38 | |
| | | | >>>Slice Available Capacity Value Downlink | O | | INTEGER (0..100) | Value 0 shall indicate no available capacity, and 100 shall indicate maximum available capacity . |
| | | | | | | | Slice Capacity Value should be measured on a linear scale. |
| | | | >>>Slice Available Capacity Value Uplink | O | | INTEGER (0..100) | Value 0 indicates no available capacity, and 100 indicates maximum available capacity. Slice Capacity Value should be measured on a linear scale. |

| **Range bound** | **Explanation** |
|---|---|
| maxnoofSliceItems | Maximum no. of signaled slice support items. Value is 1024. |
| maxnoofBPLMNs | Maximum no. of PLMN IDs broadcast in a cell. Value is 12. |

### 9.2.2.56 RRC Connections

The *RRC Connections* IE indicates the overall status of RRC connections per cell.

| **IE/Group Name** | **Presence** | **Range** | **IE type/ref.** | **Semantics description** |
|---|---|---|---|---|
| Number of RRC Connections | M | | 9.2.2.57 | |
| Available RRC Connection Capacity Value | M | | 9.2.2.58 | |

### 9.2.2.57 Number of RRC Connections

The *Number of RRC Connections* IE indicates the absolute number of UEs in RRC_CONNECTED mode.

| **IE/Group Name** | **Presence** | **Range** | **IE type/ref.** | **Semantics description** |
|---|---|---|---|---|
| Number of RRC Connections | M | | INTEGER (1..65536,...) | |

### 9.2.2.58 Available RRC Connection Capacity Value

The *Available RRC Connection Capacity Value* IE indicates the residual percentage of the number of RRC connections, relative to the maximum number of RRC connections supported by the cell.

| **IE/Group Name** | **Presence** | **Range** | **IE type/ref.** | **Semantics description** |
|---|---|---|---|---|
| Available RRC Connection Capacity Value | M | | INTEGER (0..100) | Value 0 shall indicate no available capacity, and 100 shall indicate maximum available capacity with respect to the whole cell. Capacity Value should be measured on a linear scale. |

### *** End text from 3GPP TS 38.423 ***

As described above and shown in Figures 7 and 11, procedures are well-defined for load-balancing signaling within E-UTRAN and within NG-RAN. In both cases, the signaling generally does not involve the CN, i.e., EPC or 5GC. However, inter-system load balancing, requires signaling between two different RANs (e.g., E-UTRAN and NG-RAN) and two different CNs to convey cell- or beam-specific information. For various reasons, such signaling can be burdensome on the various CN and RAN resources involved.

For example, the inter-system signaling from many RAN nodes (e.g., eNBs) is received at one CN node (e.g., MME). Due to this high signaling load, the CN node may experience reduced processing capacity, e.g., for other necessary tasks. Likewise, forwarding the signaling between CNs can create additional burdens. In the case of signaling from E-UTRAN to NG-RAN, the signaling has to be triggered by an eNB towards an MME, then it has to be forwarded from the MME to an AMF via inter-CN interfaces, then it has to be signaled from the AMF to the target NG RAN node. This process can involve relatively long delays, high signaling load, and increased energy consumption by the involved RAN and CN nodes. Furthermore, the long delays experienced by inter-CN signaling can reduce effectiveness and/or usefulness of periodic measurements aimed at providing frequent status updates of the load/capacity metrics.

Embodiments of the present disclosure address these and other problems, difficulties, and/or issues by providing effective and processing-efficient techniques for signaling load and capacity metrics across different systems, e.g., different CNs.

Some embodiments include signaling, between two RAN nodes of two different systems (e.g., RANs), metrics that can represent load and capacity based on the occurrence of events. In some of these embodiments, the metrics can be configured via cross system signaling. For example, the metrics can be configured by a first RAN node in system 1 signaling a Resource Status Request message as part of self-organizing network (SON) Information, to a second RAN node in system 2. This message can request the second RAN node to configure reporting of the measurements listed in the message from the first RAN node and according to the reporting conditions stated by the sending node. The second RAN node can reply with a RESOURCE STATUS RESPONSE, where the metrics to be reported are confirmed together with the reporting configuration that the target RAN node will follow.

In various embodiments, the reporting configuration can include one of the following:
1. For each of the metrics requested to be reported, an explicit report triggering event is defined, such that a report may be generated towards the first RAN node it the report trigger event is fulfilled.
2. For each of the metrics requested to be reported, a report triggering event is defined based on a threshold or a condition. A report may be generated towards the first RAN node if one or more of the following conditions occur.
   - The requested metric reaches a level above the established threshold;
   - The requested metric reaches a level below the established threshold;
   - The requested metric reaches a level above the established threshold and maintains such level for a configured amount of time;
   - The requested metric reaches a level below the established threshold and maintains such level for a configured amount of time;
   - The requested metric values are subject to a change in value that is higher than a certain gradient; and
   - The requested metric values are subject to a change in value that is lower than a certain gradient.
3. For each metric requested to be reported, if the metric fulfils the associated reporting triggering event, a measurement report is issued periodically according to a specified reporting period. In one example, the measurement report may include measurements only for the metrics in the list that fulfilled the corresponding reporting triggering event. In another example, the measurement report may include measurements for all the metrics in the list for which the second RAN node can provide measurements.
4. For each metric requested to be reported, if the metric fulfils the associated reporting triggering event, a single measurement report should be issued. Such measurement report may be cumulative, i.e., it may include one or more metrics. The report may contain single samples of the metric to be reported or it may contain a value derived from a number of metrics samples collected over a specified amount of time, for example a mean value or an average value.
5. If multiple metrics are requested to be reported and only one of the metrics fulfils associated reporting triggering events or conditions, the reporting node may generate a message that includes a value of or an event relative to the metric fulfilling the reporting event. In addition, the reporting node may further report a value of all other metrics that have been configured to be reported but that did not fulfil the reporting event configured.
6. For each metric requested to be reported, a report triggering event is defined based on two or more thresholds. In some embodiments, different thresholds may be defined to trigger different types of reporting of the metric, such as a first threshold for triggering a single measurement report and a second threshold for triggering a periodic measurement report according to a specified period. In some embodiments, one threshold value can be associated with the metric value, and a second threshold value can be associated with a period of time during which the metric should fulfil the condition defined by the first threshold to trigger reporting.

The embodiments summarized above will now be described in more detail. In this following description, the respective groups of terms listed below will be used interchangeably:
- First network node, first RAN node, source network node, source RAN node.
- Second network node, second RAN node, target network node, target RAN node.
- First system, system 1, first RAN.
- Second system, system 2, second RAN.

Some embodiments include a method, performed by a first RAN node of a first system, for inter-system resource monitoring and load balancing. This method can include the first RAN node transmitting a RESOURCE STATUS REQUEST message, to a second RAN node of a second system, indicating a reporting configuration that includes one or more of the following:
- A list of one or more metrics to be measured and reported by the second RAN node;
- A list of one or more triggering events for starting the reporting from the second RAN node;

The first RAN node can then receive from the second RAN node a response message comprising one of the following:
- RESOURCE STATUS RESPONSE message indicating the successful configuration of all or part of the measurements requested by the first RAN node with the RESOURCE STATUS REQUEST message
- RESOURCE STATUS FAILURE message indicating the unsuccessful configuration of any of the measurements requested by the first RAN node with the RESOURCE STATUS REQUEST message

Additionally, the first RAN node can also perform one or more of the following operations:
- receiving from the second RAN node a RESOURCE STATUS UPDATE message reporting one or more measurements requested by the first RAN node
- transmitting a RESOURCE STATUS ACKNOWLEDGE message to the second RAN node to acknowledge the successful reception of the RESOURCE STATUS RESPONSE message and/or the RESOURCE STATUS UPDATE message and/or the RESOURCE STATUS FAILURE message.

In general, the RESOURCE STATUS REQUEST message can request the second RAN node of system 2 to configure the reporting of the measurements listed in the message from the first RAN node, and according to the reporting conditions indicated by the first RAN node. Accordingly, in various embodiments, the RESOURCE STATUS REQUEST message may indicate to the second RAN node a reporting configuration comprising one or more of the following:
- a list of metrics to be reported;
- a report triggering event associated with one or more metrics of the list defining the conditions for starting the reporting of the associated metric from the second RAN node to the first RAN node; and
- a reporting format, associated with one or more metrics in the list, that defines how the measurements for the associated metric(s) should be reported to the first RAN node upon a report triggering event. The reporting format may indicate that the second RAN node should transmit one or more of the following:
   ∘ a single measurement report to the first RAN node upon the occurrence of a report triggering event for at least one metric;
   ∘ a single measurement report to the first RAN node upon the occurrence of a triggering event that holds continuously for a set amount of time for at least one metric, e.g., a given metric is higher than a threshold for a set time window; and
   ∘ multiple measurement reports to the first RAN node upon the occurrence of a report triggering event for at least one metric, such as reporting measurements periodically according to a reporting period (which could be indicated by the reporting configuration or chosen by the second RAN node).

In some embodiments, the report triggering event indicated by the RESOURCE STATUS REQUEST message may include one or more of the following:
1. For each of the metrics requested to be reported, an explicit report triggering event is defined, such that a report may be generated towards the first RAN node it the report trigger event is fulfilled.
2. For each of the metrics requested to be reported, a report triggering event is defined based on a threshold or a condition. A report may be generated towards the first RAN node if one or more of the following conditions occur:
   - The requested metric reaches a level above the established threshold;
   - The requested metric reaches a level below the established threshold;
   - The requested metric reaches a level above the established threshold and maintains such level for a configured amount of time;
   - The requested metric reaches a level below the established threshold and maintains such level for a configured amount of time;
   - The requested metric values are subject to a change in value that is higher than a certain gradient; and
   - The requested metric values are subject to a change in value that is lower than a certain gradient.
3. For each metric requested to be reported, if the metric fulfils the associated reporting triggering event, a measurement report is issued periodically according to a specified reporting period. In one example, the measurement report may include measurements only for the metrics in the list that fulfilled the corresponding reporting triggering event. In another example, the measurement report may include measurements for all the metrics in the list for which the second RAN node can provide measurements.
4. For each metric requested to be reported, if the metric fulfils the associated reporting triggering event, a single measurement report should be issued. Such measurement report may be cumulative, i.e., it may include one or more metrics. The report may contain single samples of the metric to be reported or it may contain a value derived from a number of metrics samples collected over a specified amount of time, for example a mean value or an average value.
5. If multiple metrics are requested to be reported and only one of the metrics fulfils associated reporting triggering events or conditions, the reporting node may generate a message that includes a value of or an event relative to the metric fulfilling the reporting event. In addition, the reporting node may further report a value of all other metrics that have been configured to be reported but that did not fulfil the reporting event configured.
6. For each metric requested to be reported, a report triggering event is defined based on two or more thresholds.
   ∘ In some embodiments, different thresholds may be defined to trigger different types of reporting of the metric, such as a first threshold for triggering a single measurement report and a second threshold for triggering a periodic measurement report according to a specified period.
   ∘ In some embodiments, one threshold value can be associated with the metric value, and a second threshold value can be associated with a period of time during which the metric should fulfil the condition defined by the first threshold to trigger reporting.

In some embodiments, the list of metrics to be reported indicated in the RESOURCE STATUS REQUEST may include metrics representing load and/or capacity based on the occurrence of one or more reporting events. Example metrics may include any of the following:
- Radio resource status such as the utilization of physical resource blocks (PRB);
- Available capacity, such a Composite available capacity, slice available capacity;
- Transport network layer (TNL) available capacity;
- TNL load;
- Hardware capacity;
- Number of active user devices (e.g., number of active UEs) and/or number of user devices with an RRC connection (e.g., number of RRC connections) in a cell of the second system; and
- Number of active user devices and OR number of user devices with an RRC connection (e.g., number of RRC connections) for at least a radio cell of the second system.

In some embodiments, for each metric to be reported, the first RAN node may request the metric to be reported based on the occurrence of one or more reporting events. Each reporting event can be associated with one or more of the following:
- One or more cells of the second system;
- One or more frequency bandwidths, such as UL bandwidth, DL bandwidth, supplementary UL bandwidth, component carrier, etc.;
- One or more cell partitions of the second system, such as coverage area of DL beam RS (e.g., SSB, CSI-RS) transmitted in the cell; and
- One or more network slices, which may also be related to a cell of the second system.

In some embodiments, the first RAN node can configure one or more of the following triggering events for reporting:
1. **Report triggering event based on Radio Resource Status:** a report triggering event is defined based on a threshold value associated with the Radio Resource Status utilization associated with a cell or a cell partition of the second system. A threshold value could therefore be defined for one or more of the following:
   - threshold associated with the cell PRB usage, either in uplink, downlink or both;
   - threshold associated with the cell PRB usage, either in uplink, downlink or both, and for a specific type of traffic, such as GBR PRB, and/or non-GBR PRB;
   - threshold associated with the PRB usage per SSB Area in a cell, either in uplink, downlink or both;
   - threshold associated with the PRB usage per SSB Area in a cell, either in uplink, downlink or both, and for a specific type of traffic, such as GBR PRB, and/or non-GBR PRB;
   - threshold associated with the PRB usage per network slice in a cell, either in uplink, downlink or both; and
   - threshold associated with the PRB usage per network slice, either in uplink, downlink or both, and for a specific type of traffic, such as GBR PRB, and/or non-GBR PRB
   For example, a measurement report could be issued by the second network node if the PRB usage for the cell or a partition of the cell either exceeds or falls below a threshold value. In another example, the reporting thresholds above may be associated with a time period during which the metric needs to fulfil the threshold in order for a report to be triggered.
2. Report triggering event based on Available Capacity: a report triggering event is defined based on a threshold value associated with the available capacity for a cell or a cell partition of the second system. A threshold value could therefore be defined for one or more of the following:
   - cell composite available capacity (CAC);
   - composite available capacity per downlink reference signal beam area, such a composite available capacity per SSB Area;
   - available capacity of a network slice of the cell; and
   - available capacity of a network slice of a cell partition.
   For example, a measurement report could be issued by the second network node if the available capacity exceeds or falls below a threshold value. As another example, the reporting thresholds above may be associated with a time period during which the metric needs to fulfil the threshold in order for a metric report to be triggered.
3. **Report triggering event based on TNL Available Capacity (or TNL load):** a report triggering event is defined based on a threshold value associated with the TNL available capacity (or TNL load) for a cell or a cell partition of the second system. A threshold value could therefore be defined for one or more of the following cases:
   - TNL available capacity (or TNL load) of a cell for one or more network interfaces, such as the Xn, X2, NG, S 1, F1, E1, W1 interfaces; and
   - TNL available capacity (or TNL load) for a network slice and to one or more network interfaces, such as the Xn, X2, NG, S1, F1, and E1 interfaces.
   For example, the reporting thresholds above may be associated with a time period during which the metric needs to fulfil the threshold in order for a metric report to be triggered.
4. **Report triggering event based on number of active** UEs: a report triggering event is defined based on a threshold value associated with the number of active UEs in a cell a cell or a cell partition of the second system. A threshold value could therefore be defined for one or more of the following cases:
   - number of active UEs in a cell;
   - number of active UEs in the coverage area of a downlink reference signal, such number of active UEs per SSB area;
   - number of active UEs per network slice of the cell; and
   - number of active UEs per network slice within a cell partition, e.g., SSB coverage area.
   For example, the reporting thresholds above may be associated with a time period during which the metric needs to fulfil the threshold in order for a metric report to be triggered.
5. **Report triggering event based on Number of RRC connections:** a report triggering event is defined based on a threshold value associated with the number of RRC connection in a cell a cell or a cell partition of the second system. A threshold value could therefore be defined for one or more of the following cases:
   - number of RRC connections in a cell;
   - number of RRC connections in the coverage area of a downlink reference signal, such number of active UEs per SSB area;
   - number of RRC connections per network slice of the cell; and
   - number of RRC connections per network slice within a cell partition, such as within an SSB area.
   For example, the reporting thresholds above may be associated with a time period during which the metric needs to fulfil the threshold in order for a metric report to be triggered.
6. **Report triggering event based on hardware capacity (or hardware load):** a report triggering event is defined based on a threshold value associated with the hardware capacity (or hardware load) associated with a cell or a node of the second system. A threshold value could therefore be defined for one or more of the following cases:
   - hardware capacity (or hardware load) for a cell;
   - hardware capacity (or hardware load) for a network slice; and
   - hardware capacity (or hardware load) of a network node, such as eNB, gNB, ng-eNB, en-gNB, gNB-CU, gNB-CU, etc.
   For example, the reporting thresholds above may be associated with a time period during which the metric needs to fulfil the threshold in order for a metric report to be triggered.

As mentioned above, the first RAN node of system 1 can receive from the second RAN node of system 2 a RESOURCE STATUS RESPONSE message indicating the successful configuration of all or part of the measurements requested by the first RAN node. The RESOURCE STATUS RESPONSE message can include one or more of the following (which can be information elements, IEs, in the message):
- list indicating which of the requested metrics can be reported upon the occurrence of the triggering conditions defined by the first RAN node in the RESOURCE STATUS REQUEST message;
- list indicating which additionally metric the second RAN node could or will report in addition to the requested metrics; and
- reporting configuration that the second RAN node will use to report the requested measurements.

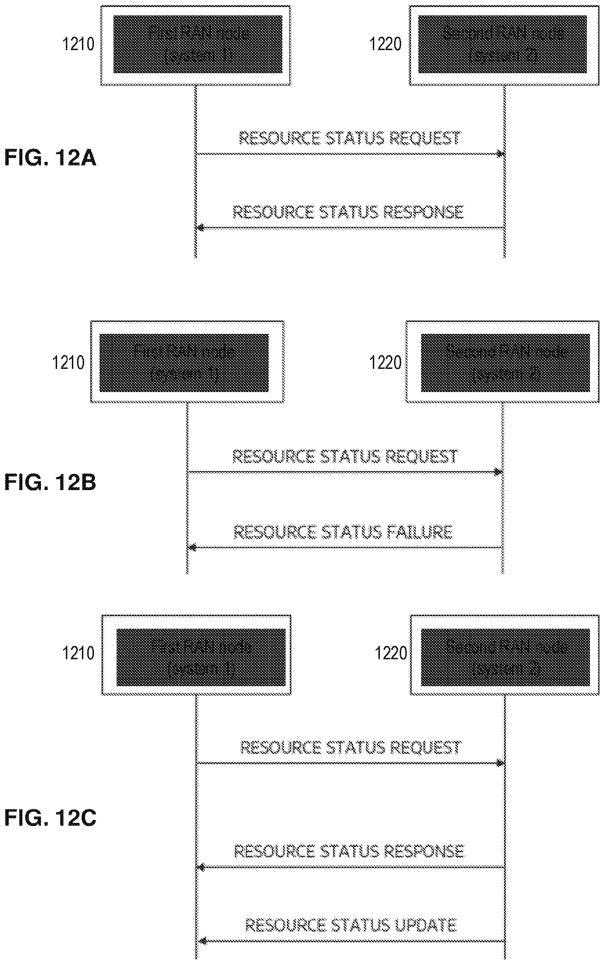

Figure 12A shows a signal flow diagram of an exemplary successful configuration of inter-system measurements reporting and report triggering events, according to various exemplary embodiments of the present disclosure. After transmitting the RESOURCE STATUS REQUEST message to a second RAN node (1220) of system 2, the first RAN node (1210) receives a RESOUIRCE STATUS RESPONSE message from the second RAN node indicating the successful configuration of all or part of the measurements requested by the first network node with the RESOURCE STATUS REQUEST message.

In some embodiments, the first RAN node of system 1 can receive from the second RAN node of system 2 a RESOURCE STATUS FAILURE message indicating the unsuccessful configuration for reporting the measurement requested by the first RAN node (e.g., in the RESOURCE STATUS REQUEST message). The RESOURCE STATUS FAILURE message can include one or more of the following (which can be information elements, IEs, in the message):
- indication of the cause for the procedure failure;
- list of metrics or types of measurements available at the second RAN node for reporting;
- list of threshold values associated with available metrics that are likely to be supported by the second RAN node;
- list of reporting conditions, such as type of reporting (periodic or single event-trigger report) preferred or supported by the second RAN node; and
- list of type of measurements supported by the second RAN node for each requested per metric, such as absolute value of the metric in a single measurement, statistical measurements over a period of time , such as mean, standard deviation, variance, etc.

Figure 12B shows a signal flow diagram of an exemplary unsuccessful configuration of inter-system measurements reporting and report triggering events, according to various exemplary embodiments of the present disclosure. After transmitting the RESOURCE STATUS REQUEST message to the second RAN node (1220), the first RAN node (1210) receives a RESOUIRCE STATUS RESPONSE message from the second RAN node indicating the unsuccessful configuration of one or more of the measurements requested by the first RAN node with the RESOURCE STATUS REQUEST message.

In case of a successful configuration (e.g., as illustrated in Figure 12B), the first RAN node can also receive from the second RAN node a RESOURCE STATUS UPDATE message reporting one or more measurements requested by the first network node according to the configuration. Figure 12C shows a signal flow diagram of an exemplary successful configuration of inter-system measurements reporting and report triggering events, followed by measurement reporting by the second RAN node, according to various exemplary embodiments of the present disclosure.

In some embodiments, the first RAN node can also transmit a RESOURCE STATUS ACKNOWLEDGE message to the second RAN node to acknowledge a message from the second RAN node, such as the RESOURCE STATUS RESPONSE message (shown in Figure 12A), the RESOURCE STATUS UPDATE message (shown in Figure 12C), and/or the RESOURCE STATUS FAILURE message (shown in Figure 12B).

The signaling methods described above and shown in Figure 12 are between RAN nodes residing in two different systems but are shown as if the logical connection between the two nodes is direct. However, the signaling must be forwarded between the two systems via intermediate CN nodes (e.g., MME, AMF). Even so, the logical connection can be considered a direct connection if the messages are transparent to the intermediate nodes that forward them.

In some embodiments, the various messages shown in Figure 12 and/or the information contained within these messages can be exchanged between the respective nodes in different systems via containers. An exemplary container is the *SON Configuration Transfer* IE defined for the NG interface. This IE includes a *SON Information* IE, which includes a *SON Information Request* field that has enumerated values that correspond to particular types of information being transferred. These embodiments are illustrated by the exemplary text below for 3GPP TS 38.413.

In some embodiments, a new enumerated value ("MLB Info") can be added to the *SON Information Request* field to indicate that the transfer is for MLB information. If *SON Information Request* is set to "MLB Info", then *the SON Information* IE can also include a *Resource Status Request* IE that includes the RESOURCE STATUS REQUEST message sent by the first RAN node. These embodiments are illustrated by the exemplary text below for 3GPP TS 38.413.

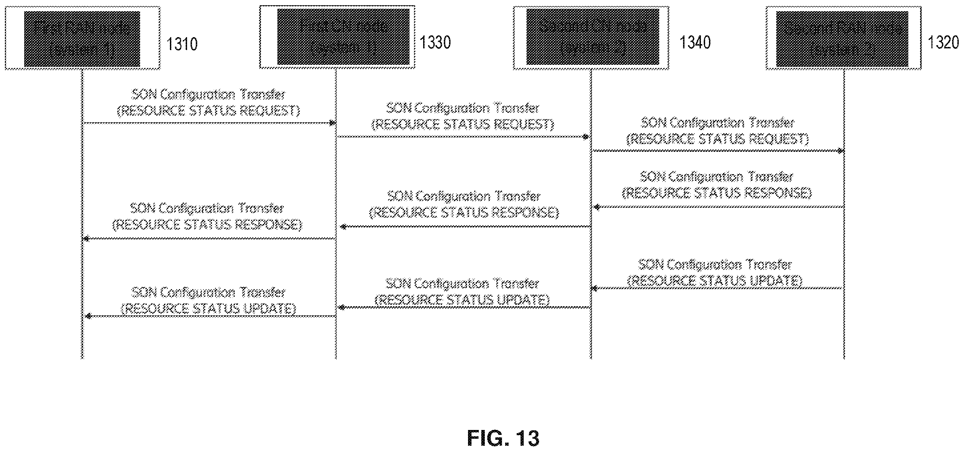

In addition, Figure 13 shows a signal flow diagram for inter-system resource reporting for MLB, according to various exemplary embodiments of the present disclosure. In particular, Figure 13 shows signaling between a first RAN node, a first CN node, a second RAN node, and a second CN node. The first RAN and CN nodes are in a first system (e.g., LTE/E-UTRAN/EPC) while the second RAN and CN nodes are in a second system (e.g., NR/NG-RAN/5GC). The messages shown in Figure 13 are described in the preceding and following text.

### *** Begin exemplary text for 3GPP TS 38.413 ***

### 9.3.3.6 SON Configuration Transfer

This IE contains the configuration information, used by e.g., SON functionality, and additionally includes the NG-RAN node identifier of the destination of this configuration information and the NG-RAN node identifier of the source of this information.

| **IE/Group Name** | | **Presence** | **Range** | **IE type/ref.** | **Semantics description** |
|---|---|---|---|---|---|
| Target RAN Node ID | | M | | | |
| | >Global RAN Node ID | M | | 9.3.1.5 | |
| | >Selected TAI | M | | TAI 9.3.3.11 | |
| Source RAN Node ID | | M | | | |
| | >Global RAN Node ID | M | | 9.3.1.5 | |
| | >Selected TAI | M | | TAI 9.3.3.11 | |
| SON Information | | M | | 9.3.3.7 | |
| Xn TNL Configuration Info | | C-ifSONInf ormation Request | | 9.3.3.9 | Source NG-RAN node Xn TNL Configuration Info. |

| Condition | Explanation |
|---|---|
| ifSONInformationRequest | This IE shall be present if the *SON Information* IE contains the *SON Information Request* IE set to "Xn TNL Configuration Info" |

### 9.3.3.7 SON Information

This IE identifies the nature of the configuration information transferred, i.e., a request, a reply or a report.

| **IE/Group Name** | | | **Presence** | **Range** | **IE type/ref.** | **Semantics description** |
|---|---|---|---|---|---|---|
| CHOICE *SON Information* | | | M | | | |
| | >*SON Information Request* | | | | | |
| | | >>SON Information Request | M | | ENUMERATED (Xn TNL Configuration Info, ..., MLB Info) | |
| | | >>Resource Status Request | | | | It contains information on load and capacity metrics to be reported and their reporting configuration |
| | >*SON Information Reply* | | | | | |
| | | >>SON Information Reply | M | | 9.3.3.8 | |
| | >*SON Information Report* | | | | | |
| | | >>SON Information Report | M | | 9.3.3.35 | |

### *** End exemplary text for 3GPP TS 38.413 ***

In some embodiments, if the first RAN node a *SON Information* IE containing the *Resource Status Request* IE, shown above, the second RAN Node may reply by sending a *SON Information* IE containing a *SON Information Reply* IE (see above). This IE can be enhanced to include a *Resource Status Response* IE that includes the RESOURCE STATUS RESPONSE message (or its contents) discussed above.

Once the first and second RAN nodes have successfully completed configuration of reporting, the second RAN node can report metrics values to the first RAN node by signaling a *SON Information* IE containing a *SON Information Report* IE. This IE can be enhanced to include a *MLB Information* IE that includes the RESOURCE STATUS UPDATE message (or its contents) discussed above.

These embodiments are illustrated by the exemplary text below for 3GPP TS 38.413.

### *** Begin exemplary text for 3GPP TS 38.413 ***

### 9.3.3.8 SON Information Reply

This IE contains the configuration information to be replied to the NG-RAN node.

| **IE/Group Name** | **Presence** | **Range** | **IE type/ref.** | **Semantics description** |
|---|---|---|---|---|
| Xn TNL Configuration Info | O | | 9.3.3.9 | |
| Resource Status Response | | | | Describes load and capacity metrics that have been successfully configured |

### 9.3.3.35 SON Information Report

This IE contains the configuration information to be transferred.

| **IE/Group Name** | | | **Presence** | **Range** | **IE type/ref.** | **Semantics description** |
|---|---|---|---|---|---|---|
| CHOICE *SON Information Report* | | | M | | | |
| | >*Failure Indication Information* | | | | | |
| | | >>Failure Indication | M | | 9.3.3.37 | |
| | >*HO Report Information* | | | | | |
| | | >>HO Report | M | | 9.3.3.38 | |
| | >*MLB Information* | | | | | |
| | | >>Resource Status Update | | | | Reports load and capacity metrics and events configured for MLB |

### *** End exemplary text for 3GPP TS 38.413 ***

Other embodiments include complementary methods performed by the second RAN node of a second system for inter-system resource reporting and MLB. The second RAN node can receive a RESOURCE STATUS REQUEST message from the first RAN node of the first system indicating a reporting configuration comprising one or more of the following:
- a list of metrics or measurements to be reported;
- a report triggering event associated with one or more metrics of the list defining the conditions for starting the reporting of the associated metric from the second RAN node to the first RAN node; and
- a reporting configuration, associated with one or more metrics in the list, that defines how the measurements for the associated metric(s) should be reported to the first RAN node upon a report triggering event. The reporting configuration may indicate that the second RAN node should transmit one or more of the following:
   ∘ a single measurement report to the first RAN node upon the occurrence of a report triggering event for at least one metric
   ∘ a single measurement report to the first RAN node upon the occurrence of a triggering event that holds continuously for a set amount of time for at least one metric, for example a given metric is higher than a threshold for a set time window
   ∘ multiple measurement reports to the first RAN node upon the occurrence of a report triggering event for at least one metric, such as reporting measurements periodically according to a reporting period (which could be indicated by the reporting configuration or chosen by the second RAN node).

In response to receiving the RESOURCE STATUS REQUEST message, the second RAN node can transmit to the first RAN node a response comprising one of the following:
- When the second RAN node can support at least some of the requested reporting configuration, a RESOURCE STATUS RESPONSE message indicating the successful configuration of all or part of the measurements requested by the first RAN node with the RESOURCE STATUS REQUEST message.
- When the second RAN node cannot support any of the requested reporting configuration, a RESOURCE STATUS FAILURE message indicating the unsuccessful configuration of any of the measurements requested by the first RAN node with the RESOURCE STATUS REQUEST message.

In some embodiments, the second RAN node can also perform one or more of the following operations:
- Monitoring whether the reporting conditions indicated in the RESOURCE STATUS REQUEST message are fulfilled;
- When at least one reporting condition indicated in the RESOURCE STATUS REQUEST message is fulfilled, determining and/or forming one or more measurement reports based on the RESOURCE STATUS REQUEST message; and
- Transmitting to the first RAN node a RESOURCE STATUS UPDATE message including one or more measurements requested by the first RAN node (i.e., the measurement reports).

In some embodiments, the second RAN node can also receive a RESOURCE STATUS ACKNOWLEDGE message from the first RAN node, indicating the successful reception of the RESOURCE STATUS RESPONSE message, the RESOURCE STATUS UPDATE message, and/or the RESOURCE STATUS FAILURE message.

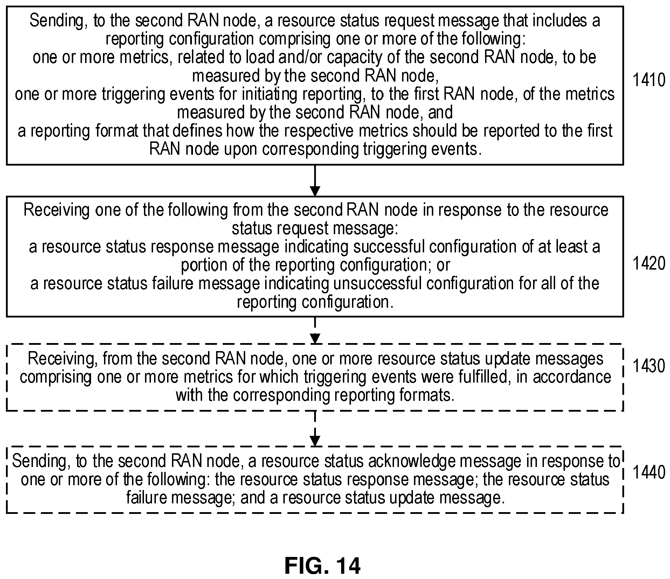

These embodiments described above can be further illustrated by Figures 14-15, which depict exemplary methods (e.g., procedures) for a first RAN node and a second RAN node, respectively. In other words, various features of the operations described below correspond to various embodiments described above. Although Figures 14-15 show specific blocks in particular orders, the operations corresponding to the blocks can be performed in different orders than shown and can be combined and/or divided into blocks having different functionality than shown. Furthermore, the exemplary methods shown in Figures 14-15 can be used cooperatively to provide the benefits, advantages, and/or solutions to problems described herein. Optional blocks and/or operations are indicated by dashed lines.

In particular, Figure 14 illustrates an exemplary method (e.g., procedure) for inter-system mobility load balancing (MLB) with a second RAN node in a second RAN, according to various exemplary embodiments of the present disclosure. The exemplary method can be performed by a first RAN node (e.g., base station, eNB, gNB, ng-eNB, en-gNB, etc. or component thereof, such as a gNB-CU or gNB-DU) in a first RAN, such as described elsewhere herein.

The exemplary method can include the operations of block 1410, where the first RAN node can send, to the second RAN node, a resource status request message (e.g., RESOURCE STATUS REQUEST) that includes a reporting configuration. The reporting configuration can include one or more of the following:
- one or more metrics, related to load and/or capacity of the second RAN node, to be measured by the second RAN node,
- one or more triggering events for initiating reporting, to the first RAN node, of the metrics measured by the second RAN node, and
- a reporting format that defines how the respective metrics should be reported to the first RAN node upon corresponding triggering events.

The exemplary method can also include the operations of block 1420, where the first RAN node can receive one of the following from the second RAN node in response to the resource status request message: a resource status response message (e.g., RESOURCE STATUS RESPONSE) indicating successful configuration of at least a portion of the reporting configuration, or a resource status failure message (e.g., RESOURCE STATUS FAILURE) indicating unsuccessful configuration for all of the reporting configuration.

In some embodiments, the exemplary method can also include the operations of block 1430, in which after receiving the resource status response message, the first RAN node can receive, from the second RAN node, one or more resource status update messages comprising one or more metrics for which triggering events were fulfilled, in accordance with the corresponding reporting formats. In some of these embodiments, the reporting configuration can include a plurality of metrics. In some cases, each resource status update message indicates that one of the metrics fulfilled the corresponding triggering event. In some cases, each resource status update message can also include values for metrics that did not fulfil their corresponding triggering events. Combination of these cases is also possible.

In some embodiments, the exemplary method can also include the operations of block 1440, in which the first RAN node send, to the second RAN node, a resource status acknowledge message in response to one or more of the following: the resource status response message; the resource status failure message; and the resource status update message.

In some embodiments, each of the one or more metrics is related to one of the following:
- radio resource status;
- composite available capacity;
- available capacity for a network slice;
- available capacity for a transport network layer (TNL);
- TNL load;
- hardware capacity;
- number of active user equipment (UEs); and
- number of UEs in RRC _CONNECTED state.

In some of these embodiments, each of the one or more metrics is also related to one or more of the following:
- a particular cell served by the second RAN node;
- a particular beam coverage area or other type of cell partition;
- uplink or downlink direction;
- a particular frequency bandwidth;
- a particular type of traffic;
- a particular network interface;
- a particular network slice; and
- a particular hardware unit of the second RAN node.

In some embodiments, each triggering event can be specified in relation to its corresponding metric based on one or more of the following:
- an explicit event upon which reporting of the corresponding metric is initiated;
- a threshold amount associated with the metric, above or below which reporting is initiated;
- a first threshold period that the metric must be above or below the associated threshold amount before reporting is initiated;
- a threshold rate of change of the metric, above which reporting is initiated; and
- a second threshold period that the rate of change of the metric must be above the threshold rate of change, before reporting is initiated.

In some embodiments, for each metric, the reporting format can indicate that the second RAN node should transmit one of the following:
- a single report upon occurrence of the corresponding triggering event;
- a single report upon continued occurrence of the corresponding triggering event for at least a threshold period;
- periodic reports upon occurrence of the corresponding triggering event; and
- periodic reports upon continued occurrence of the corresponding triggering event for at least a threshold period.

In some of these embodiments, a first metric can be associated with first and second triggering events. In such embodiments, occurrence of the first triggering event initiates a single report of the first metric and occurrence of the second triggering event initiates periodic reports of the first metric. In some of these embodiments, the reporting format (e.g., sent in block 1410) can also include respective reporting periods for all configured periodic reports. For example, resource status update messages can be received periodically in block 1430 according to the reporting period associated with the metric(s) being reported.

In some embodiments, the first RAN (including the first RAN node) is one of an E-UTRAN and an NG-RAN and the second RAN (including the second RAN node) is the other of the E-UTRAN and the NG-RAN.

In some embodiments, the resource status response message (e.g., received in block 1420) includes at least one of the following:
- a first indication of the portion of the reporting configuration that the second RAN node can support;
- a second indication of a further reporting configuration to be used by the second RAN node, including at least the portion of the reporting configuration; and
- one or more of the following supported by the second RAN node:
   ∘ one or more further metrics or measurements related to load and/or capacity of the second RAN node,
   ∘ one or more further triggering events for initiating reporting of the one or more metrics and/or the one or more further metrics, and
   ∘ one or more further reporting formats for the one or more metrics and/or the one or more further metrics.

Examples of each of these contents were discussed above in relation to the exemplary RESOURCE STATUS RESPONSE message.

In some embodiments, the resource status failure message (e.g., received in block 1420) includes at least one of the following:
- an indication of a cause for the unsuccessful configuration; and
- one or more of the following supported by the second RAN node:
   ∘ one or more further metrics or measurements related to load and/or capacity of the second RAN node,
   ∘ one or more further triggering events for initiating reporting of the one or more metrics and/or the one or more further metrics, and
   ∘ one or more further reporting formats for the one or more metrics and/or the one or more further metrics.

Examples of each of these contents were discussed above in relation to the exemplary RESOURCE STATUS FAIULRE message.

In some embodiments, the resource status request message is sent (e.g., in block 1410) in a first message container to a first CN node coupled to the first RAN. The first message container includes an explicit indication that the first message container includes the resource status request message. Additionally, the resource status response message or the resource status failure message is received (e.g., in block 1420) in a second message container from the first CN node. Figure 13 illustrates an example of these embodiments.

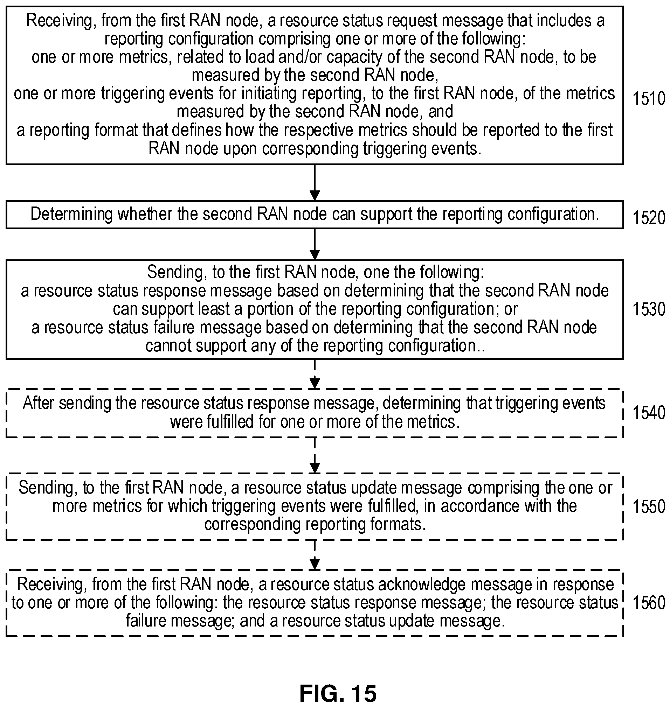

In addition, Figure 15 illustrates an exemplary method (e.g., procedure) for inter-system mobility load balancing (MLB) with a first RAN node in a first system of the wireless network, according to various exemplary embodiments of the present disclosure. The exemplary method shown in Figure 15 can be performed by a second RAN node (e.g., base station, eNB, gNB, ng-eNB, en-gNB, etc. or component thereof, such as a gNB-CU or gNB-DU) in a second RAN (i.e., a different RAN than the first RAN), such as illustrated in other figures described herein.

The exemplary method can include the operations of block 1510, where the second RAN node can receive, from the first RAN node, a resource status request message that includes a reporting configuration. The reporting configuration can include one or more of the following:
- one or more metrics, related to load and/or capacity of the second RAN node, to be measured by the second RAN node,
- one or more triggering events for initiating reporting, to the first RAN node, of the metrics measured by the second RAN node, and
- a reporting format that defines how the respective metrics should be reported to the first RAN node upon corresponding triggering events.

The exemplary method can also include the operations of block 1520, where the second RAN node can determine whether it can support the reporting configuration. The exemplary method can also include the operations of block 1530, where the second RAN node can send, to the first RAN node, one the following: a resource status response message based on determining that the second RAN node can support least a portion of the reporting configuration, a resource status failure message based on determining that the second RAN node cannot support any of the reporting configuration.

In some embodiments, the exemplary method can also include the operations of blocks 1540-1550. In block 1540, after sending the resource status response message, the second RAN node can determine that triggering events were fulfilled for one or more of the metrics. In block 1550, the second RAN node can send, to the first RAN node, one or more resource status update messages comprising the one or more metrics for which triggering events were fulfilled, in accordance with the corresponding reporting formats. In some of these embodiments, the reporting configuration can include a plurality of metrics. In some cases, each resource status update message indicates that one of the metrics fulfilled the corresponding triggering event. In some cases, each resource status update message can also include values for metrics that did not fulfil their corresponding triggering events. Combination of these cases is also possible.

In some embodiments, the exemplary method can also include the operations of block 1560, where the second RAN node can receive, from the first RAN node, a resource status acknowledge message in response to one or more of the following: the resource status response message; the resource status failure message; and the resource status update message.

In some embodiments, each of the one or more metrics is related to one of the following:
- radio resource status;
- composite available capacity;
- available capacity for a network slice;
- available capacity for a transport network layer (TNL);
- TNL load;
- hardware capacity;
- number of active user equipment (UEs); and
- number of UEs in RRC _CONNECTED state.

In some of these embodiments, each of the one or more metrics is also related to one or more of the following:
- a particular cell served by the second RAN node;
- a particular beam coverage area or other type of cell partition;
- uplink or downlink direction;
- a particular frequency bandwidth;
- a particular type of traffic;
- a particular network interface;
- a particular network slice; and
- a particular hardware unit of the second RAN node.

In some embodiments, each triggering event can be specified in relation to its corresponding metric based on one or more of the following:
- an explicit event upon which reporting of the corresponding metric is initiated;
- a threshold amount associated with the metric, above or below which reporting is initiated;
- a first threshold period that the metric must be above or below the associated threshold amount before reporting is initiated;
- a threshold rate of change of the metric, above which reporting is initiated; and
- a second threshold period that the rate of change of the metric must be above the threshold rate of change, before reporting is initiated.

In some embodiments, for each metric, the reporting format can indicate that the second RAN node should transmit one of the following:
- a single report upon occurrence of the corresponding triggering event;
- a single report upon continued occurrence of the corresponding triggering event for at least a threshold period;
- periodic reports upon occurrence of the corresponding triggering event; and
- periodic reports upon continued occurrence of the corresponding triggering event for at least a threshold period.

In some of these embodiments, a first metric can be associated with first and second triggering events. In such embodiments, occurrence of the first triggering event initiates a single report of the first metric and occurrence of the second triggering event initiates periodic reports of the first metric. In some of these embodiments, the reporting format (e.g., received in block 1510) can also include respective reporting periods for all configured periodic reports. For example, resource status update messages can be sent periodically in block 1550 according to the reporting period associated with the metric(s) being reported.

In some embodiments, the first RAN (including the first RAN node) is one of an E-UTRAN and an NG-RAN and the second RAN (including the second RAN node) is the other of the E-UTRAN and the NG-RAN.

In some embodiments, the resource status response message (e.g., sent in block 1530) includes at least one of the following:
- a first indication of the portion of the reporting configuration that the second RAN node can support;
- a second indication of a further reporting configuration to be used by the second RAN node, including at least the portion of the reporting configuration; and
- one or more of the following supported by the second RAN node:
   ∘ one or more further metrics or measurements related to load and/or capacity of the second RAN node,
   ∘ one or more further triggering events for initiating reporting of the one or more metrics and/or the one or more further metrics, and
   ∘ one or more further reporting formats for the one or more metrics and/or the one or more further metrics.

Examples of each of these contents were discussed above in relation to the exemplary RESOURCE STATUS RESPONSE message.

In some embodiments, the resource status failure message (e.g., sent in block 1530) includes at least one of the following:
- an indication of a cause for the unsuccessful configuration; and
- one or more of the following supported by the second RAN node:
   ∘ one or more further metrics or measurements related to load and/or capacity of the second RAN node,
   ∘ one or more further triggering events for initiating reporting of the one or more metrics and/or the one or more further metrics, and
   ∘ one or more further reporting formats for the one or more metrics and/or the one or more further metrics.

Examples of each of these contents were discussed above in relation to the exemplary RESOURCE STATUS FAIULRE message.

In some embodiments, the resource status request message is received (e.g., in block 1510) in a first message container from a second CN node coupled to the second RAN. The first message container includes an explicit indication that the first message container includes the resource status request message. Additionally, the resource status response message or the resource status failure message is sent (e.g., in block 1530) in a second message container to the second CN node. Figure 13 illustrates an example of these embodiments.

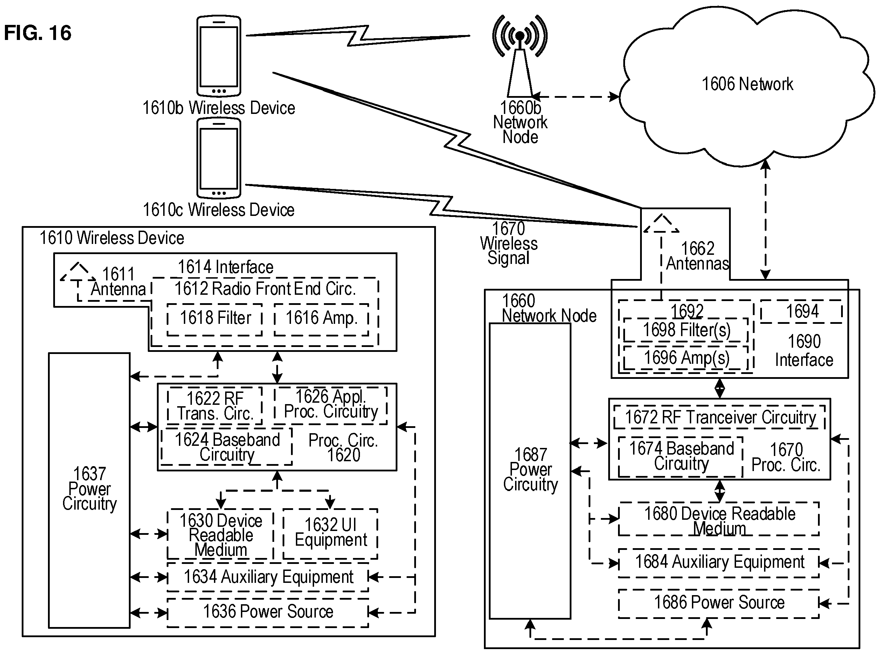

Although the subject matter described herein can be implemented in any appropriate type of system using any suitable components, the embodiments disclosed herein are described in relation to a wireless network, such as the example wireless network illustrated in Figure 16. For simplicity, the wireless network of Figure 16 only depicts network 1606, network nodes 1660 and 1660b, and WDs 1610, 1610b, and 1610c. In practice, a wireless network can further include any additional elements suitable to support communication between wireless devices or between a wireless device and another communication device, such as a landline telephone, a service provider, or any other network node or end device. Of the illustrated components, network node 1660 and wireless device (WD) 1610 are depicted with additional detail. The wireless network can provide communication and other types of services to one or more wireless devices to facilitate the wireless devices' access to and/or use of the services provided by, or via, the wireless network.

The wireless network can comprise and/or interface with any type of communication, telecommunication, data, cellular, and/or radio network or other similar type of system. In some embodiments, the wireless network can be configured to operate according to specific standards or other types of predefined rules or procedures. Thus, particular embodiments of the wireless network can implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 1606 can comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 1660 and WD 1610 comprise various components described in more detail below. These components work together in order to provide network node and/or wireless device functionality, such as providing wireless connections in a wireless network. In different embodiments, the wireless network can comprise any number of wired or wireless networks, network nodes, base stations, controllers, wireless devices, relay stations, and/or any other components or systems that can facilitate or participate in the communication of data and/or signals whether via wired or wireless connections.

Examples of network nodes include, but are not limited to, access points (APs) *(e.g.,* radio access points), base stations (BSs) *(e.g.,* radio base stations, Node Bs, evolved Node Bs (eNBs) and NR NodeBs (gNBs)). Base stations can be categorized based on the amount of coverage they provide (or, stated differently, their transmit power level) and can then also be referred to as femto base stations, pico base stations, micro base stations, or macro base stations. A base station can be a relay node or a relay donor node controlling a relay. A network node can also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station can also be referred to as nodes in a distributed antenna system (DAS).

Further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node can be a virtual network node as described in more detail below. More generally, however, network nodes can represent any suitable device (or group of devices) capable, configured, arranged, and/or operable to enable and/or provide a wireless device with access to the wireless network or to provide some service to a wireless device that has accessed the wireless network.

In Figure 16, network node 1660 includes processing circuitry 1670, device readable medium 1680, interface 1690, auxiliary equipment 1684, power source 1686, power circuitry 1687, and antenna 1662. Although network node 1660 illustrated in the example wireless network of Figure 16 can represent a device that includes the illustrated combination of hardware components, other embodiments can comprise network nodes with different combinations of components. It is to be understood that a network node comprises any suitable combination of hardware and/or software needed to perform the tasks, features, functions and methods and/or procedures disclosed herein. Moreover, while the components of network node 1660 are depicted as single boxes located within a larger box, or nested within multiple boxes, in practice, a network node can comprise multiple different physical components that make up a single illustrated component (*e.g.*, device readable medium 1680 can comprise multiple separate hard drives as well as multiple RAM modules).

Similarly, network node 1660 can be composed of multiple physically separate components (*e.g.*, a NodeB component and a RNC component, or a BTS component and a BSC component, *etc.),* which can each have their own respective components. In certain scenarios in which network node 1660 comprises multiple separate components (e.g., BTS and BSC components), one or more of the separate components can be shared among several network nodes. For example, a single RNC can control multiple NodeB's. In such a scenario, each unique NodeB and RNC pair, can in some instances be considered a single separate network node. In some embodiments, network node 1660 can be configured to support multiple radio access technologies (RATs). In such embodiments, some components can be duplicated (e.g., separate device readable medium 1680 for the different RATs) and some components can be reused (e.g., the same antenna 1662 can be shared by the RATs). Network node 1660 can also include multiple sets of the various illustrated components for different wireless technologies integrated into network node 1660, such as, for example, GSM, WCDMA, LTE, NR, WiFi, or Bluetooth wireless technologies. These wireless technologies can be integrated into the same or different chip or set of chips and other components within network node 1660.

Processing circuitry 1670 can be configured to perform any determining, calculating, or similar operations (*e*.*g*., certain obtaining operations) described herein as being provided by a network node. These operations performed by processing circuitry 1670 can include processing information obtained by processing circuitry 1670 by, for example, converting the obtained information into other information, comparing the obtained information or converted information to information stored in the network node, and/or performing one or more operations based on the obtained information or converted information, and as a result of said processing making a determination.

Processing circuitry 1670 can comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide various functionality of network node 1660, either alone or in conjunction with other network node 1660 components (e.g., device readable medium 1680). Such functionality can include any of the various wireless features, functions, or benefits discussed herein.

For example, processing circuitry 1670 can execute instructions stored in device readable medium 1680 or in memory within processing circuitry 1670. In some embodiments, processing circuitry 1670 can include a system on a chip (SOC). As a more specific example, instructions (also referred to as a computer program product) stored in medium 1680 can include instructions that, when executed by processing circuitry 1670, can configure network node 1660 to perform operations corresponding to various exemplary methods (e.g., procedures) described herein.

In some embodiments, processing circuitry 1670 can include one or more of radio frequency (RF) transceiver circuitry 1672 and baseband processing circuitry 1674. In some embodiments, radio frequency (RF) transceiver circuitry 1672 and baseband processing circuitry 1674 can be on separate chips (or sets of chips), boards, or units, such as radio units and digital units. In alternative embodiments, part or all of RF transceiver circuitry 1672 and baseband processing circuitry 1674 can be on the same chip or set of chips, boards, or units.

In certain embodiments, some or all of the functionality described herein as being provided by a network node, base station, eNB or other such network device can be performed by processing circuitry 1670 executing instructions stored on device readable medium 1680 or memory within processing circuitry 1670. In alternative embodiments, some or all of the functionality can be provided by processing circuitry 1670 without executing instructions stored on a separate or discrete device readable medium, such as in a hard-wired manner. In any of those embodiments, whether executing instructions stored on a device readable storage medium or not, processing circuitry 1670 can be configured to perform the described functionality. The benefits provided by such functionality are not limited to processing circuitry 1670 alone or to other components of network node 1660 but are enjoyed by network node 1660 as a whole, and/or by end users and the wireless network generally.

Device readable medium 1680 can comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that can be used by processing circuitry 1670. Device readable medium 1680 can store any suitable instructions, data or information, including a computer program, software, an application including one or more of logic, rules, code, tables, *etc.* and/or other instructions capable of being executed by processing circuitry 1670 and, utilized by network node 1660. Device readable medium 1680 can be used to store any calculations made by processing circuitry 1670 and/or any data received via interface 1690. In some embodiments, processing circuitry 1670 and device readable medium 1680 can be considered to be integrated.

Interface 1690 is used in the wired or wireless communication of signaling and/or data between network node 1660, network 1606, and/or WDs 1610. As illustrated, interface 1690 comprises port(s)/terminal(s) 1694 to send and receive data, for example to and from network 1606 over a wired connection. Interface 1690 also includes radio front end circuitry 1692 that can be coupled to, or in certain embodiments a part of, antenna 1662. Radio front end circuitry 1692 comprises filters 1698 and amplifiers 1696. Radio front end circuitry 1692 can be connected to antenna 1662 and processing circuitry 1670. Radio front end circuitry can be configured to condition signals communicated between antenna 1662 and processing circuitry 1670. Radio front end circuitry 1692 can receive digital data that is to be sent out to other network nodes or WDs via a wireless connection. Radio front end circuitry 1692 can convert the digital data into a radio signal having the appropriate channel and bandwidth parameters using a combination of filters 1698 and/or amplifiers 1696. The radio signal can then be transmitted via antenna 1662. Similarly, when receiving data, antenna 1662 can collect radio signals which are then converted into digital data by radio front end circuitry 1692. The digital data can be passed to processing circuitry 1670. In other embodiments, the interface can comprise different components and/or different combinations of components.

In certain alternative embodiments, network node 1660 may not include separate radio front end circuitry 1692, instead, processing circuitry 1670 can comprise radio front end circuitry and can be connected to antenna 1662 without separate radio front end circuitry 1692. Similarly, in some embodiments, all or some of RF transceiver circuitry 1672 can be considered a part of interface 1690. In still other embodiments, interface 1690 can include one or more ports or terminals 1694, radio front end circuitry 1692, and RF transceiver circuitry 1672, as part of a radio unit (not shown), and interface 1690 can communicate with baseband processing circuitry 1674, which is part of a digital unit (not shown).

Antenna 1662 can include one or more antennas, or antenna arrays, configured to send and/or receive wireless signals. Antenna 1662 can be coupled to radio front end circuitry 1690 and can be any type of antenna capable of transmitting and receiving data and/or signals wirelessly. In some embodiments, antenna 1662 can comprise one or more omni-directional, sector or panel antennas operable to transmit/receive radio signals between, for example, 2 GHz and 66 GHz. An omni-directional antenna can be used to transmit/receive radio signals in any direction, a sector antenna can be used to transmit/receive radio signals from devices within a particular area, and a panel antenna can be a line of sight antenna used to transmit/receive radio signals in a relatively straight line. In some instances, the use of more than one antenna can be referred to as MIMO. In certain embodiments, antenna 1662 can be separate from network node 1660 and can be connectable to network node 1660 through an interface or port.

Antenna 1662, interface 1690, and/or processing circuitry 1670 can be configured to perform any receiving operations and/or certain obtaining operations described herein as being performed by a network node. Any information, data and/or signals can be received from a wireless device, another network node and/or any other network equipment. Similarly, antenna 1662, interface 1690, and/or processing circuitry 1670 can be configured to perform any transmitting operations described herein as being performed by a network node. Any information, data and/or signals can be transmitted to a wireless device, another network node and/or any other network equipment.

Power circuitry 1687 can comprise, or be coupled to, power management circuitry and can be configured to supply the components of network node 1660 with power for performing the functionality described herein. Power circuitry 1687 can receive power from power source 1686. Power source 1686 and/or power circuitry 1687 can be configured to provide power to the various components of network node 1660 in a form suitable for the respective components (e.g., at a voltage and current level needed for each respective component). Power source 1686 can either be included in, or external to, power circuitry 1687 and/or network node 1660. For example, network node 1660 can be connectable to an external power source (e.g., an electricity outlet) via an input circuitry or interface such as an electrical cable, whereby the external power source supplies power to power circuitry 1687. As a further example, power source 1686 can comprise a source of power in the form of a battery or battery pack which is connected to, or integrated in, power circuitry 1687. The battery can provide backup power should the external power source fail. Other types of power sources, such as photovoltaic devices, can also be used.

Alternative embodiments of network node 1660 can include additional components beyond those shown in Figure 16 that can be responsible for providing certain aspects of the network node's functionality, including any of the functionality described herein and/or any functionality necessary to support the subject matter described herein. For example, network node 1660 can include user interface equipment to allow and/or facilitate input of information into network node 1660 and to allow and/or facilitate output of information from network node 1660. This can allow and/or facilitate a user to perform diagnostic, maintenance, repair, and other administrative functions for network node 1660.

In some embodiments, a wireless device (WD, e.g., WD 1610) can be configured to transmit and/or receive information without direct human interaction. For instance, a WD can be designed to transmit information to a network on a predetermined schedule, when triggered by an internal or external event, or in response to requests from the network. Examples of a WD include, but are not limited to, smart phones, mobile phones, cell phones, voice over IP (VoIP) phones, wireless local loop phones, desktop computers, personal digital assistants (PDAs), wireless cameras, gaming consoles or devices, music storage devices, playback appliances, wearable devices, wireless endpoints, mobile stations, tablets, laptops, laptop-embedded equipment (LEE), laptop-mounted equipment (LME), smart devices, wireless customer-premise equipment (CPE), mobile-type communication (MTC) devices, Internet-of-Things (IoT) devices, vehicle-mounted wireless terminal devices, *etc.*

A WD can support device-to-device (D2D) communication, for example by implementing a 3GPP standard for sidelink communication, vehicle-to-vehicle (V2V), vehicle-to-infrastructure (V2I), vehicle-to-everything (V2X) and can in this case be referred to as a D2D communication device. As yet another specific example, in an Internet of Things (IoT) scenario, a WD can represent a machine or other device that performs monitoring and/or measurements and transmits the results of such monitoring and/or measurements to another WD and/or a network node. The WD can in this case be a machine-to-machine (M2M) device, which can in a 3GPP context be referred to as an MTC device. As one particular example, the WD can be a UE implementing the 3GPP narrow band internet of things (NB-IoT) standard. Particular examples of such machines or devices are sensors, metering devices such as power meters, industrial machinery, or home or personal appliances (*e*.*g*., refrigerators, televisions, *etc*.) personal wearables (*e*.*g*., watches, fitness trackers, *etc*.). In other scenarios, a WD can represent a vehicle or other equipment that is capable of monitoring and/or reporting on its operational status or other functions associated with its operation. A WD as described above can represent the endpoint of a wireless connection, in which case the device can be referred to as a wireless terminal. Furthermore, a WD as described above can be mobile, in which case it can also be referred to as a mobile device or a mobile terminal.

As illustrated, wireless device 1610 includes antenna 1611, interface 1614, processing circuitry 1620, device readable medium 1630, user interface equipment 1632, auxiliary equipment 1634, power source 1636 and power circuitry 1637. WD 1610 can include multiple sets of one or more of the illustrated components for different wireless technologies supported by WD 1610, such as, for example, GSM, WCDMA, LTE, NR, WiFi, WiMAX, or Bluetooth wireless technologies, just to mention a few. These wireless technologies can be integrated into the same or different chips or set of chips as other components within WD 1610.

Antenna 1611 can include one or more antennas or antenna arrays, configured to send and/or receive wireless signals, and is connected to interface 1614. In certain alternative embodiments, antenna 1611 can be separate from WD 1610 and be connectable to WD 1610 through an interface or port. Antenna 1611, interface 1614, and/or processing circuitry 1620 can be configured to perform any receiving or transmitting operations described herein as being performed by a WD. Any information, data and/or signals can be received from a network node and/or another WD. In some embodiments, radio front end circuitry and/or antenna 1611 can be considered an interface.

As illustrated, interface 1614 comprises radio front end circuitry 1612 and antenna 1611. Radio front end circuitry 1612 comprise one or more filters 1618 and amplifiers 1616. Radio front end circuitry 1614 is connected to antenna 1611 and processing circuitry 1620 and can be configured to condition signals communicated between antenna 1611 and processing circuitry 1620. Radio front end circuitry 1612 can be coupled to or a part of antenna 1611. In some embodiments, WD 1610 may not include separate radio front end circuitry 1612; rather, processing circuitry 1620 can comprise radio front end circuitry and can be connected to antenna 1611. Similarly, in some embodiments, some or all of RF transceiver circuitry 1622 can be considered a part of interface 1614. Radio front end circuitry 1612 can receive digital data that is to be sent out to other network nodes or WDs via a wireless connection. Radio front end circuitry 1612 can convert the digital data into a radio signal having the appropriate channel and bandwidth parameters using a combination of filters 1618 and/or amplifiers 1616. The radio signal can then be transmitted via antenna 1611. Similarly, when receiving data, antenna 1611 can collect radio signals which are then converted into digital data by radio front end circuitry 1612. The digital data can be passed to processing circuitry 1620. In other embodiments, the interface can comprise different components and/or different combinations of components.

Processing circuitry 1620 can comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide WD 1610 functionality either alone or in combination with other WD 1610 components, such as device readable medium 1630. Such functionality can include any of the various wireless features or benefits discussed herein.

For example, processing circuitry 1620 can execute instructions stored in device readable medium 1630 or in memory within processing circuitry 1620 to provide the functionality disclosed herein. More specifically, instructions (also referred to as a computer program product) stored in medium 1630 can include instructions that, when executed by processor 1620, can configure wireless device 1610 to perform operations corresponding to various exemplary methods (e.g., procedures) described herein.

As illustrated, processing circuitry 1620 includes one or more of RF transceiver circuitry 1622, baseband processing circuitry 1624, and application processing circuitry 1626. In other embodiments, the processing circuitry can comprise different components and/or different combinations of components. In certain embodiments processing circuitry 1620 of WD 1610 can comprise a SOC. In some embodiments, RF transceiver circuitry 1622, baseband processing circuitry 1624, and application processing circuitry 1626 can be on separate chips or sets of chips. In alternative embodiments, part or all of baseband processing circuitry 1624 and application processing circuitry 1626 can be combined into one chip or set of chips, and RF transceiver circuitry 1622 can be on a separate chip or set of chips. In still alternative embodiments, part or all of RF transceiver circuitry 1622 and baseband processing circuitry 1624 can be on the same chip or set of chips, and application processing circuitry 1626 can be on a separate chip or set of chips. In yet other alternative embodiments, part or all of RF transceiver circuitry 1622, baseband processing circuitry 1624, and application processing circuitry 1626 can be combined in the same chip or set of chips. In some embodiments, RF transceiver circuitry 1622 can be a part of interface 1614. RF transceiver circuitry 1622 can condition RF signals for processing circuitry 1620.

In certain embodiments, some or all of the functionality described herein as being performed by a WD can be provided by processing circuitry 1620 executing instructions stored on device readable medium 1630, which in certain embodiments can be a computer-readable storage medium. In alternative embodiments, some or all of the functionality can be provided by processing circuitry 1620 without executing instructions stored on a separate or discrete device readable storage medium, such as in a hard-wired manner. In any of those particular embodiments, whether executing instructions stored on a device readable storage medium or not, processing circuitry 1620 can be configured to perform the described functionality. The benefits provided by such functionality are not limited to processing circuitry 1620 alone or to other components of WD 1610, but are enjoyed by WD 1610 as a whole, and/or by end users and the wireless network generally.

Processing circuitry 1620 can be configured to perform any determining, calculating, or similar operations (*e.g*., certain obtaining operations) described herein as being performed by a WD. These operations, as performed by processing circuitry 1620, can include processing information obtained by processing circuitry 1620 by, for example, converting the obtained information into other information, comparing the obtained information or converted information to information stored by WD 1610, and/or performing one or more operations based on the obtained information or converted information, and as a result of said processing making a determination.

Device readable medium 1630 can be operable to store a computer program, software, an application including one or more of logic, rules, code, tables, *etc.* and/or other instructions capable of being executed by processing circuitry 1620. Device readable medium 1630 can include computer memory (e.g., Random Access Memory (RAM) or Read Only Memory (ROM)), mass storage media (*e.g.,* a hard disk), removable storage media (*e.g.,* a Compact Disk (CD) or a Digital Video Disk (DVD)), and/or any other volatile or non-volatile, non-transitory device readable and/or computer executable memory devices that store information, data, and/or instructions that can be used by processing circuitry 1620. In some embodiments, processing circuitry 1620 and device readable medium 1630 can be considered to be integrated.

User interface equipment 1632 can include components that allow and/or facilitate a human user to interact with WD 1610. Such interaction can be of many forms, such as visual, audial, tactile, *etc.* User interface equipment 1632 can be operable to produce output to the user and to allow and/or facilitate the user to provide input to WD 1610. The type of interaction can vary depending on the type of user interface equipment 1632 installed in WD 1610. For example, if WD 1610 is a smart phone, the interaction can be via a touch screen; if WD 1610 is a smart meter, the interaction can be through a screen that provides usage (*e*.*g*., the number of gallons used) or a speaker that provides an audible alert (*e*.*g*., if smoke is detected). User interface equipment 1632 can include input interfaces, devices and circuits, and output interfaces, devices and circuits. User interface equipment 1632 can be configured to allow and/or facilitate input of information into WD 1610 and is connected to processing circuitry 1620 to allow and/or facilitate processing circuitry 1620 to process the input information. User interface equipment 1632 can include, for example, a microphone, a proximity or other sensor, keys/buttons, a touch display, one or more cameras, a USB port, or other input circuitry. User interface equipment 1632 is also configured to allow and/or facilitate output of information from WD 1610, and to allow and/or facilitate processing circuitry 1620 to output information from WD 1610. User interface equipment 1632 can include, for example, a speaker, a display, vibrating circuitry, a USB port, a headphone interface, or other output circuitry. Using one or more input and output interfaces, devices, and circuits, of user interface equipment 1632, WD 1610 can communicate with end users and/or the wireless network and allow and/or facilitate them to benefit from the functionality described herein.

Auxiliary equipment 1634 is operable to provide more specific functionality which may not be generally performed by WDs. This can comprise specialized sensors for doing measurements for various purposes, interfaces for additional types of communication such as wired communications *etc.* The inclusion and type of components of auxiliary equipment 1634 can vary depending on the embodiment and/or scenario.

Power source 1636 can, in some embodiments, be in the form of a battery or battery pack. Other types of power sources, such as an external power source (*e*.*g*., an electricity outlet), photovoltaic devices or power cells, can also be used. WD 1610 can further comprise power circuitry 1637 for delivering power from power source 1636 to the various parts of WD 1610 which need power from power source 1636 to carry out any functionality described or indicated herein. Power circuitry 1637 can in certain embodiments comprise power management circuitry. Power circuitry 1637 can additionally or alternatively be operable to receive power from an external power source; in which case WD 1610 can be connectable to the external power source (such as an electricity outlet) via input circuitry or an interface such as an electrical power cable. Power circuitry 1637 can also in certain embodiments be operable to deliver power from an external power source to power source 1636. This can be, for example, for the charging of power source 1636. Power circuitry 1637 can perform any converting or other modification to the power from power source 1636 to make it suitable for supply to the respective components of WD 1610.

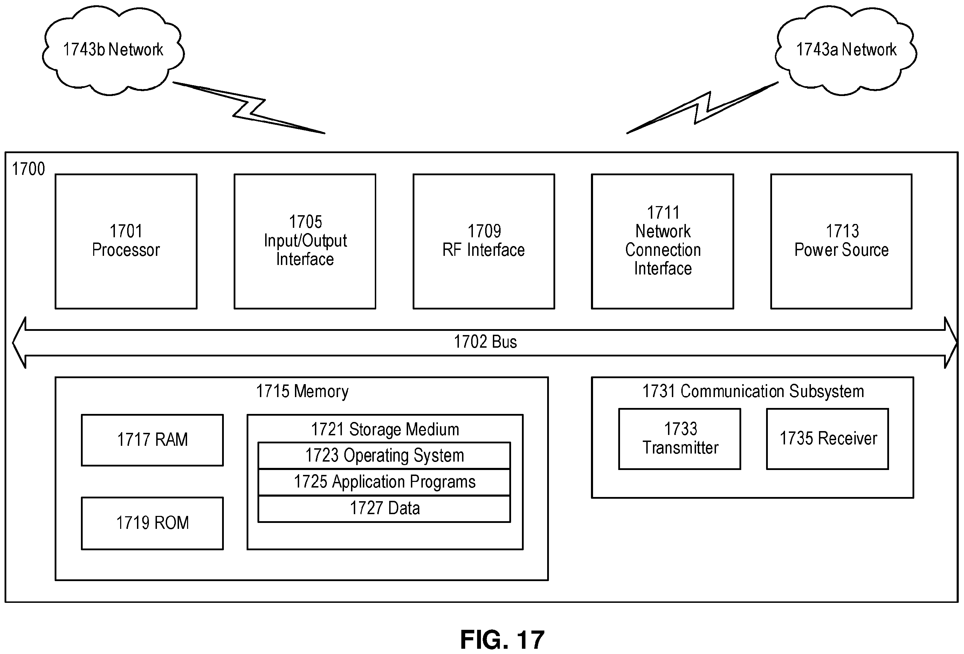

Figure 17 illustrates one embodiment of a UE in accordance with various aspects described herein. As used herein, a user equipment or UE may not necessarily have a user in the sense of a human user who owns and/or operates the relevant device. Instead, a UE can represent a device that is intended for sale to, or operation by, a human user but which may not, or which may not initially, be associated with a specific human user (*e*.*g*., a smart sprinkler controller). Alternatively, a UE can represent a device that is not intended for sale to, or operation by, an end user but which can be associated with or operated for the benefit of a user (e.g., a smart power meter). UE 17200 can be any UE identified by the 3^{rd} Generation Partnership Project (3GPP), including a NB-IoT UE, a machine type communication (MTC) UE, and/or an enhanced MTC (eMTC) UE. UE 1700, as illustrated in Figure 17, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE can be used interchangeable. Accordingly, although Figure 17 is a UE, the components discussed herein are equally applicable to a WD, and vice-versa.

In Figure 17, UE 1700 includes processing circuitry 1701 that is operatively coupled to input/output interface 1705, radio frequency (RF) interface 1709, network connection interface 1711, memory 1715 including random access memory (RAM) 1717, read-only memory (ROM) 1719, and storage medium 1721 or the like, communication subsystem 1731, power source 1733, and/or any other component, or any combination thereof. Storage medium 1721 includes operating system 1723, application program 1725, and data 1727. In other embodiments, storage medium 1721 can include other similar types of information. Certain UEs can utilize all of the components shown in Figure 17, or only a subset of the components. The level of integration between the components can vary from one UE to another UE. Further, certain UEs can contain multiple instances of a component, such as multiple processors, memories, transceivers, transmitters, receivers, *etc.*

In Figure 17, processing circuitry 1701 can be configured to process computer instructions and data. Processing circuitry 1701 can be configured to implement any sequential state machine operative to execute machine instructions stored as machine-readable computer programs in the memory, such as one or more hardware-implemented state machines (*e*.*g*., in discrete logic, FPGA, ASIC, *etc*.); programmable logic together with appropriate firmware; one or more stored program, general-purpose processors, such as a microprocessor or Digital Signal Processor (DSP), together with appropriate software; or any combination of the above. For example, the processing circuitry 1701 can include two central processing units (CPUs). Data can be information in a form suitable for use by a computer.

In the depicted embodiment, input/output interface 1705 can be configured to provide a communication interface to an input device, output device, or input and output device. UE 1700 can be configured to use an output device via input/output interface 1705. An output device can use the same type of interface port as an input device. For example, a USB port can be used to provide input to and output from UE 1700. The output device can be a speaker, a sound card, a video card, a display, a monitor, a printer, an actuator, an emitter, a smartcard, another output device, or any combination thereof. UE 1700 can be configured to use an input device via input/output interface 1705 to allow and/or facilitate a user to capture information into UE 1700. The input device can include a touch-sensitive or presence-sensitive display, a camera (*e*.*g*., a digital camera, a digital video camera, a web camera, *etc.*), a microphone, a sensor, a mouse, a trackball, a directional pad, a trackpad, a scroll wheel, a smartcard, and the like. The presence-sensitive display can include a capacitive or resistive touch sensor to sense input from a user. A sensor can be, for instance, an accelerometer, a gyroscope, a tilt sensor, a force sensor, a magnetometer, an optical sensor, a proximity sensor, another like sensor, or any combination thereof. For example, the input device can be an accelerometer, a magnetometer, a digital camera, a microphone, and an optical sensor.

In Figure 17, RF interface 1709 can be configured to provide a communication interface to RF components such as a transmitter, a receiver, and an antenna. Network connection interface 1711 can be configured to provide a communication interface to network 1743a. Network 1743a can encompass wired and/or wireless networks such as a local-area network (LAN), a wide-area network (WAN), a computer network, a wireless network, a telecommunications network, another like network or any combination thereof. For example, network 1743a can comprise a Wi-Fi network. Network connection interface 1711 can be configured to include a receiver and a transmitter interface used to communicate with one or more other devices over a communication network according to one or more communication protocols, such as Ethernet, TCP/IP, SONET, ATM, or the like. Network connection interface 1711 can implement receiver and transmitter functionality appropriate to the communication network links (e.g., optical, electrical, and the like). The transmitter and receiver functions can share circuit components, software or firmware, or alternatively can be implemented separately.

RAM 1717 can be configured to interface via bus 1702 to processing circuitry 1701 to provide storage or caching of data or computer instructions during the execution of software programs such as the operating system, application programs, and device drivers. ROM 1719 can be configured to provide computer instructions or data to processing circuitry 1701. For example, ROM 1719 can be configured to store invariant low-level system code or data for basic system functions such as basic input and output (I/O), startup, or reception of keystrokes from a keyboard that are stored in a non-volatile memory. Storage medium 1721 can be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives.

In one example, storage medium 1721 can be configured to include operating system 1723; application program 1725 such as a web browser application, a widget or gadget engine or another application; and data file 1727. Storage medium 1721 can store, for use by UE 1700, any of a variety of various operating systems or combinations of operating systems. For example, application program 1725 can include executable program instructions (also referred to as a computer program product) that, when executed by processor 1701, can configure UE 1700 to perform operations corresponding to various exemplary methods (e.g., procedures) described herein.

Storage medium 1721 can be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 1721 can allow and/or facilitate UE 1700 to access computer-executable instructions, application programs or the like, stored on transitory or non-transitory memory media, to off-load data, or to upload data. An article of manufacture, such as one utilizing a communication system can be tangibly embodied in storage medium 1721, which can comprise a device readable medium.

In Figure 17, processing circuitry 1701 can be configured to communicate with network 1743b using communication subsystem 1731. Network 1743a and network 1743b can be the same network or networks or different network or networks. Communication subsystem 1731 can be configured to include one or more transceivers used to communicate with network 1743b. For example, communication subsystem 1731 can be configured to include one or more transceivers used to communicate with one or more remote transceivers of another device capable of wireless communication such as another WD, UE, or base station of a radio access network (RAN) according to one or more communication protocols, such as IEEE 802.17, CDMA, WCDMA, GSM, LTE, UTRAN, WiMax, or the like. Each transceiver can include transmitter 1733 and/or receiver 1735 to implement transmitter or receiver functionality, respectively, appropriate to the RAN links (e.g., frequency allocations and the like). Further, transmitter 1733 and receiver 1735 of each transceiver can share circuit components, software or firmware, or alternatively can be implemented separately.

In the illustrated embodiment, the communication functions of communication subsystem 1731 can include data communication, voice communication, multimedia communication, short-range communications such as Bluetooth, near-field communication, location-based communication such as the use of the global positioning system (GPS) to determine a location, another like communication function, or any combination thereof. For example, communication subsystem 1731 can include cellular communication, Wi-Fi communication, Bluetooth communication, and GPS communication. Network 1743b can encompass wired and/or wireless networks such as a local-area network (LAN), a wide-area network (WAN), a computer network, a wireless network, a telecommunications network, another like network or any combination thereof. For example, network 1743b can be a cellular network, a Wi-Fi network, and/or a near-field network. Power source 1713 can be configured to provide alternating current (AC) or direct current (DC) power to components of UE 1700.

The features, benefits and/or functions described herein can be implemented in one of the components of UE 1700 or partitioned across multiple components of UE 1700. Further, the features, benefits, and/or functions described herein can be implemented in any combination of hardware, software or firmware. In one example, communication subsystem 1731 can be configured to include any of the components described herein. Further, processing circuitry 1701 can be configured to communicate with any of such components over bus 1702. In another example, any of such components can be represented by program instructions stored in memory that when executed by processing circuitry 1701 perform the corresponding functions described herein. In another example, the functionality of any of such components can be partitioned between processing circuitry 1701 and communication subsystem 1731. In another example, the non-computationally intensive functions of any of such components can be implemented in software or firmware and the computationally intensive functions can be implemented in hardware.

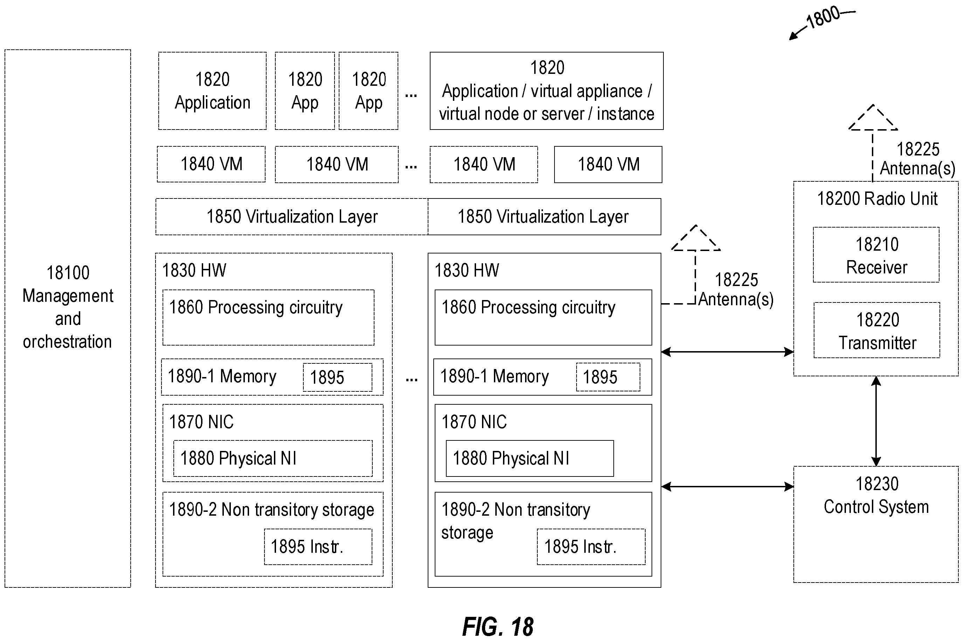

Figure 18 is a schematic block diagram illustrating a virtualization environment 1800 in which functions implemented by some embodiments can be virtualized. In the present context, virtualizing means creating virtual versions of apparatuses or devices which can include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein can be implemented as virtual components executed by one or more virtual machines implemented in one or more virtual environments 1800 hosted by one or more of hardware nodes 1830. Further, in embodiments in which the virtual node is not a radio access node or does not require radio connectivity (e.g., a core network node), then the network node can be entirely virtualized.

The functions can be implemented by one or more applications 1820 (which can alternatively be called software instances, virtual appliances, network functions, virtual nodes, virtual network functions, *etc*.) operative to implement some of the features, functions, and/or benefits of some of the embodiments disclosed herein. Applications 1820 are run in virtualization environment 1800 which provides hardware 1830 comprising processing circuitry 1860 and memory 1890. Memory 1890 contains instructions 1895 executable by processing circuitry 1860 whereby application 1820 is operative to provide one or more of the features, benefits, and/or functions disclosed herein.

Virtualization environment 1800 can include general-purpose or special-purpose network hardware devices (or nodes) 1830 comprising a set of one or more processors or processing circuitry 1860, which can be commercial offthe-shelf (COTS) processors, dedicated Application Specific Integrated Circuits (ASICs), or any other type of processing circuitry including digital or analog hardware components or special purpose processors. Each hardware device can comprise memory 1890-1 which can be non-persistent memory for temporarily storing instructions 1895 or software executed by processing circuitry 1860. For example, instructions 1895 can include program instructions (also referred to as a computer program product) that, when executed by processing circuitry 1860, can configure hardware node 1820 to perform operations corresponding to various exemplary methods (e.g., procedures) described herein. Such operations can also be attributed to virtual node(s) 1820 that is/are hosted by hardware node 1830.

Each hardware device can comprise one or more network interface controllers (NICs) 1870, also known as network interface cards, which include physical network interface 1880. Each hardware device can also include non-transitory, persistent, machine-readable storage media 1890-2 having stored therein software 1895 and/or instructions executable by processing circuitry 1860. Software 1895 can include any type of software including software for instantiating one or more virtualization layers 1850 (also referred to as hypervisors), software to execute virtual machines 1840 as well as software allowing it to execute functions, features and/or benefits described in relation with some embodiments described herein.

Virtual machines 1840, comprise virtual processing, virtual memory, virtual networking or interface and virtual storage, and can be run by a corresponding virtualization layer 1850 or hypervisor. Different embodiments of the instance of virtual appliance 1820 can be implemented on one or more of virtual machines 1840, and the implementations can be made in different ways.

During operation, processing circuitry 1860 executes software 1895 to instantiate the hypervisor or virtualization layer 1850, which can sometimes be referred to as a virtual machine monitor (VMM). Virtualization layer 1850 can present a virtual operating platform that appears like networking hardware to virtual machine 1840.

As shown in Figure 18, hardware 1830 can be a standalone network node with generic or specific components. Hardware 1830 can comprise antenna 18225 and can implement some functions via virtualization. Alternatively, hardware 1830 can be part of a larger cluster of hardware (e.g., such as in a data center or customer premise equipment (CPE)) where many hardware nodes work together and are managed via management and orchestration (MANO) 18100, which, among others, oversees lifecycle management of applications 1820.

Virtualization of the hardware is in some contexts referred to as network function virtualization (NFV). NFV can be used to consolidate many network equipment types onto industry standard high-volume server hardware, physical switches, and physical storage, which can be located in data centers, and customer premise equipment.

In the context of NFV, virtual machine 1840 can be a software implementation of a physical machine that runs programs as if they were executing on a physical, non-virtualized machine. Each of virtual machines 1840, and that part of hardware 1830 that executes that virtual machine, be it hardware dedicated to that virtual machine and/or hardware shared by that virtual machine with others of the virtual machines 1840, forms a separate virtual network elements (VNE).

Still in the context of NFV, Virtual Network Function (VNF) is responsible for handling specific network functions that run in one or more virtual machines 1840 on top of hardware networking infrastructure 1830 and corresponds to application 1820 in Figure 18.

In some embodiments, one or more radio units 18200 that each include one or more transmitters 18220 and one or more receivers 18210 can be coupled to one or more antennas 18225. Radio units 18200 can communicate directly with hardware nodes 1830 via one or more appropriate network interfaces and can be used in combination with the virtual components to provide a virtual node with radio capabilities, such as a radio access node or a base station. Nodes arranged in this manner can also communicate with one or more UEs, such as described elsewhere herein. In some embodiments, some signaling can be performed via control system 18230, which can alternatively be used for communication between hardware nodes 1830 and radio units 18200.

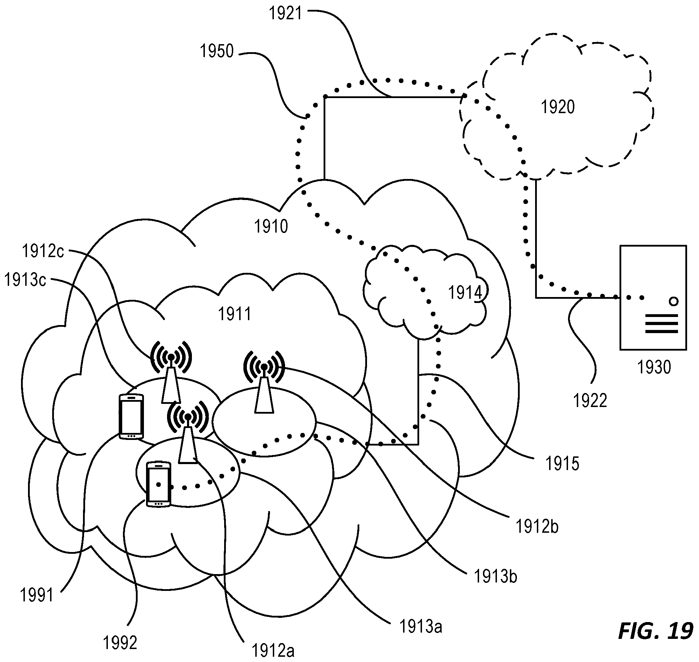

With reference to Figure 19, in accordance with an embodiment, a communication system includes telecommunication network 1910, such as a 3GPP-type cellular network, which comprises access network 1911, such as a radio access network, and core network 1914. Access network 1911 comprises a plurality of base stations 1912a, 1912b, 1912c, such as NBs, eNBs, gNBs or other types of wireless access points, each defining a corresponding coverage area 1913a, 1913b, 1913c. Each base station 1912a, 1912b, 1912c is connectable to core network 1914 over a wired or wireless connection 1915. A first UE 1991 located in coverage area 1913c can be configured to wirelessly connect to, or be paged by, the corresponding base station 1912c. A second UE 1992 in coverage area 1913a is wirelessly connectable to the corresponding base station 1912a. While a plurality of UEs 1991, 1992 are illustrated in this example, the disclosed embodiments are equally applicable to a situation where a sole UE is in the coverage area or where a sole UE is connecting to the

Telecommunication network 1910 is itself connected to host computer 1930, which can be embodied in the hardware and/or software of a standalone server, a cloud-implemented server, a distributed server or as processing resources in a server farm. Host computer 1930 can be under the ownership or control of a service provider or can be operated by the service provider or on behalf of the service provider. Connections 1921 and 1922 between telecommunication network 1910 and host computer 1930 can extend directly from core network 1914 to host computer 1930 or can go via an optional intermediate network 1920. Intermediate network 1920 can be one of, or a combination of more than one of, a public, private or hosted network; intermediate network 1920, if any, can be a backbone network or the Internet; in particular, intermediate network 1920 can comprise two or more sub-networks (not shown).

The communication system of Figure 19 as a whole enables connectivity between the connected UEs 1991, 1992 and host computer 1930. The connectivity can be described as an over-the-top (OTT) connection 1950. Host computer 1930 and the connected UEs 1991, 1992 are configured to communicate data and/or signaling via OTT connection 1950, using access network 1911, core network 1914, any intermediate network 1920 and possible further infrastructure (not shown) as intermediaries. OTT connection 1950 can be transparent in the sense that the participating communication devices through which OTT connection 1950 passes are unaware of routing of uplink and downlink communications. For example, base station 1912 may not or need not be informed about the past routing of an incoming downlink communication with data originating from host computer 1930 to be forwarded (e.g., handed over) to a connected UE 1991. Similarly, base station 1912 need not be aware of the future routing of an outgoing uplink communication originating from the UE 1991 towards the host computer 1930.

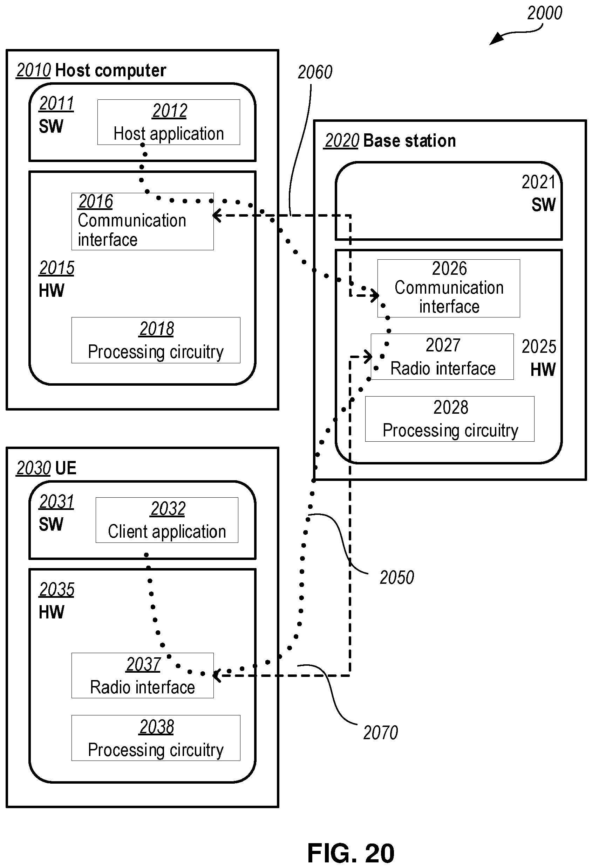

Example implementations, in accordance with an embodiment, of the UE, base station and host computer discussed in the preceding paragraphs will now be described with reference to Figure 20. In communication system 2000, host computer 2010 comprises hardware 2015 including communication interface 2016 configured to set up and maintain a wired or wireless connection with an interface of a different communication device of communication system 2000. Host computer 2010 further comprises processing circuitry 2018, which can have storage and/or processing capabilities. In particular, processing circuitry 2018 can comprise one or more programmable processors, application-specific integrated circuits, field programmable gate arrays or combinations of these (not shown) adapted to execute instructions. Host computer 2010 further comprises software 2011, which is stored in or accessible by host computer 2010 and executable by processing circuitry 2018. Software 2011 includes host application 2012. Host application 2012 can be operable to provide a service to a remote user, such as UE 2030 connecting via OTT connection 2050 terminating at UE 2030 and host computer 2010. In providing the service to the remote user, host application 2012 can provide user data which is transmitted using OTT connection 2050.

Communication system 2000 can also include base station 2020 provided in a telecommunication system and comprising hardware 2025 enabling it to communicate with host computer 2010 and with UE 2030. Hardware 2025 can include communication interface 2026 for setting up and maintaining a wired or wireless connection with an interface of a different communication device of communication system 2000, as well as radio interface 2027 for setting up and maintaining at least wireless connection 2070 with UE 2030 located in a coverage area (not shown in Figure 20) served by base station 2020. Communication interface 2026 can be configured to facilitate connection 2060 to host computer 2010. Connection 2060 can be direct, or it can pass through a core network (not shown in Figure 20) of the telecommunication system and/or through one or more intermediate networks outside the telecommunication system. In the embodiment shown, hardware 2025 of base station 2020 can also include processing circuitry 2028, which can comprise one or more programmable processors, application-specific integrated circuits, field programmable gate arrays or combinations of these (not shown) adapted to execute instructions.

Base station 2020 also includes software 2021 stored internally or accessible via an external connection. For example, software 2021 can include program instructions (also referred to as a computer program product) that, when executed by processing circuitry 2028, can configure base station 2020 to perform operations corresponding to various exemplary methods (e.g., procedures) described herein.

Communication system 2000 can also include UE 2030 already referred to, whose hardware 2035 can include radio interface 2037 configured to set up and maintain wireless connection 2070 with a base station serving a coverage area in which UE 2030 is currently located. Hardware 2035 of UE 2030 can also include processing circuitry 2038, which can comprise one or more programmable processors, application-specific integrated circuits, field programmable gate arrays or combinations of these (not shown) adapted to execute instructions.

UE 2030 also includes software 2031, which is stored in or accessible by UE 2030 and executable by processing circuitry 2038. Software 2031 includes client application 2032. Client application 2032 can be operable to provide a service to a human or non-human user via UE 2030, with the support of host computer 2010. In host computer 2010, an executing host application 2012 can communicate with the executing client application 2032 via OTT connection 2050 terminating at UE 2030 and host computer 2010. In providing the service to the user, client application 2032 can receive request data from host application 2012 and provide user data in response to the request data. OTT connection 2050 can transfer both the request data and the user data. Client application 2032 can interact with the user to generate the user data that it provides. Software 2031 can also include program instructions (also referred to as a computer program product) that, when executed by processing circuitry 2038, can configure UE 2030 to perform operations corresponding to various exemplary methods (e.g., procedures) described herein.

It is noted that host computer 2010, base station 2020 and UE 2030 illustrated in Figure 20 can be similar or identical to host computer 1230, one of base stations 1612a, 1612b, 1612c and one of UEs 1691, 1692 of Figure 16, respectively. This is to say, the inner workings of these entities can be as shown in Figure 20 and independently, the surrounding network topology can be that of Figure 16.

In Figure 20, OTT connection 2050 has been drawn abstractly to illustrate the communication between host computer 2010 and UE 2030 via base station 2020, without explicit reference to any intermediary devices and the precise routing of messages via these devices. Network infrastructure can determine the routing, which it can be configured to hide from UE 2030 or from the service provider operating host computer 2010, or both. While OTT connection 2050 is active, the network infrastructure can further take decisions by which it dynamically changes the routing (*e.g.,* on the basis of load balancing consideration or reconfiguration of the network).

Wireless connection 2070 between UE 2030 and base station 2020 is in accordance with the teachings of the embodiments described throughout this disclosure. One or more of the various embodiments improve the performance of OTT services provided to UE 2030 using OTT connection 2050, in which wireless connection 2070 forms the last segment. More precisely, the exemplary embodiments disclosed herein can improve flexibility for the network to monitor end-to-end quality-of-service (QoS) of data flows, including their corresponding radio bearers, associated with data sessions between a user equipment (UE) and another entity, such as an OTT data application or service external to the 5G network. These and other advantages can facilitate more timely design, implementation, and deployment of 5G/NR solutions. Furthermore, such embodiments can facilitate flexible and timely control of data session QoS, which can lead to improvements in capacity, throughput, latency, *etc.* that are envisioned by 5G/NR and important for the growth of OTT services.

A measurement procedure can be provided for the purpose of monitoring data rate, latency and other network operational aspects on which the one or more embodiments improve. There can further be an optional network functionality for reconfiguring OTT connection 2050 between host computer 2010 and UE 2030, in response to variations in the measurement results. The measurement procedure and/or the network functionality for reconfiguring OTT connection 2050 can be implemented in software 2011 and hardware 2015 of host computer 2010 or in software 2031 and hardware 2035 of UE 2030, or both. In embodiments, sensors (not shown) can be deployed in or in association with communication devices through which OTT connection 2050 passes; the sensors can participate in the measurement procedure by supplying values of the monitored quantities exemplified above, or by supplying values of other physical quantities from which software 2011, 2031 can compute or estimate the monitored quantities. The reconfiguring of OTT connection 2050 can include message format, retransmission settings, preferred routing *etc*.; the reconfiguring need not affect base station 2020, and it can be unknown or imperceptible to base station 2020. Such procedures and functionalities can be known and practiced in the art. In certain embodiments, measurements can involve proprietary UE signaling facilitating host computer 2010's measurements of throughput, propagation times, latency and the like. The measurements can be implemented in that software 2011 and 2031 causes messages to be transmitted, in particular empty or 'dummy' messages, using OTT connection 2050 while it monitors propagation times, errors, *etc.*

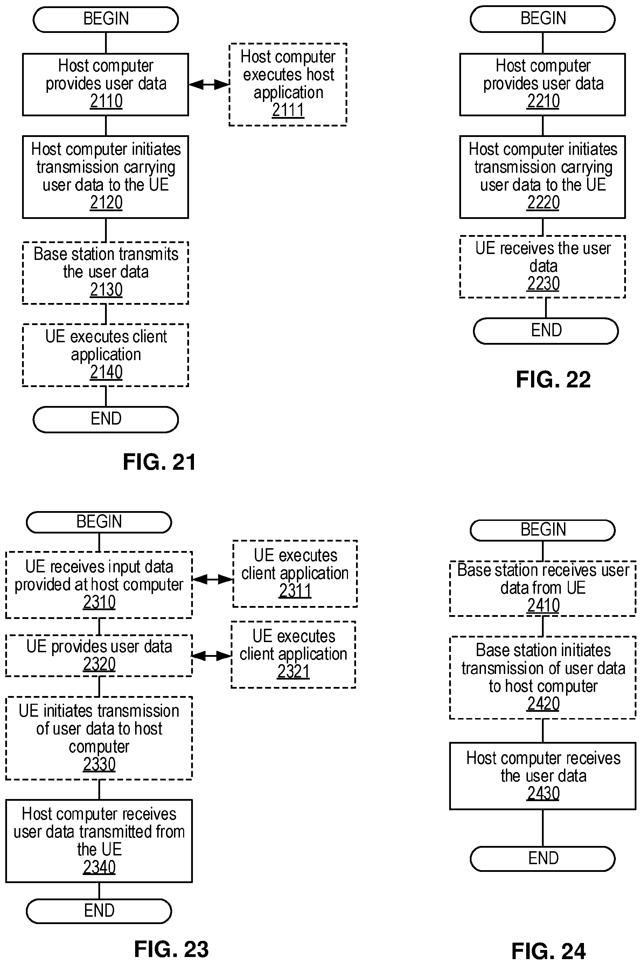

Figure 21 is a flowchart illustrating an exemplary method and/or procedure implemented in a communication system, in accordance with one embodiment. The communication system includes a host computer, a base station and a UE which, in some exemplary embodiments, can be those described with reference to other figures herein. For simplicity of the present disclosure, only drawing references to Figure 21 will be included in this section. In step 2110, the host computer provides user data. In substep 2111 (which can be optional) of step 2110, the host computer provides the user data by executing a host application. In step 2120, the host computer initiates a transmission carrying the user data to the UE. In step 2130 (which can be optional), the base station transmits to the UE the user data which was carried in the transmission that the host computer initiated, in accordance with the teachings of the embodiments described throughout this disclosure. In step 2140 (which can also be optional), the UE executes a client application associated with the host application executed by the host computer.

Figure 22 is a flowchart illustrating an exemplary method and/or procedure implemented in a communication system, in accordance with one embodiment. The communication system includes a host computer, a base station and a UE which can be those described with reference to other figures herein. For simplicity of the present disclosure, only drawing references to Figure 22 will be included in this section. In step 2210 of the method, the host computer provides user data. In an optional substep (not shown) the host computer provides the user data by executing a host application. In step 2220, the host computer initiates a transmission carrying the user data to the UE. The transmission can pass via the base station, in accordance with the teachings of the embodiments described throughout this disclosure. In step 2230 (which can be optional), the UE receives the user data carried in the transmission.

Figure 23 is a flowchart illustrating an exemplary method and/or procedure implemented in a communication system, in accordance with one embodiment. The communication system includes a host computer, a base station and a UE which can be those described with reference to other figures herein. For simplicity of the present disclosure, only drawing references to Figure 23 will be included in this section. In step 2310 (which can be optional), the UE receives input data provided by the host computer. Additionally or alternatively, in step 2320, the UE provides user data. In substep 2321 (which can be optional) of step 2320, the UE provides the user data by executing a client application. In substep 2311 (which can be optional) of step 2310, the UE executes a client application which provides the user data in reaction to the received input data provided by the host computer. In providing the user data, the executed client application can further consider user input received from the user. Regardless of how the user data was provided, the UE initiates, in substep 2330 (which can be optional), transmission of the user data to the host computer. In step 2340 of the method, the host computer receives the user data transmitted from the UE, in accordance with the teachings of the embodiments described throughout this disclosure.

Figure 24 is a flowchart illustrating an exemplary method and/or procedure implemented in a communication system, in accordance with one embodiment. The communication system includes a host computer, a base station and a UE which can be those described with reference to other figures herein. For simplicity of the present disclosure, only drawing references to Figure 24 will be included in this section. In step 2410 (which can be optional), in accordance with the teachings of the embodiments described throughout this disclosure, the base station receives user data from the UE. In step 2420 (which can be optional), the base station initiates transmission of the received user data to the host computer. In step 2430 (which can be optional), the host computer receives the user data carried in the transmission initiated by the base station.

The foregoing merely illustrates the principles of the disclosure. Various modifications and alterations to the described embodiments will be apparent to those skilled in the art in view of the teachings herein. It will thus be appreciated that those skilled in the art will be able to devise numerous systems, arrangements, and procedures that, although not explicitly shown or described herein, embody the principles of the disclosure and can be thus within the scope of the disclosure as defined in the appended set of claims

. Various exemplary embodiments can be used together with one another, as well as interchangeably therewith, as should be understood by those having ordinary skill in the art.

The term unit, as used herein, can have conventional meaning in the field of electronics, electrical devices and/or electronic devices and can include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, *etc.* Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

As described herein, device and/or apparatus can be represented by a semiconductor chip, a chipset, or a (hardware) module comprising such chip or chipset; this, however, does not exclude the possibility that a functionality of a device or apparatus, instead of being hardware implemented, be implemented as a software module such as a computer program or a computer program product comprising executable software code portions for execution or being run on a processor. Furthermore, functionality of a device or apparatus can be implemented by any combination of hardware and software. A device or apparatus can also be regarded as an assembly of multiple devices and/or apparatuses, whether functionally in cooperation with or independently of each other. Moreover, devices and apparatuses can be implemented in a distributed fashion throughout a system, so long as the functionality of the device or apparatus is preserved. Such and similar principles are considered as known to a skilled person.

Furthermore, functions described herein as being performed by a wireless device or a network node may be distributed over a plurality of wireless devices and/or network nodes. In other words, it is contemplated that the functions of the network node and wireless device described herein are not limited to performance by a single physical device and, in fact, can be distributed among several physical devices.

In addition, certain terms used in the present disclosure, including the specification, drawings and exemplary embodiments thereof, can be used synonymously in certain instances, including, but not limited to, e.g., data and information. It should be understood that, while these words and/or other words that can be synonymous to one another, can be used synonymously herein, that there can be instances when such words can be intended to not be used synonymously. Further, to the extent that the prior art knowledge has not been explicitly incorporated by reference herein above, it is explicitly incorporated herein in its entirety. All publications referenced are incorporated herein by reference in their entireties.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

In addition, certain terms used in the present disclosure, including the specification and drawings, can be used synonymously in certain instances (e.g., "data" and "information"). It should be understood, that although these terms (and/or other terms that can be synonymous to one another) can be used synonymously herein, there can be instances when such words can be intended to not be used synonymously.

## Claims

1. A method, for a first radio access network, RAN, node in a first RAN, for inter-system mobility load balancing, MLB, with a second RAN node in a second RAN, the method comprising:
sending (1410), to the second RAN node, a resource status request message that includes a reporting configuration comprising a reporting format that defines how one or more respective metrics to be measured should be reported to the first RAN node upon corresponding triggering events, and one or more of the following:
one or more metrics, related to load and/or capacity of the second RAN node, to be measured by the second RAN node, and
one or more triggering events for initiating reporting, to the first RAN node, of the metrics measured by the second RAN node; and
receiving (1420) one of the following from the second RAN node in response to the resource status request message:
a resource status response message indicating successful configuration of at least a portion of the reporting configuration; or
a resource status failure message indicating unsuccessful configuration for all of the reporting configuration.

2. The method of claim 1, further comprising receiving (1430), from the second RAN node after receiving the resource status response message, one or more resource status update messages comprising one or more metrics for which triggering events were fulfilled, in accordance with the corresponding reporting formats.

3. The method of claim 2, wherein the reporting configuration includes a plurality of metrics and one or more of the following applies:
each resource status update message indicates that one of the metrics fulfilled the corresponding triggering event; and
each resource status update message includes values for metrics that did not fulfil their corresponding triggering events.

4. The method of any of claims 2-3, further comprising sending (1440), to the second RAN node, a resource status acknowledge message in response to one or more of the following:
the resource status response message;
the resource status failure message; and
a resource status update message.

5. The method of any of claims 1-4, wherein each of the one or more metrics is related to one of the following:
radio resource status;
composite available capacity;
available capacity for a network slice;
available capacity for a transport network layer, TNL;
TNL load;
hardware capacity;
number of active user equipment, UEs; and
number of UEs in RRC_CONNECTED state.

6. The method of claim 5, wherein each of the one or more metrics is also related to one or more of the following:
a particular cell served by the second RAN node;
a particular beam coverage area or other type of cell partition;
uplink or downlink direction;
a particular frequency bandwidth;
a particular type of traffic;
a particular network interface;
a particular network slice; and
a particular hardware unit of the second RAN node.

7. The method of any of claims 1-6, wherein each triggering event is specified in relation to its corresponding metric based on one or more of the following:
an explicit event upon which reporting of the corresponding metric is initiated;
a threshold amount associated with the metric, above or below which reporting is initiated;
a first threshold period that the metric must be above or below the associated threshold amount before reporting is initiated;
a threshold rate of change of the metric, above which reporting is initiated; and
a second threshold period that the rate of change of the metric must be above the threshold rate of change, before reporting is initiated.

8. The method of any of claims 1-7, wherein, for each metric, the reporting format indicates that the second RAN node should transmit one of the following:
a single report upon occurrence of the corresponding triggering event;
a single report upon continued occurrence of the corresponding triggering event for at least a threshold period;
periodic reports upon occurrence of the corresponding triggering event; and
periodic reports upon continued occurrence of the corresponding triggering event for at least a threshold period.

9. The method of claim 8, wherein:
a first metric is associated with first and second triggering events;
occurrence of the first triggering event initiates a single report of the first metric; and
occurrence of the second triggering event initiates periodic reports of the first metric.

10. The method of any of claims 8-9, wherein the reporting format also includes respective reporting periods for all configured periodic reports.

11. The method of any of claims 1-10, wherein the resource status response message includes at least one of the following:
a first indication of the portion of the reporting configuration that the second RAN node can support;
a second indication of a further reporting configuration to be used by the second RAN node, including at least the portion of the reporting configuration; and
one or more of the following supported by the second RAN node:
one or more further metrics or measurements related to load and/or capacity of the second RAN node,
one or more further triggering events for initiating reporting of the one or more metrics and/or the one or more further metrics, and
one or more further reporting formats for the one or more metrics and/or the one or more further metrics.

12. The method of any of claims 1-11, wherein the resource status failure message includes at least one of the following:
an indication of a cause for the unsuccessful configuration; and
one or more of the following supported by the second RAN node:
one or more further metrics or measurements related to load and/or capacity of the second RAN node,
one or more further triggering events for initiating reporting of the one or more metrics and/or the one or more further metrics, and
one or more further reporting formats for the one or more metrics and/or the one or more further metrics.

13. The method of any of claims 1-12, wherein:
the resource status request message is sent in a first message container to a first core network, CN, node coupled to the first RAN;
the first message container includes an explicit indication that the first message container includes the resource status request message; and
the resource status response message or the resource status failure message is received in a second message container from the first CN node.

14. The method of any of claims 1-13, wherein:
the first RAN is one of an Evolved UTRAN, E-UTRAN, and a Next-Generation RAN, NG-RAN; and
the second RAN is the other of the E-UTRAN and the NG-RAN.

15. A method, for a second radio access network, RAN, node in a second RAN, for inter-system mobility load balancing, MLB, with a first RAN node in a first RAN, the method comprising:
receiving (1510), from the first RAN node, a resource status request message that includes a reporting configuration comprising a reporting format that defines how one or more respective metrics to be measured should be reported to the first RAN node upon corresponding triggering events, and one or more of the following:
one or more metrics, related to load and/or capacity of the second RAN node, to be measured by the second RAN node, and
one or more triggering events for initiating reporting, to the first RAN node, of the metrics measured by the second RAN node;
determining (1520) whether the second RAN node can support the reporting configuration; and
sending (1530), to the first RAN node, one the following:
a resource status response message based on determining that the second RAN node can support least a portion of the reporting configuration; or
a resource status failure message based on determining that the second RAN node cannot support any of the reporting configuration.

16. The method of claim 15, further comprising:
after sending the resource status response message, determining (1540) that triggering events were fulfilled for one or more of the metrics; and
sending (1550), to the first RAN node, one or more resource status update messages comprising the one or more metrics for which triggering events were fulfilled, in accordance with the corresponding reporting formats.

17. The method of claim 16, wherein the reporting configuration includes a plurality of metrics and one or more of the following applies:
each resource status update message indicates that one of the metrics fulfilled the corresponding triggering event; and
each resource status update message includes values for metrics that did not fulfil their corresponding triggering events.

18. The method of any of claims 16-17, further comprising receiving (1560), from the first RAN node, a resource status acknowledge message in response to one or more of the following:
the resource status response message;
the resource status failure message; and
a resource status update message.

19. A first radio access network, RAN, node (105, 110, 115, 300, 350, 410, 420, 1210, 1310, 1660, 1830, 2020), in a first RAN (100, 399, 499), configured for inter-system mobility load balancing, MLB, with a second RAN node (105, 110, 115, 300, 350, 410, 420, 1220, 1320, 1660, 1830, 2020) in a second RAN (100, 399, 499), the first RAN node being further configured to:
send, to the second RAN node, a resource status request message that includes a reporting configuration comprising a reporting format that defines how one or more respective metrics to be measured should be reported to the first RAN node upon corresponding triggering events, and one or more of the following:
one or more metrics, related to load and/or capacity of the second RAN node, to be measured by the second RAN node, and
one or more triggering events for initiating reporting, to the first RAN node, of the metrics measured by the second RAN node; and
receive one of the following from the second RAN node in response to the resource status request message:
a resource status response message indicating successful configuration of at least a portion of the reporting configuration; or
a resource status failure message indicating unsuccessful configuration for all of the reporting configuration.

20. The first RAN node of claim 19, being further configured to perform operations corresponding to any of the methods of claims 2-14.

21. A second radio access network, RAN, node (105, 110, 115, 300, 350, 410, 420, 1220, 1320, 1660, 1830, 2020), in a second RAN (100, 399, 499), configured for inter-system mobility load balancing, MLB, with a first RAN node (105, 110, 115, 300, 350, 410, 420, 1210, 1310, 1660, 1830, 2020) in a first RAN (100, 399, 499), the second RAN node being further configured to:
receive, from the first RAN node, a resource status request message that includes a reporting configuration comprising a reporting format that defines how one or more respective metrics to be measured should be reported to the first RAN node upon corresponding triggering events, and one or more of the following:
one or more metrics, related to load and/or capacity of the second RAN node, to be measured by the second RAN node, and
one or more triggering events for initiating reporting, to the first RAN node, of the metrics measured by the second RAN node
determine whether the second RAN node can support the reporting configuration; and
send, to the first RAN node, one the following:
a resource status response message based on determining that the second RAN node can support least a portion of the reporting configuration; or
a resource status failure message based on determining that the second RAN node cannot support any of the reporting configuration.

22. The second RAN node of claim 21, being further configured to perform operations corresponding to any of the methods of claims 16-18.

## Patentansprüche

1. Verfahren, für einen ersten Funkzugangsnetzwerk-, RAN-, Knoten in einem ersten RAN, für Inter-System-Mobilitätslastenausgleich, MLB, mit einem zweiten RAN-Knoten in einem zweiten RAN, wobei das Verfahren Folgendes umfasst:
Senden (1410), an den zweiten RAN-Knoten, einer Ressourcenstatus-Anforderungsnachricht, die eine Meldekonfiguration, die ein Meldeformat umfasst, das definiert, wie eine oder mehrere jeweilige zu messende Metriken nach entsprechenden Auslöseereignissen an den ersten RAN-Knoten gemeldet werden sollten, und eines oder mehrere der Folgenden beinhaltet:
einer oder mehrerer durch den zweiten RAN-Knoten zu messender Metriken, die sich auf Last und/oder Kapazität des zweiten RAN-Knotens beziehen, und
eines oder mehrerer Auslöseereignisse zum Einleiten der Meldung, an den ersten RAN-Knoten, der durch den zweiten RAN-Knoten gemessenen Metriken; und
Empfangen (1420) eines der Folgenden von dem zweiten RAN-Knoten als Reaktion auf die Ressourcenstatus-Anforderungsnachricht:
einer Ressourcenstatus-Antwortnachricht, die eine erfolgreiche Konfiguration mindestens eines Abschnitts der Meldekonfiguration angibt; oder
einer Ressourcenstatus-Fehlernachricht, die eine gescheiterte Konfiguration für die gesamte Meldekonfiguration angibt.

2. Verfahren nach Anspruch 1, ferner umfassend Empfangen (1430), von dem zweiten RAN-Knoten nach dem Empfangen der Ressourcenstatus-Antwortnachricht, einer oder mehrerer Ressourcenstatus-Aktualisierungsnachrichten, die eine oder mehrere Metriken umfassen, für die Auslöseereignisse erfüllt wurden, gemäß den entsprechenden Meldeformaten.

3. Verfahren nach Anspruch 2, wobei die Meldekonfiguration eine Vielzahl von Metriken beinhaltet und eines oder mehrere der Folgenden gelten:
jede Ressourcenstatus-Aktualisierungsnachricht gibt an, dass eine der Metriken das entsprechende Auslöseereignis erfüllte; und
jede Ressourcenstatus-Aktualisierungsnachricht beinhaltet Werte für Metriken, die ihre entsprechenden Auslöseereignisse nicht erfüllten.

4. Verfahren nach einem der Ansprüche 2-3, ferner umfassend Senden (1440), an den zweiten RAN-Knoten, einer Ressourcenstatus-Quittierungsnachricht als Reaktion auf eines oder mehrere der Folgenden:
der Ressourcenstatus-Antwortnachricht;
der Ressourcenstatus-Fehlernachricht; und
einer Ressourcenstatus-Aktualisierungsnachricht.

5. Verfahren nach einem der Ansprüche 1-4, wobei sich jede der einen oder der mehreren Metriken auf eines der Folgenden bezieht:
Funkressourcenstatus;
zusammengesetzter verfügbarer Kapazität;
verfügbarer Kapazität für eine Netzwerkscheibe;
verfügbarer Kapazität für eine Transportnetzwerkschicht, TNL;
TNL-Last;
Hardwarekapazität;
Anzahl von aktiven Benutzergeräten, UEs; und
Anzahl von UEs im Zustand RRC_CONNECTED.

6. Verfahren nach Anspruch 5, wobei sich jede der einen oder der mehreren Metriken zudem auf eines oder mehrere der Folgenden bezieht:
einer konkreten Zelle, die durch den zweiten RAN-Knoten bedient wird;
eines konkreten Strahlabdeckungsbereichs oder einer anderen Art von Zellaufteilung;
Uplink- oder Downlink-Richtung;
einer konkreten Frequenzbandbreite;
einer konkreten Art von Verkehr;
einer konkreten Netzwerkschnittstelle;
einer konkreten Netzwerkscheibe; und
einer konkreten Hardwareeinheit des zweiten RAN-Knotens.

7. Verfahren nach einem der Ansprüche 1-6, wobei jedes Auslöseereignis in Bezug auf seine entsprechende Metrik auf Grundlage eines oder mehrerer der Folgenden spezifiziert ist:
eines ausdrücklichen Ereignisses, nach dem Meldung der entsprechenden Metrik eingeleitet wird;
eines der Metrik zugeordneten Schwellenbetrags, über oder unter dem Meldung eingeleitet wird;
eines ersten Schwellenzeitraums, den die Metrik über oder unter dem zugeordneten Schwellenbetrag liegen muss, bevor Meldung eingeleitet wird;
einer Schwellenänderungsrate der Metrik, über der Meldung eingeleitet wird; und
eines zweiten Schwellenzeitraums, den die Änderungsrate der Metrik über der Schwellenänderungsrate liegen muss, bevor Meldung eingeleitet wird.

8. Verfahren nach einem der Ansprüche 1-7, wobei für jede Metrik das Meldeformat angibt, dass der zweite RAN-Knoten eines der Folgenden übertragen sollte:
eines einzelnen Berichts nach Auftreten des entsprechenden Auslöseereignisses;
eines einzelnen Berichts nach fortgesetztem Auftreten des entsprechenden Auslöseereignisses für mindestens einen Schwellenzeitraum;
periodischer Berichte nach Auftreten des entsprechenden Auslöseereignisses; und
periodischer Berichte nach fortgesetztem Auftreten des entsprechenden Auslöseereignisses für mindestens einen Schwellenzeitraum.

9. Verfahren nach Anspruch 8, wobei:
eine erste Metrik ersten und zweiten Auslöseereignissen zugeordnet ist;
Auftreten des ersten Auslöseereignisses einen einzelnen Bericht der ersten Metrik einleitet; und
Auftreten des zweiten Auslöseereignisses periodische Berichte der ersten Metrik einleitet.

10. Verfahren nach einem der Ansprüche 8-9, wobei das Meldeformat zudem jeweilige Meldezeiträume für alle konfigurierten periodischen Berichte beinhaltet.

11. Verfahren nach einem der Ansprüche 1-10, wobei die Ressourcenstatus-Antwortnachricht mindestens eines der Folgenden beinhaltet:
einer ersten Angabe des Abschnitts der Meldekonfiguration, den der zweite RAN-Knoten unterstützen kann;
einer zweiten Angabe einer weiteren durch den zweiten RAN-Knoten zu verwendenden Meldekonfiguration, die mindestens den Abschnitt der Meldekonfiguration beinhaltet; und
eines oder mehrerer der Folgenden, die durch den zweiten RAN-Knoten unterstützt werden:
einer oder mehrerer weiterer Metriken oder Messungen, die sich auf Last und/oder Kapazität des zweiten RAN-Knotens beziehen,
eines oder mehrerer weiterer Auslöseereignisse zum Einleiten der Meldung der einen oder der mehreren Metriken und/oder der einen oder der mehreren weiteren Metriken und
eines oder mehrerer weiterer Meldeformate für die eine oder die mehreren Metriken und/oder die eine oder die mehreren weiteren Metriken.

12. Verfahren nach einem der Ansprüche 1-11, wobei die Ressourcenstatus-Fehlernachricht mindestens eines der Folgenden beinhaltet:
einer Angabe einer Ursache für die gescheiterte Konfiguration; und
eines oder mehrerer der Folgenden, die durch den zweiten RAN-Knoten unterstützt werden:
einer oder mehrerer weiterer Metriken oder Messungen, die sich auf Last und/oder Kapazität des zweiten RAN-Knotens beziehen,
eines oder mehrerer weiterer Auslöseereignisse zum Einleiten der Meldung der einen oder der mehreren Metriken und/oder der einen oder der mehreren weiteren Metriken und
eines oder mehrerer weiterer Meldeformate für die eine oder die mehreren Metriken und/oder die eine oder die mehreren weiteren Metriken.

13. Verfahren nach einem der Ansprüche 1-12, wobei:
die Ressourcenstatus-Anforderungsnachricht in einem ersten Nachrichtenbehälter an einen ersten Kernnetzwerk-, CN-, Knoten gesendet wird, der an das erste RAN gekoppelt ist;
der erste Nachrichtenbehälter eine ausdrückliche Angabe beinhaltet, dass der erste Nachrichtenbehälter die Ressourcenstatus-Anforderungsnachricht beinhaltet; und
die Ressourcenstatus-Antwortnachricht oder die Ressourcenstatus-Fehlernachricht in einem zweiten Nachrichtenbehälter von dem ersten CN-Knoten empfangen wird.

14. Verfahren nach einem der Ansprüche 1-13, wobei:
das erste RAN eines von einem Evolved UTRAN, E-UTRAN, und einem Next-Generation RAN, NG-RAN, ist; und
das zweite RAN das andere des E-UTRAN und des NG-RAN ist.

15. Verfahren, für einen zweiten Funkzugangsnetzwerk-, RAN-, Knoten in einem zweiten RAN, für Inter-System-Mobilitätslastenausgleich, MLB, mit einem ersten RAN-Knoten in einem ersten RAN, wobei das Verfahren Folgendes umfasst:
Empfangen (1510), von dem ersten RAN-Knoten, einer Ressourcenstatus-Anforderungsnachricht, die eine Meldekonfiguration, die ein Meldeformat umfasst, das definiert, wie eine oder mehrere jeweilige zu messende Metriken nach entsprechenden Auslöseereignissen an den ersten RAN-Knoten gemeldet werden sollten, und eines oder mehrere der Folgenden beinhaltet:
einer oder mehrerer durch den zweiten RAN-Knoten zu messender Metriken, die sich auf Last und/oder Kapazität des zweiten RAN-Knotens beziehen, und
eines oder mehrerer Auslöseereignisse zum Einleiten der Meldung, an den ersten RAN-Knoten, der durch den zweiten RAN-Knoten gemessenen Metriken;
Bestimmen (1520), ob der zweite RAN-Knoten die Meldekonfiguration unterstützen kann; und
Senden (1530), an den ersten RAN-Knoten, eines der Folgenden:
einer Ressourcenstatus-Antwortnachricht auf Grundlage dessen, dass bestimmt wird, dass der zweite RAN-Knoten mindestens einen Abschnitt der Meldekonfiguration unterstützen kann; oder
einer Ressourcenstatus-Fehlernachricht auf Grundlage dessen, dass bestimmt wird, dass der zweite RAN-Knoten nichts der Meldekonfiguration unterstützen kann.

16. Verfahren nach Anspruch 15, ferner umfassend:
nach dem Senden der Ressourcenstatus-Antwortnachricht Bestimmen (1540), dass Auslöseereignisse für eine oder mehrere der Metriken erfüllt wurden; und
Senden (1550), an den ersten RAN-Knoten, einer oder mehrerer Ressourcenstatus-Aktualisierungsnachrichten, die die eine oder die mehreren Metriken umfassen, für die Auslöseereignisse erfüllt wurden, gemäß den entsprechenden Meldeformaten.

17. Verfahren nach Anspruch 16, wobei die Meldekonfiguration eine Vielzahl von Metriken beinhaltet und eines oder mehrere der Folgenden gelten:
jede Ressourcenstatus-Aktualisierungsnachricht gibt an, dass eine der Metriken das entsprechende Auslöseereignis erfüllte; und
jede Ressourcenstatus-Aktualisierungsnachricht beinhaltet Werte für Metriken, die ihre entsprechenden Auslöseereignisse nicht erfüllten.

18. Verfahren nach einem der Ansprüche 16-17, ferner umfassend Empfangen (1560), von dem ersten RAN-Knoten, einer Ressourcenstatus-Quittierungsnachricht als Reaktion auf eines oder mehrere der Folgenden:
der Ressourcenstatus-Antwortnachricht;
der Ressourcenstatus-Fehlernachricht; und
einer Ressourcenstatus-Aktualisierungsnachricht.

19. Erster Funkzugangsnetzwerk-, RAN-, Knoten (105, 110, 115, 300, 350, 410, 420, 1210, 1310, 1660, 1830, 2020) in einem ersten RAN (100, 399, 499), das für Inter-System-Mobilitätslastenausgleich, MLB, mit einem zweiten RAN-Knoten (105, 110, 115, 300, 350, 410, 420, 1220, 1320, 1660, 1830, 2020) in einem zweiten RAN (100, 399, 499) konfiguriert ist, wobei der erste RAN-Knoten ferner zu Folgendem konfiguriert ist:
Senden, an den zweiten RAN-Knoten, einer Ressourcenstatus-Anforderungsnachricht, die eine Meldekonfiguration, die ein Meldeformat umfasst, das definiert, wie eine oder mehrere jeweilige zu messende Metriken nach entsprechenden Auslöseereignissen an den ersten RAN-Knoten gemeldet werden sollten, und eines oder mehrere der Folgenden beinhaltet:
einer oder mehrerer durch den zweiten RAN-Knoten zu messender Metriken, die sich auf Last und/oder Kapazität des zweiten RAN-Knotens beziehen, und
eines oder mehrerer Auslöseereignisse zum Einleiten der Meldung, an den ersten RAN-Knoten, der durch den zweiten RAN-Knoten gemessenen Metriken; und
Empfangen eines der Folgenden von dem zweiten RAN-Knoten als Reaktion auf die Ressourcenstatus-Anforderungsnachricht:
einer Ressourcenstatus-Antwortnachricht, die eine erfolgreiche Konfiguration mindestens eines Abschnitts der Meldekonfiguration angibt; oder
einer Ressourcenstatus-Fehlernachricht, die eine gescheiterte Konfiguration für die gesamte Meldekonfiguration angibt.

20. Erster RAN-Knoten nach Anspruch 19, der ferner dazu konfiguriert ist, Vorgänge durchzuführen, die einem beliebigen der Verfahren nach Anspruch 2-14 entsprechen.

21. Zweiter Funkzugangsnetzwerk-, RAN-, Knoten (105, 110, 115, 300, 350, 410, 420, 1220, 1320, 1660, 1830, 2020) in einem zweiten RAN (100, 399, 499), das für Inter-System-Mobilitätslastenausgleich, MLB, mit einem ersten RAN-Knoten (105, 110, 115, 300, 350, 410, 420, 1210, 1310, 1660, 1830, 2020) in einem ersten RAN (100, 399, 499) konfiguriert ist, wobei der zweite RAN-Knoten ferner zu Folgendem konfiguriert ist:
Empfangen, von dem ersten RAN-Knoten, einer Ressourcenstatus-Anforderungsnachricht, die eine Meldekonfiguration, die ein Meldeformat umfasst, das definiert, wie eine oder mehrere jeweilige zu messende Metriken nach entsprechenden Auslöseereignissen an den ersten RAN-Knoten gemeldet werden sollten, und eines oder mehrere der Folgenden beinhaltet:
einer oder mehrerer durch den zweiten RAN-Knoten zu messender Metriken, die sich auf Last und/oder Kapazität des zweiten RAN-Knotens beziehen, und
eines oder mehrerer Auslöseereignisse zum Einleiten der Meldung, an den ersten RAN-Knoten, der durch den zweiten RAN-Knoten gemessenen Metriken;
Bestimmen, ob der zweite RAN-Knoten die Meldekonfiguration unterstützen kann; und
Senden, an den ersten RAN-Knoten, eines der Folgenden:
einer Ressourcenstatus-Antwortnachricht auf Grundlage dessen, dass bestimmt wird, dass der zweite RAN-Knoten mindestens einen Abschnitt der Meldekonfiguration unterstützen kann; oder
einer Ressourcenstatus-Fehlernachricht auf Grundlage dessen, dass bestimmt wird, dass der zweite RAN-Knoten nichts der Meldekonfiguration unterstützen kann.

22. Zweiter RAN-Knoten nach Anspruch 21, der ferner dazu konfiguriert ist, Vorgänge durchzuführen, die einem beliebigen der Verfahren nach Anspruch 16-18 entsprechen.

## Revendications

1. Procédé, pour un premier noeud de réseau d'accès radio, RAN, dans un premier RAN, pour un équilibrage de charge de mobilité inter-système, MLB, avec un second noeud RAN dans un second RAN, le procédé comprenant :
l'envoi (1410), au second noeud RAN, d'un message de demande d'état de ressource qui comprend une configuration de compte-rendu comprenant un format de compte-rendu qui définit comment une ou plusieurs métriques respectives à mesurer doivent être rapportées au premier noeud RAN lors d'événements déclencheurs correspondants, et l'un ou les plusieurs parmi :
une ou plusieurs métriques, liées à la charge et/ou à la capacité du second noeud RAN, à mesurer par le second noeud RAN, et
un ou plusieurs événements déclencheurs pour initier un compte-rendu, au premier noeud RAN, des métriques mesurées par le second noeud RAN ; et
la réception (1420) de l'un des éléments suivants en provenance du second noeud RAN en réponse au message de demande d'état de ressource :
un message de réponse d'état de ressource indiquant une configuration réussie d'au moins une partie de la configuration de compte-rendu ; ou
un message d'échec d'état de ressource indiquant l'échec de la configuration pour l'ensemble de la configuration de compte-rendu.

2. Procédé selon la revendication 1, comprenant également la réception (1430), en provenance du second noeud RAN après la réception du message de réponse d'état de ressource, d'un ou de plusieurs messages de mise à jour d'état de ressource comprenant une ou plusieurs métriques pour lesquelles des événements déclencheurs ont été satisfaits, selon les formats de compte-rendu correspondants.

3. Procédé selon la revendication 2, dans lequel la configuration de compte-rendu comprend une pluralité de métriques et l'une ou les plusieurs des conditions suivantes s'appliquent :
chaque message de mise à jour d'état de ressource indique que l'une des métriques a satisfait à l'événement déclencheur correspondant ; et
chaque message de mise à jour d'état de ressource comprend des valeurs pour des métriques qui n'ont pas satisfait à leurs événements déclencheurs correspondants.

4. Procédé selon l'une quelconque des revendications 2 à 3, comprenant également l'envoi (1440), au second noeud RAN, d'un message d'accusé de réception d'état de ressource en réponse à l'un ou les plusieurs parmi :
le message de réponse d'état de ressource ;
le message d'échec d'état de ressource ; et
un message de mise à jour d'état de ressource.

5. Procédé selon l'une quelconque des revendications 1 à 4, dans lequel chacune de l'une ou les plusieurs métriques est liée à l'un parmi :
l'état des ressources radio ;
la capacité composite disponible ;
la capacité disponible pour une tranche de réseau ;
la capacité disponible pour une couche de réseau de transport, TNL ;
la charge TNL ;
la capacité matérielle ;
le nombre d'équipements utilisateur actifs, UE ; et
le nombre d'UE dans l'état RRC_CONNECTED.

6. Procédé selon la revendication 5, dans lequel chacune de l'une ou les plusieurs métriques est également liée à un ou plusieurs parmi :
une cellule particulière desservie par le second noeud RAN ;
une zone de couverture de faisceau particulière ou un autre type de cloison cellulaire ;
la direction de liaison montante ou descendante ;
une bande passante de fréquence particulière ;
un type de trafic particulier ;
une interface réseau particulière ;
une tranche de réseau particulière ; et
une unité matérielle particulière du second noeud RAN.

7. Procédé selon l'une quelconque des revendications 1 à 6, dans lequel chaque événement déclencheur est spécifié par rapport à sa métrique correspondante sur la base de l'un ou les plusieurs parmi :
un événement explicite à partir duquel le compte-rendu de la métrique correspondante est initié ;
un montant seuil associé à la métrique, au-dessus ou en dessous duquel le compte-rendu est initié ;
une première période seuil pendant laquelle la métrique doit être supérieure ou inférieure au montant seuil associé avant que le compte-rendu ne soit initié ;
un taux seuil de changement de la métrique, au-dessus duquel le compte-rendu est initié ; et
une seconde période seuil pendant laquelle le taux de changement de la métrique doit être supérieur au taux de changement seuil, avant que le compte-rendu ne soit initié.

8. Procédé selon l'une quelconque des revendications 1 à 7, dans lequel, pour chaque métrique, le format de compte-rendu indique que le second noeud RAN doit transmettre l'un parmi :
un compte-rendu unique lors de la survenance de l'événement déclencheur correspondant ;
un compte-rendu unique lors de l'apparition continue de l'événement déclencheur correspondant pendant au moins une période seuil ;
des comptes rendus périodiques dès la survenance de l'événement déclencheur correspondant ; et
des comptes rendus périodiques lors de l'apparition continue de l'événement déclencheur correspondant pendant au moins une période seuil.

9. Procédé selon la revendication 8, dans lequel :
une première métrique est associée à des premier et second événements déclencheurs ;
l'apparition du premier événement déclencheur déclenche un compte-rendu unique de la première métrique ; et
l'apparition du second événement déclencheur déclenche des comptes rendus périodiques de la première métrique.

10. Procédé selon l'une quelconque des revendications 8 à 9, dans lequel le format de compte-rendu comprend également des périodes de compte-rendu respectives pour tous les comptes rendus périodiques configurés.

11. Procédé selon l'une quelconque des revendications 1 à 10, dans lequel le message de réponse d'état de ressource comprend au moins l'un parmi :
une première indication de la partie de la configuration de compte-rendu que le second noeud RAN peut prendre en charge ;
une seconde indication d'une autre configuration de compte-rendu à utiliser par le second noeud RAN, comprenant au moins la partie de la configuration de compte-rendu ; et
un ou plusieurs des éléments suivants pris en charge par le second noeud RAN :
une ou plusieurs autres métriques ou mesures liées à la charge et/ou à la capacité du second noeud RAN,
un ou plusieurs autres événements déclencheurs pour initier un compte-rendu de l'une ou les plusieurs métriques et/ou l'une ou les plusieurs autres métriques, et
un ou plusieurs autres formats de compte-rendu pour l'une ou les plusieurs métriques et/ou l' une ou les plusieurs autres métriques.

12. Procédé selon l'une quelconque des revendications 1 à 11, dans lequel le message d'échec d'état de ressource comprend au moins l'un parmi :
une indication d'une cause de l'échec de la configuration ; et
un ou plusieurs des éléments suivants pris en charge par le second noeud RAN :
une ou plusieurs autres métriques ou mesures liées à la charge et/ou à la capacité du second noeud RAN,
un ou plusieurs autres événements déclencheurs pour initier un compte-rendu de l'une ou les plusieurs métriques et/ou l'une ou les plusieurs autres métriques, et
un ou plusieurs autres formats de compte-rendu pour l'une ou les plusieurs métriques et/ou l' une ou les plusieurs autres métriques.

13. Procédé selon l'une quelconque des revendications 1 à 12, dans lequel :
le message de demande d'état de ressource est envoyé dans un premier conteneur de messages à un premier noeud de réseau central, CN, couplé au premier RAN ;
le premier conteneur de messages comprend une indication explicite selon laquelle le premier conteneur de messages comprend le message de demande d'état de ressource ; et
le message de réponse d'état de ressource ou le message d'échec d'état de ressource est reçu dans un second conteneur de messages en provenance du premier noeud CN.

14. Procédé selon l'une quelconque des revendications 1 à 13, dans lequel :
le premier RAN est l'un parmi un UTRAN évolué, un E-UTRAN, et un RAN de nouvelle génération (NG-RAN) ; et
le second RAN est l'autre de l'E-UTRAN et du NG-RAN.

15. Procédé, pour un second noeud de réseau d'accès radio, RAN, dans un second RAN, pour un équilibrage de charge de mobilité inter-système, MLB, avec un premier noeud RAN dans un premier RAN, le procédé comprenant :
la réception (1510), en provenance du premier noeud RAN, d'un message de demande d'état de ressource qui comprend une configuration de compte-rendu comprenant un format de compte-rendu qui définit comment une ou plusieurs métriques respectives à mesurer doivent être rapportées au premier noeud RAN lors d'événements déclencheurs correspondants, et l'un ou les plusieurs parmi :
une ou plusieurs métriques, liées à la charge et/ou à la capacité du second noeud RAN, à mesurer par le second noeud RAN, et
un ou plusieurs événements déclencheurs pour initier un compte-rendu, au premier noeud RAN, des métriques mesurées par le second noeud RAN ;
la détermination (1520) du fait de savoir si le second noeud RAN peut prendre en charge la configuration de compte-rendu ; et
l'envoi (1530), au premier noeud RAN, de l'un parmi :
un message de réponse d'état de ressource sur la base de la détermination que le second noeud RAN peut prendre en charge au moins une partie de la configuration de compte-rendu ; ou
un message d'échec d'état de ressource sur la base de la détermination que le second noeud RAN ne peut prendre en charge aucune des configurations de compte-rendu.

16. Procédé selon la revendication 15, comprenant également :
après l'envoi du message de réponse d'état de ressource, la détermination (1540) que les événements déclencheurs ont été satisfaits pour l'une ou les plusieurs des métriques ; et
l'envoi (1550), au premier noeud RAN, d'un ou de plusieurs messages de mise à jour d'état de ressource comprenant l'une ou les plusieurs métriques pour lesquelles des événements déclencheurs ont été satisfaits, selon les formats de compte-rendu correspondants.

17. Procédé selon la revendication 16, dans lequel la configuration de compte-rendu comprend une pluralité de métriques et une ou plusieurs des conditions suivantes s'appliquent :
chaque message de mise à jour d'état de ressource indique que l'une des métriques a satisfait à l'événement déclencheur correspondant ; et
chaque message de mise à jour d'état de ressource comprend des valeurs pour des métriques qui n'ont pas satisfait à leurs événements déclencheurs correspondants.

18. Procédé selon l'une quelconque des revendications 16 à 17, comprenant également la réception (1560), en provenance du premier noeud RAN, d'un message d'accusé de réception d'état des ressources en réponse à l'un ou les plusieurs parmi :
le message de réponse d'état de ressource ;
le message d'échec d'état de ressource ; et
un message de mise à jour d'état de ressource.

19. Premier noeud de réseau d'accès radio, RAN (105, 110, 115, 300, 350, 410, 420, 1210, 1310, 1660, 1830, 2020), dans un premier RAN (100, 399, 499), configuré pour l'équilibrage de charge de mobilité inter-système, MLB, avec un second noeud RAN (105, 110, 115, 300, 350, 410, 420, 1220, 1320, 1660, 1830, 2020) dans un second RAN (100, 399, 499), le premier noeud RAN étant également configuré pour :
envoyer, au second noeud RAN, un message de demande d'état de ressource qui comprend une configuration de compte-rendu comprenant un format de compte-rendu qui définit comment une ou plusieurs métriques respectives à mesurer doivent être rapportées au premier noeud RAN lors d'événements déclencheurs correspondants, et l'un ou les plusieurs parmi :
une ou plusieurs métriques, liées à la charge et/ou à la capacité du second noeud RAN, à mesurer par le second noeud RAN, et
un ou plusieurs événements déclencheurs pour initier un compte-rendu, au premier noeud RAN, des métriques mesurées par le second noeud RAN ; et
recevoir l'un des éléments suivants en provenance du second noeud RAN en réponse au message de demande d'état de ressource :
un message de réponse d'état de ressource indiquant une configuration réussie d'au moins une partie de la configuration de compte-rendu ; ou
un message d'échec d'état de ressource indiquant un échec de configuration pour l'ensemble de la configuration de compte-rendu.

20. Premier noeud RAN selon la revendication 19, étant également configuré pour réaliser des opérations correspondantes à l'un quelconque des procédés selon l'une quelconque des revendications 2 à 14.

21. Second noeud de réseau d'accès radio, RAN (105, 110, 115, 300, 350, 410, 420, 1220, 1320, 1660, 1830, 2020), dans un second RAN (100, 399, 499), configuré pour l'équilibrage de charge de mobilité inter-système, MLB, avec un premier noeud RAN (105, 110, 115, 300, 350, 410, 420, 1210, 1310, 1660, 1830, 2020) dans un premier RAN (100, 399, 499), le second noeud RAN étant également configuré pour :
recevoir, en provenance du premier noeud RAN, un message de demande d'état de ressource qui comprend une configuration de compte-rendu comprenant un format de compte-rendu qui définit comment une ou plusieurs métriques respectives à mesurer doivent être rapportées au premier noeud RAN lors d'événements déclencheurs correspondants, et l'un ou les plusieurs parmi :
une ou plusieurs métriques, liées à la charge et/ou à la capacité du second noeud RAN, à mesurer par le second noeud RAN, et
un ou plusieurs événements déclencheurs pour initier un compte-rendu, au premier noeud RAN, des métriques mesurées par le second noeud RAN ;
déterminer le fait de savoir si le second noeud RAN peut prendre en charge la configuration de compte-rendu ; et
envoyer, au premier noeud RAN, l'un parmi :
un message de réponse d'état de ressource sur la base de la détermination que le second noeud RAN peut prendre en charge au moins une partie de la configuration de compte-rendu ; ou
un message d'échec d'état de ressource sur la base de la détermination que le second noeud RAN ne peut prendre en charge aucune des configurations de compte-rendu.

22. Second noeud RAN selon la revendication 21, étant également configuré pour réaliser des opérations correspondantes à l'un quelconque des procédés selon l'une quelconque des revendications 16 à 18.
